# EUROPEAN PATENT SPECIFICATION

(11) **EP 1 142 833 B1**
(45) Date of publication and mention of the grant of the patent: **13.01.2010**
(21) Application number: 01303157.0
(22) Date of filing: 03.04.2001
(51) Int. Cl.: C01B 37/06

(54) **Molecular sieves**
Molekularsiebe
Tamis moleculaires

(30) Priority: 06.04.2000 CN 00105772
(43) Date of publication of application: 10.10.2001
(73) Proprietor: Dalian Institute of Chemical Physics, Chinese Academy of Sciences, Dalian City, Liaoning Province 116023 (CN)
(72) Inventor: Liu, Zhongmin, Liaoning Province, 116023 (CN); Xu, Lei, Liaoning Province, 116023 (CN); Sun, Chenglin, Liaoning Province, 116023 (CN); Huang, Tao, Liaoning Province, 116023 (CN); Tian, Peng, Liaoning Province, 116023 (CN); Yang, Lixin, Liaoning Province, 116023 (CN); Tan, Juan, Liaoning Province, 116023 (CN)
(74) Representative: Craven, Ian

(56) References cited:
- EP-A- 0 103 117
- EP-A- 0 158 350
- EP-A- 0 159 624
- EP-A- 0 344 837
- EP-A- 0 417 863
- EP-A- 0 587 215
- EP-A- 0 665 186

## Description

The present invention relates to a class of metal-containing crystalline microporous silicoaluminophosphates (denoted as MeAPSO here and after) and to the method of their fast preparation, and to their use as adsorbents and catalysts. In MeAPSO, "Me" represents Zr, V, Fe, Cu, Zn, Mo, Ca, Sr, Ba or La. The fast synthesis of MeAPSO can be achieved by critically control of preparation of starting gels and of hydrothermal crystallization at programmed temperature.

Aluminophosphate is a type of molecular sieve containing AlO₂ and PO₂ tetrahedra and has electrovalently neutral framework that is different from the well-known crystalline aluminosilicate zeolite. In 1982, Wilson et al. disclosed the synthesis of aluminophosphate molecular sieves in U.S. Pat. No. 4,310,440. Subsequently, a class of silicoaluminophosphate crystalline was disclosed in U.S. Pat. No. 4,440,871 by Brent M. Lok et al in 1984, which included SAPO-5, SAPO-11, SAPO-16, SAPO-17, SAPO-20, SAPO-31, SAPO-34, SAPO-35, SAPO-37, SAPO-40, SAPO-41, SAPO-42, SAPO-44. In general, these silicoaluminophosphates can be taken as a replacement of some phosphorus by silicon in neutral framewok of aluminophosphate molecular sieves. The change of aluminophosphate to silicoaluminophosphates, even with same crystalline structure, resulted in a formation of new materials with novel chemical and physical properties.

Substitution of other elements than Si for Al, and/or P in aluminophosphate molecular sieve framework can also yield various kinds of new materials. U.S.Pat. No. 4,567,029 describes the synthesis of metal-aluminophosphate molecular sieves, which include MeAPO-5, 11, 12, 14, 16, 17, 20, 34, 35, 36, 39, 44, 47, wherein Me is Mg, Mn, Co and Zn. U.S.Pat. No. 5,126,308 discloses the preparation of ELAPO-34, wherein EL is Mg, Mn, Co, Fe, Ni, Ca and Zn. Crystalline ferroaluminophosphate (FAPOs) are disclosed in U.S.Pat. No. 4,554,143, titanium aluminophosphates (TAPOs) are disclosed in U.S.Pat. No. 4,500,651, MAPO metal aluminophosphates wherein M is As, Be, B, Cr, Ga, Ge, Li, or V are disclosed in U.S.Pat. No. 4,686,093. Binary and more metal aluminophosphates were disclosed in Canadian Pat. No. 1,241,943, which described the synthesis of FeMgAPO-5, FeMnAPO-11, TiZnAPO-31, FeMnAPO-44, FeCoMgAPO-17, FeTiCoAPO-34.

Substitution of other elements in silicoaluminophosphates molecular sieve framework can also yield various kinds of new materials. "ELAPSO" molecular sieves disclosed in patents, including GaAPSO as in U.S.Pat. No. 4,735,806, BaAPSO in U.S.Pat. No. 4,737,353, CrAPSO in U.S.Pat. No. 4,738,837, CoAPSO in U.S.Pat. No. 4,744,970, MgAPSO in U.S.Pat. No. 4,758,419, and MnAPSO in U.S.Pat. No. 4,793,833. U.S. Pat. No. 5,675,050 disclosed the preparation of MeAPO-FAU and MeAPSO-FAU wherein Me is Co, Zn, Cu, Ni, Mg and Mn.

It is well known that the synthesis of molecular sieve is a special art that strongly related to the preparation procedures and to the starting materials used for the preparation. In aforementioned patents, certain elements were incorporated into framework of the aluminophosphate and silicoaluminophosphate molecular sieves, which yields various kinds new materials of ELAPOs and ELAPSOs. However, these incorporations of other elements into aluminophosphate and silicoaluminophosphate were only effective for some special case (or to some given crystalline structure) and not valid for all AlPO₄ and SAPO types. A lot of MeAPSO materials have not been reported. For example, Zr in most AlPO₄s and SAPOs, most other elements in SAPO-56, etc.

In synthesis of molecular sieves, the control of crystallization speed is also a special art depending on the detail procedures of the preparation of starting gel, on the source of starting raw material and on the crystallization conditions. In the aforementioned patents, the crystallization speed was claimed in a wide range, in some cases for many days to achieve a successful synthesis. Fast crystallization of molecular sieve is with practical value. T. Inui reported (J Chem Soc Chem Commun 1990, 205; Appl Catal 1990, 58: 2:155-163) a method on fast synthesis of Ni-SAPO-34 by critically control the gel preparation procedure and by temperature programmed control of crystallization temperature.

EP-A-0893159; Catalysis Today 49 (1999), 267-276; J. Chem. Soc. Faraday Trans. 1997, 93(23), 4201-4206; and Applied Catalysis A: General 166 (1998) 351-361 disclose microporous metal-containing silicoaluminophosphate molecular sieves.

The object of the present invention is to provide a class of microporous metal-silicoaluminophosphate molecular sieves having some new properties used for adsorption and catalysis.

The another object of the present invention is to provide a fast synthesis method for preparing the molecular sieves.

Viewed from a first aspect the present invention provides a class of microporous metal-containing silicoaluminophosphate molecular sieves whose as-synthesized chemical composition on an anhydrous basis is:

mR- (M_{q}SiₓAl_{y}P_{z})O₂

wherein:
*"R"* represents the templating agent presented in the intracrystalline pore system;
"*m*" is the molar amount of *"R"* per mole of (M_{q}SiₓAl_{y}P_{z})O₂ and has a value from 0.01 to 8.00;
"M" represents at least one metal element selected from the group consisting of Zr, V, Fe, Cu, Zn, Mo, Ca, Sr, Ba and La;
"*q*"*,* "*x*"*,* "*y*" and "*z*" represent the molar fractions of metal, silicon, aluminum and phosphorus respectively whose variations are q=0∼0.98, x=0∼0.98, y=0.01∼0.60, z=0.01∼0.60 and q+x+y+z=1,
wherein the metal-containing silicoaluminophosphate molecular sieves are selected from the group consisting of MeAPSO-17, MeAPSO-18, MeAPSO-34, MeAPSO-35, MeAPSO-44, MeAPSO-56 and wherein the metal atoms at least in part exist in the framework of the molecular sieve in the form of MeO2 tetrahedra.

The aforesaid metal-silicoaluminophosphates are quickly synthesized by aging of the mixture gel under microwave radiation or a temperature sufficiently high and by hydrothermal crystallization at programmed temperature from a mixture containing reactivated sources of silica, alumina and phosphate, one or several kinds organic templating agent(s) and one or several kinds soluble metal acetate(s), nitrate(s) or sulphate(s) etc.

The reaction mixture is placed in a stainless steel autoclave lined with polytetrafluoroethylene, sealed and heated, preferably under the autogeneous pressure in the system or the pressure of nitrogen, air or other inert gases filled in, is in the range of 0.1∼1MPa at programmed temperature of 50∼250□, and kept for 0.5∼12 hours, and preferably between 1-3 hours, until crystals of the metal-silicoaluminophosphates product are obtained. The product is recovered by any convenient method such as centrifugation or filtration.

The synthesis method of metal-silicoaluminophosphate molecular sieves according to the present invention may be characterized by the synthesis process comprising steps of:
(1) The sources of silicon, alumnium, phosphorus, metal compound, templating agent and water are mixed in a suitable proportion and stirred to obtain the primary gel mixture.
(2) Aging of the primary gel mixture under microwave radiation for no less than 0.1 minutes, preferably 2∼10 minutes or under a temperature sufficiently high for no less than 1 hour, preferably 2∼12 hours.
(3) The gel mixture is transferred into a stainless-steel autoclave lined with polytetrafluoroethylene, sealed and heated at temperature programmed 50∼250°, and kept for no less than 0.1 hours, preferably 0.5-12 hours.
(4) The solid crystalline products are separated from the mother liquor, washed with de-ionized water to neutral and dried at 80∼130°C in air, then a primary powder of synthesized MeAPSO molecular sieves are obtained.
(5) The microporous metal silicoaluminophosphate molecular sieves are prepared by calcining a primary powder at 300∼700°C in air for no less than 3 hours.

In the above process, the source of silicon is one or several kinds of silica sol, sodium silicate sol, activated silica oxide or orthosilicate ester; the source of aluminum is one or several kinds of aluminum salt, aluminate, activated aluminum oxide, alkoxy aluminium, diaspore or pseudoboehmite; the source of phosphorus is one or several kinds of orthophosphoric acid, phosphate, organic phosphide or phosphoric oxide; the source of metal is one or several kinds of oxides, oxychloride, metal salts of inorganic or organic acids of titanium, vanadium, chromium, manganese, iron, cobalt, nickel, copper, zinc, zirconium, molybdenum, magnesium, calcium, strontium, barium, and lanthanum or other metals; and the source of templating agent is one or several kinds of cyclohexylamine, triethylamine, diethylamine, n-propylamine, isopropylamine, n-dipropylamine, diisopropylamine, tripropylamine, n-butylamine, isobutylamine, hexamethyenlaminelidyne, hexanediamine, N, N-diisopropyl ethylamine, N, N-diisopropyl propylamine, N', N', N, N-tetramethyl-(1,6-)hexanediamine, ethanolamine, diethanolamine, triethanolamine, tetramethylammonium hydroxide, tetraethylammonium hydroxide, tetrapropylammonium hydroxide, tetrabutylammonium hydroxide, or the corresponding alcohol.

In the preparation process said above, the formula ratio of the ingredients (the molecular ratio of oxides) is:
MeOₙ/Al₂O₃ =0.01∼1.0;
SiO₂/Al₂O₃ = 0∼10;
P₂O₅/Al₂O₃ = 0.01∼15;
H₂O/Al₂O₃ = 10∼100;
R/Al₂O₃ = 0.1∼10 ("*R*" is one or a mixture of templating agent).

Additionally, the crystallization pressure, which can be the autogenous pressure in the system or the pressure of nitrogen, air or other inert gases filled in, is in the range of 0.1∼1 Mpa.

With the present process, different molecular sieves MeAPSO can be prepared by changing the formula ratio of the ingredients or by choosing different templating agents.

The preparing process is described in detail as follows:

### (1) Synthesis of the MeAPSO-17 molecular sieve

The templating agent is one or several kinds of cyclohexylamine, triethylamine, diethylamine, n-propylamine, isopropylamine, n-dipropylamine, diisopropylamine, tripropylamine, n-butylamine, isobutylamine, ethanolamine, diethanolamine, triethylamine, tetramethylammonium hydroxide, tetraethylammonium hydroxide, tetrapropylammonium hydroxide, tetrabutylammonium hydroxide, or the corresponding alcohol. The prefered templating agent is one or several kinds of cyclohexylamine, triethylamine, or diethylamine.

The formula ratio (the molecular ratio of oxides) is
MeOₙ/Al₂O₃ = 0.01∼1.0;
SiO₂/Al₂O₃ = 0∼10;
P₂O₅/Al₂O₃ = 0.01∼15;
H₂O/Al₂O₃ = 10∼100;

R/Al₂O₃ = 0.1∼10 ("*R*" is one or a mixture of templating agents), MeAPSO-17 molecular sieves of the present invention can be synthesized according to the aforesaid description.

The anhydrous chemical composition of the synthesized MeAPSO-17 molecular sieves can be expressed as mR·(M_{q}SiₓAl_{y}P_{z})O₂, wherein "*R*" represents the templating agent presented in the intracrystalline pore system; *"m"* is the molar amount of *"R"* per mole of (M_{q}SiₓAl_{y}P_{z})O₂ and has a value from 0.01to 8.00; "M" represents at least one metal element as hereinbefore defined; "*q*", "*x*", "*y*" and *"z"* represent the molar fractions of metal, silicon, aluminum and phosphorus respectively, whose variations are q=0∼0.98, x=0∼0.4, y=0.01∼0.60, z=0.0∼0.60 and q+*x*+*y*+*z*=1.

### (2) Synthesis of the MeAPSO-18 molecular sieve

The templating agent is one or several kinds of N, N-diisopropyl ethylamine, N, N-diisopropyl propylamine, or tetraethylammonium hydroxide.

The formula ratio (the molecular ratio of oxides) is
MeOₙ/Al₂O₃ = 0.01~1.0;
SiO₂/Al₂O₃ = 0∼10;
P₂O₅/Al₂O₃ = 0.01∼10;
H₂O/Al₂O₃ = 10∼100;
R/Al₂O₃ = 0.1~10 ("*R*" is one or a mixture of templating agents).

MeAPSO-18 molecular sieves of the present invention are then synthesized according to the aforesaid description.

The anhydrous chemical composition of the synthesized MeAPSO-18 molecular sieves can be expressed as mR·(M_{q}SiₓAl_{y}P_{z})O₂, wherein "*R*" represents the templating agent presented in the intracrystalline pore system; "*m*" is the molar amount of *"R"* per mole of (M_{q}SiₓAl_{y}P_{z})O₂ and has a value from 0.01 to 8.00; "M" represents at least one metal element as hereinbefore defined; "*q*", "*x*", "*y*" and "*z*" represent the molar fractions of metal, silicon, aluminum and phosphorus respectively, whose variations are q=0~0.98, x=0∼0.98, y=0.01∼0.60, z=0.01∼0.60 and q+*x*+*y*+*z*=1.

The prefered metal is at least one of zirconium, titanium, cobalt, manganese, magnesium, iron, nickel, and zinc.

### (3) Synthesis of the MeAPSO-34 molecular sieve

The templating agent is one or several kinds of triethylamine, diethylamine, n-propylamine, isopropylamine, n-dipropylamine, diisopropylamine, tripropylamine, n-butylamine, isobutylamine, ethanolamine, diethanolamine, triethanolamine, tetramethylammonium hydroxide, tetraethylammonium hydroxide, tetrapropylammonium hydroxide, tetrabutylammonium hydroxide, or the corresponding alcohol. The prefered templating agent is a cheap one or several kinds of triethylamine, diethylamine, n-propylamine, isopropylamine, and tripropylamine.

The formula ratio (the molecular ratio of oxides) is
MeOₓ/Al₂O₃ = 0.01∼1.0;
SiO₂/Al₂O₃ = 0∼10;
P₂O₅/Al₂O₃ = 0.01∼15;
H₂O/Al₂O₃ = 10∼100;
R/Al₂O₃ =0.1∼10 ("*R*" is one or a mixture of templating agents).

MeAPSO-34 molecular sieves of the present invention are then synthesized according to the aforesaid description.

The anhydrous chemical composition of the synthesized MeAPSO-34 molecular sieves can be expressed as mR· (M_{q}SiₓAl_{y}P_{z})O₂, wherein "*R*" represents the templating agent presented in the intracrystalline pore system; *"m"* is the molar amount of *"R"* per mole of (M_{q}SiₓAl_{y}P_{z})O₂ and has a value from 0.01to 8.00; "M" represents at least one metal element as hereinbefore defined; "*q*", "*x*", "*y*" and "*z*" represent the molar fractions of metal, silicon, aluminum and phosphorus respectively, whose variations are q=0∼0.98, x=0∼0.98, y=0.01∼0.60, z=0.01∼0.60 and q+*x+y+z*=1.

### (4) Synthesis of the MeAPSO-35 molecular sieve

The templating agent is one or several kinds of hexamethyleneimine, hexanediamine, triethylamine, diethylamine, n-dipropylamine, diisopropylamine, tripropylamine, n-butylamine, isobutylamine, ethanolamine, diethanolamine, triethylamine, tetramethylammonium hydroxide, tetraethylammonium hydroxide, tetrapropylammonium hydroxide, tetrabutylammonium hydroxide, or the corresponding alcohol. The prefered templating agent is hexamethyleneimine.

The formula ratio (the molecular ratio of oxides) is
MeOₙ/Al₂O₃ = 0.01∼1.0;
SiO₂/Al₂O₃ = 0.3∼0.6;
P₂O₅/Al₂O₃ = 0.01∼10;
H₂O/Al₂O₃ = 10∼100;
R/Al₂O₃ = 1.0∼2.0 (*"R"* is one or a mixture of templating agent),

MeAPSO-35 molecular sieves of the present invention are then synthesized according to the aforesaid description.

The anhydrous chemical composition of the synthesized MeAPSO-35 molecular sieves can be expressed as mR· (M_{q}SiₓAl_{y}P_{z})O₂, wherein *"R*" represents the templating agent presented in the intracrystalline pore system; "*m*" is the molar amount of "*R*" per mole of (M_{q}SiₓAl_{y}P_{z})O₂ and has a value from 0.01to 2.0; "M" represents at least one metal element as hereinbefore defined; "*q*", "*x*", "*y*" and *"z"* represent the molar fractions of metal, silicon, aluminum and phosphorus respectively, whose variations are q=0∼0.98, x=0.3∼0.98, y=0.01∼0.60, z=0.01∼0.60 and q+*x*+*y*+*z*=1.

### (6) Synthesis of the MeAPSO-44 molecular sieve

The templating agent is one or several kinds of cyclohexylamine, triethylamine, diethylamine, n-propylamine, isopropylamine, n-dipropylamine, diisopropylamine, tripropylamine, n-butylamine, isobutylamine, ethanolamine, diethanolamine, triethylamine, tetramethylammonium hydroxide, tetraethylammonium hydroxide, tetrapropylammonium hydroxide, tetrabutylammonium hydroxide, or the corresponding alcohol. The prefered templating agent is one or several kinds of cyclohexylamine, triethylamine, and diethylamine.

The formula ratio (the molecular ratio of oxides) is
MeOₙ/Al₂O₃ = 0.01∼1.0;
SiO₂/Al₂O₃ = 0.2∼10;
P₂O₅/Al₂O₃ = 0.01∼15;
H₂O/Al₂O₃ = 10∼100;
R/Al₂O₃ = 1∼10 (R is one or a mixture of templating agents).

The MeAPSO-44 molecular sieves of the present invention are then synthesized according to the aforesaid description.

The anhydrous chemical composition of as-synthesized MeAPSO-44 molecular sieves can be expressed as mR· (M_{q}SiₓAl_{y}P_{z})O₂, wherein "R" represents the templating agent presented in the intracrystalline pore system; "m" is the molar amount of "R" per mole of (M_{q}SiₓAl_{y}P_{z})O₂ and has a value from 0.01 to 8.00; "M" represents at least one metal element as hereinbefore defined; "*q*", "*x*", "*y*" and "*z*" represent the molar fractions of metal, silicon, aluminum and phosphorus respectively, whose variations are q=0∼0.98, x=0.2∼0.98, y=0.01∼0.60, z=0.01∼0.60 and q+x+y+z=1.

### (7) Synthesis of the MeAPSO-56 molecular sieve

The templating agent is one or several kinds of N', N', N, N-tetramethyl- (1,6)-hexanediamine, tripropylamine, or n-propylamine.

The formula ratio (the molecular ratio of oxides) is
MeOₙ/Al₂O₃ = 0.01∼0.7;
SiO₂/Al₂O₃ = 0.1∼10;
P₂O₅/Al₂O₃ = 0.01∼15;
H₂O/Al₂O₃ = 10∼100;
R/Al₂O₃ = 0.7∼6 (R is one or a mixture of templating agents).

Thus, MeAPSO-56 molecular sieves of the present invention are then synthesized according to the aforesaid description.

The anhydrous chemical composition of the as-synthesized MeAPSO-56 molecular sieves can be expressed as mR· (M_{q}SiₓAl_{y}P_{z})O₂, wherein "*R*" represents the templating agent presented in the intracrystalline pore system; *"m"* is the molar amount of "*R*" per mole of (M_{q}SiₓAl_{y}P_{z})O₂ and has a value from 0.01to 6.00; "M" represents at least one metal element; "*q*", "*x*", "*y*" and "*z*" represent the molar fractions of metal, silicon, aluminum and phosphorus respectively, whose variations are q=0∼0.98, x=0.01∼0.98, y=0.01∼0.60, z=0.01∼0.60 and q+x+y+z=1.

Preferably, the metal is one or more selected from the group consisting of vanadium, copper, molybdenum, zirconium, iron and zinc.

The present invention is illustrated by the following examples:

### Example 1

### (Preparation of TAPSO-17)

A reaction mixture was prepared by combining 6.88g of pseudo-boehmite(74.2wt% Al₂O₃) and 11.53g of orthophosphoric acid (85wt% H₃PO₄) plus 14ml of water in a beaker, and stirring until homogeneous. To this mixture was first added 1.2g of silica sol(25%SiO₂) and stirred for 10 minutes. After that 1.7ml tetrabutylorthotitanate, 17 ml de-ionized water and 7.5ml cyclohexylamine were added to the mixture under stirring and the mixture was stirred for 15 minutes until homogeneous. The composition of the final reaction mixture in molar oxide ratio was: 1.5C₆H₁₁NH₂:0.1SiO₂:Al₂O₃:P₂O₅:0.05TiO₂:39H₂O.

The gel mixture is radiated in microwave oven for 2 minutes, then the mixture was sealed in a autoclave lined with polytetrafluoroethylene and crystallized for 2 hours under temperature programmed 50∼200°C. The autoclave was then taken out and cooled in the cold water to room temperature. The solid product was separated from the mother liquor and washed with de-ionized water until neutral. Then it was dried at 100°C. XRD pattern of the product was characterized by following data (Table 1), which can be identified that the product was TAPSO-17 molecular sieve. Its water adsorption capacity was determined to be 26.8wt% at 25°C.

The chemical composition was: 2.8wt.%C, 0.5wt.%N, 3.5wt.%SiO₂, 41.2wt.%Al₂O₃, 47.3wt.%P₂O₅ 2.6wt%TiO₂, 2.1wt.%H₂O.

**Table 1**

| No. | 2θ | d(Å) | 100× I/I₀ |
|---|---|---|---|
| 1 | 7.560 | 11.6798 | 100 |
| 2 | 9.579 | 9.1955 | 35 |
| 3 | 13.180 | 6.6919 | 83 |
| 4 | 15.260 | 5.7739 | 40 |
| 5 | 16.420 | 5.3907 | 27 |
| 6 | 19.450 | 4.5548 | 43 |
| 7 | 20.340 | 4.3468 | 98 |
| 8 | 21.190 | 4.1714 | 51 |
| 9 | 23.110 | 3.8288 | 39 |
| 10 | 23.660 | 3.7321 | 35 |
| 11 | 25.200 | 3.5253 | 33 |
| 12 | 26.790 | 3.3087 | 40 |
| 13 | 27.250 | 3.2535 | 18 |
| 14 | 28.590 | 3.1107 | 19 |
| 15 | 31.040 | 2.8706 | 35 |
| 16 | 31.630 | 2.8081 | 52 |
| 17 | 33.350 | 2.6660 | 22 |

### Comparison Example 1

By using essentially the same composition and procedure as in Example 1, while changing only the 1.2g silica sol in Example 1 to 1.8g silica sol, then the product so obtained was a mixture crystal of the TAPSO-17 and the TAPSO-44 molecular sieves.

### Comparison Example 2

By using essentially the same composition and procedure in Example 1, while changing only the 1.2g silica sol in Example 1 to 3.6g silica sol, then the product so obtained was the TAPSO-44 molecular sieve.

### Example 2

### (Preparation of VAPSO-17)

A reaction mixture was prepared by combining 6.88g of pseudo-boehmite(74.2wt% Al₂O₃) and 11.53g of orthophosphoric acid (85wt% H₃PO₄) plus 14ml water in a beaker, and stirring until homogeneous. To this mixture was first added 1.2g of silica sol and stirred for 10 minutes. After that 0.59g NH₄VO₃, 17 ml de-ionized water and 7.5ml cyclohexylamine were added to the mixture under stirring, and the mixture was stirred for 15 minutes until homogeneous. The composition of the final reaction mixture in molar oxide ratio was: 1.5C₆H₁₁NH₂: 0.1SiO₂: Al₂O₃: P₂O₅: 0.05V₂O₅: 39H₂O.

The gel mixture is radiated in microwave oven for 2 minutes, then the mixture was sealed in a autoclave lined with polytetrafluoroethylene at 0.4Mpa after pressurized with nitrogen, and crystallized for 2 hours under temperature programmed 50∼200°C. The autoclave was then taken out and cooled in cold water to the room temperature. The solid product was separated from the mother liquor and washed with de-ionized water until neutral. It was dried at 100°C. XRD pattern of the product was characterized by following data (Table 2), which can be identified that the product was VAPSO-17 molecular sieve. Its water adsorption capacity was determined to be 24.5wt% at 25°C.

**Table 2**

| No. | 2θ | d(Å) | 100× I/I₀ |
|---|---|---|---|
| 1 | 7.570 | 11.6582 | 100 |
| 2 | 9.610 | 9.1964 | 31 |
| 3 | 13.220 | 6.6967 | 87 |
| 4 | 15.300 | 5.7926 | 44 |
| 5 | 16.420 | 5.3976 | 29 |
| 6 | 17.810 | 4.9806 | 13 |
| 7 | 19.440 | 4.5778 | 38 |
| 8 | 20.320 | 4.3725 | 90 |
| 9 | 21.210 | 4.1915 | 47 |
| 10 | 23.120 | 3.8622 | 38 |
| 11 | 23.630 | 3.7789 | 35 |
| 12 | 25.200 | 3.5411 | 30 |
| 13 | 26.760 | 3.3363 | 39 |
| 14 | 27.250 | 3.2788 | 17 |
| 15 | 28.560 | 3.1318 | 18 |
| 16 | 31.030 | 2.8988 | 29 |
| 17 | 31.620 | 2.8355 | 48 |
| 18 | 33.350 | 2.6937 | 18 |

### Example 3

### (Preparation of CrAPSO-17)

By using essentially the same composition and procedure as in Example 2, while changing only the 0.59g NH₄VO₃ in Example 2 to 2.00g Cr(NO₃)₃ • 9H₂O, the so obtained product was determined by XRD to be the CrAPSO-17 molecular sieve. Its water adsorption capacity was measured to be 25.8 wt % at 25°C.

### Example 4

### (Preparation of ZrAPSO-17)

A reaction mixture was prepared by combining 6.88g of pseudo-boehmite(74.2wt% Al₂O₃) and 11.53g of orthophosphoric acid (85wt% H₃PO₄) plus 14ml of water in a beaker, and stirring until homogeneous. To this mixture was first added 1.2g of silica sol(25%SiO₂) and stirred for 10 minutes. After that 1.06g Zr(NO₃) • 5H₂O, 17ml de-ionized water and 7.5ml cyclohexylamine were added to the mixture under stirring and the mixture was stirred for 15 minutes until homogeneous. The composition of the final reaction mixture in molar oxide ratio was: 1.5C₆H₁₁NH₂: 0.1SiO₂: Al₂O₃: P₂O₅: 0.05ZrO₂: 39H₂O.

The gel mixture is radiated in microwave oven for 2 minutes, then the mixture was sealed in a autoclave lined with polytetrafluoroethylene and crystallized for 2 hours under temperature programmed 50∼200°C. The autoclave was then taken out and cooled in the cold water to the room temperature. The solid was separated from the mother liquor and washed with de-ionized water to neutral. It was then dried at 100°C. XRD pattern of the product was characterized by following data(Table 3), which can be identified that the product was ZrAPSO-17 molecular sieve. Its water adsorption capacity was determined to be 24.1 wt % at 25°C.

**Table 3**

| No. | 2θ | d(Å) | 100× I/I₀ |
|---|---|---|---|
| 1 | 7.750 | 11.5992 | 100 |
| 2 | 9.639 | 9.1053 | 35 |
| 3 | 13.250 | 6.6017 | 83 |
| 4 | 15.380 | 5.6536 | 41 |
| 5 | 16.520 | 5.3203 | 25 |
| 6 | 19.480 | 3.4645 | 45 |
| 7 | 20.420 | 4.2566 | 98 |
| 8 | 21.250 | 4.0818 | 48 |
| 10 | 23.150 | 3.7287 | 37 |
| 11 | 23.700 | 3.6320 | 42 |
| 12 | 25.260 | 3.4152 | 35 |
| 13 | 26.860 | 3.2137 | 45 |
| 14 | 27.320 | 3.1625 | 18 |
| 15 | 28.630 | 3.0204 | 19 |
| 16 | 31.130 | 2.6803 | 36 |
| 17 | 31.680 | 2.6251 | 53 |
| 18 | 33.440 | 2.5740 | 24 |

### Example 5

### (Preparation of MgAPSO-17)

By using essentially the same composition and procedure as in Example 4, while changing only the 1.07g Zr(NO₃)₄ • 5H₂O and the 7.5ml cyclohexylamine in Example 4 to 1.08g Mg(CH₃COO)₂ • 4H₂O and 8.1ml triethylamine respectively, the product so obtained was determined to be MgAPSO-17 molecular sieve by XRD. Its water adsorption capacity was measured to be 23.1 wt% at 25°C.

### Example 6

### (Preparation of CaAPSO-17)

By using essentially the same composition and procedure as in Example 4, while changing only the 1.07g Zr(NO₃)₄ • 5H₂O and the 7.5ml cyclohexylamine in Example 4 to 1.19g Ca(NO₃)₂ • 5H₂O and 6.9ml diethylamine respectively, the product so obtained was determined to be the CaAPSO-17 molecular sieve by XRD. Its water adsorption capacity was measured to be 20.5 wt% at 25°C.

### Example 7

### (Preparation of SrAPSO-17)

By using essentially the same composition and procedure as in Example 4, while changing only the 1.07g Zr(NO₃)₄ • 5H₂O and the 7.5ml cyclohexylamine in Example 4 to 1.06g Sr(NO₃)₂ and 6.1ml isopropylamine respectively, and the product so obtained was determined to be the SrAPSO-17 molecular sieve by XRD. Its water adsorption capacity was measured to be 25.1 wt % at 25°C.

### Example 8

### (Preparation of BaAPSO-17)

By using essentially the same composition and procedure as in Example 4, while changing only the 1.07g Zr(NO₃)₄ • 5H₂O and the 7.5ml cyclohexylamine in Example 4 to 1.31g Ba(NO₃)₃ and 8.7ml triethylamine respectively, the product so obtained was determined to be the BaAPSO-17 molecular sieve by XRD. Its water adsorption capacity was measured to be 24.3%wt at 25°C.

### Example 9

### (Preparation of FAPSO-17)

By using essentially the same composition and procedure as in Example 4 , while changing only the 1.07g Zr(NO₃)₄ • 5H₂O and the 7.5ml cyclohexylamine in Example 4 to 1.02g Fe(NO₃)₂ • 9H₂O and 8.2ml dipropylamine respectively, the product so obtained was determined to be the FAPSO-17 molecular sieve by XRD. Its water adsorption capacity was measured to be 25.8wt% at 25°C.

### Example 10

### (Preparation of CoAPSO-17)

By using essentially the same composition and procedure as in Example 4, while changing only the 1.07g Zr(NO₃)₄ • 5H₂O in Example 4 to 1.25g Co(CH₃COO)₄ • 4H₂O, the product so obtained was determined by XRD to be the CoAPSO-17 molecular sieve. Its water adsorption capacity was measured to be 24.5wt% at 25°C.

### Example 11

### (Preparation of NiAPSO-17)

By using essentially the same composition and procedure as in Example 4, while changing only the 1.07g Zr(NO₃)₄ • 5H₂O in Example 4 to 1.48g Ni(NO₃)₂ • 6H₂O, and at same time using 4.2ml cyclohexylamine and 2.6ml diethylamine as the template, the product so obtained was determined by XRD to be the NiAPSO-17 molecular sieve. Its water adsorption capacity was 26.8wt% at 25 °C.

### Example 12

### (Preparation of CuAPSO-17)

By using essentially the same composition and procedure as in Example 4, while changing only the 1.07g Zr(NO₃)₄ • 5H₂O in Example 4 to 1.21g Cu(NO₃)₂ • 3H₂O, and at the same time using the 3.7ml of triethylamine and 3.4ml of diethylamine as the template, the product so obtained was determined by XRD to be the CuAPSO-17 molecular sieve. Its water adsorption capacity was measured to be 22.5wt% at 25°C.

### Example 13

### (Preparation of ZnAPSO-17)

By using essentially the same composition and procedure as in Example 4, while changing only the 1.07g Zr(NO₃)₄ • 5H₂O in Example 4 to 1.11g Zn(CH₃COO)₂ • 2H₂O, and at same time using 3.1ml of triethylamine and 3.5ml of propylamine as the template, the product so obtained was determined by XRD to be ZnAPSO-17 molecular sieve. Its water adsorption capacity was measured to be 25.3wt% at 25°C.

### Example 14

### (Preparation of MnAPSO-17)

By using essentially the same composition and procedure as in Example 4, while changing only the 1.07g Zr(NO₃)₄ • 5H₂O in Example 4 to 1.25g Mn(CH₃COO)₂ • 4H₂O, and then sealing after pressurizing it with nitrogen to 0.1Mpa. The product so obtained by XRD was determined to be the MnAPSO-17 molecular sieve. Its water adsorption capacity was measured to be 23.1wt% at 25 °C.

### Example 15

### (Preparation of MoAPSO-17)

By using essentially the same composition and procedure as in Example 4, while changing the 1.07g Zr(NO₃)₄ • 5H₂O in Example 4 to 0.89g (NH₄)₆Mo₇O₂₄ • 4H₂O and then sealing after pressurizing it with air to 0.1 Mpa. The product so obtained was determined by XRD to be the MoAPSO-17 molecular sieve. Its water adsorption capacity was measured to be 21.1wt% at 25°C

### Example 16

### (Preparation of LaAPSO-17)

By using essentially the same composition and procedure as in Example 4, while changing only the 1.07g Zr(NO₃)₄ • 5H₂O in Example 4 to 1.85g La(NO₃)₃ • nH₂O, and sealing the autoclave after pressurizing it with air to 0.4Mpa. The product so obtained was determined by XRD to be the LaAPSO-17 molecular sieve. Its water adsorption capacity was measured to be 25.6wt% at 25°C.

### Example 17

### (Preparation of TAPO-17)

A reaction mixture was prepared by combining 6.88g of pseudo-boehmite(74.2wt% Al₂O₃) and 11.53g of orthophosphoric acid (85wt% H₃PO₄) plus 14ml water in a beaker, and stirring until homogeneous. Then 1.7ml of Ti(OC₄H₉)₄ was added to the mixture and stirred for 10 minutes. After that 17ml de-ionized water and 7.5ml cyclohexylamine were added under stirring and the mixture was further stirred for 15 minutes until homogeneous. The composition of the final reaction mixture in molar oxide ratio was: 1.5C₆H₁₁NH₂: Al₂O₃: P₂O₅: 0.05TiO₂: 39H₂O.

The mixture was sealed in a autoclave lined with polytetrafluoroethylene, heated at a temperature sufficiently high for 12 hours and crystallized for 2 hours under temperature programmed 50∼200°C. The autoclave was taken out and cooled in cold water to room temperature. The solid product was separated from the mother liquor and washed with de-ionized water to neutral. It was then dried at 100°C. XRD determination confirmed that the product was the TAPO-17 molecular sieve. Its water adsorption capacity was measured to be 24.0wt% at 25 °C.

The chemical composition was: 2.6wt.%C, 0.5wt.%N, 42.9wt.%Al₂O₃, 48.0wt.%P₂O_{5.} 3.1 wt%TiO₂, 2.9wt.%H₂O.

### Example 18

### (Preparation of ZrAPO-17)

A reaction mixture was prepared by combining 7.06g of pseudo-boehmite(72.2wt% Al₂O₃) and 11.53g orthophosphoric acid (85wt% H₃PO₄) plus 14ml water in a beaker, and stirring until homogeneous. After that, 2.15g Zr(NO₃)₄ • 5H₂O plus 17 ml de-ionized water and 7.5ml of cyclohexylamine were added to the mixture, further stirred for 15 minutes until homogeneous. The composition of the final reaction mixture in molar oxide ration was: 1.5C₆H₁₁NH₂: Al₂O₃: P₂O₅: 0.1ZrO₂: 39H₂O.

The gel mixture is radiated in microwave oven for 2 minutes, then the mixture was sealed in a autoclave lined with polytetrafluoroethylene and crystallized for 2 hours under temperature programmed 50∼200°C. The autoclave was then taken out and cooled in cold water to room temperature. The solid product was separated from the mother liquor and washed with de-ionized water to neutral. Then it was dried at 100°C. XRD determination verified that the product was the ZrAPO-17 molecular sieve. Its water adsorption capacity was measured to be 23.50wt% at 25°C.

### Example 19

### (Preparation of CoAPO-17)

By using essentially the same composition and procedure as in Example 18, while changing only the 1.07g Zr(NO₃)₄ • 5H₂O plus 17ml de-ionized water in Example 18 to 2.50g Co(CH₃COO)₄ • 4H₂O plus 17ml de-ionized water, a final product was obtained. The product was determined by XRD to be CoAPO-17 molecular sieve. Its water adsorption capacity was measured to be 23.1wt% at 25°C.

### Example20

### (Preparation of MnAPO-17)

By using essentially the same composition and procedure as in Example 18, while changing only the 1.07g Zr(NO₃)₄ • 5H₂O plus 17ml de-ionized water in Example 18 to 2.50g Mn(CH₃COO)₄ • 4H₂O plus 17ml de-ionized water, a final product was obtained. The product was determined by XRD to be MnAPO-17 molecular sieve. Its water adsorption capacity was measured to be 22.4wt% at 25°C.

### Example 21

### (Preparation of ZrAPSO-18)

7.06g activated alumina (72.2wt% Al₂O₃) was dissolved in 39.64ml de-ionized water, and then 10.95g orthophosphoric acid (85wt% H₃PO₄), 2.35g silica sol(SiO₂ 25.5wt%) and 2.35g Zr(NO₃)₄ • 5H₂O were added to the prepared alumina sol, stirring for no less than 30 minutes. Finally 10.34g N, N-diisopropylamine was added to the mixture with continuous stirring until attaining a homogeneous phase.

The gel mixture is radiated in microwave oven for 2 minutes, then the mixture was sealed in a autoclave lined with polytetrafluoroethylene and crystallized under autogeneous pressure for 3 hours under programmed temperature 50∼170°C. The solid product was washed with de-ionized water to neutral. It was then dried at 100°C in the air. The product was determined by XRD(Table 4) to be the ZrAPSO-18 8 molecular sieve.

**Table 4**

| No. | 2θ | d(Å) | 100× I/I₀ |
|---|---|---|---|
| 1 | 9.450 | 9.3513 | 100 |
| 2 | 10.540 | 8.3865 | 17 |
| 3 | 12.870 | 6.6730 | 10 |
| 4 | 14.740 | 6.0050 | 14 |
| 5 | 15.920 | 5.5624 | 32 |
| 6 | 16.910 | 5.2389 | 68 |
| 7 | 19.530 | 4.5416 | 22 |
| 8 | 20.020 | 4.4315 | 27 |
| 9 | 20.510 | 4.3268 | 36 |
| 10 | 21.280 | 4.1719 | 27 |
| 11 | 23.830 | 3.7309 | 28 |
| 12 | 26.250 | 3.3922 | 27 |
| 13 | 27.800 | 3.2065 | 22 |
| 14 | 30.300 | 2.9474 | 17 |
| 15 | 30.980 | 2.8842 | 26 |
| 16 | 32.150 | 2.7819 | 20 |

### Example 22

### (Preparation of CoAPSO-18)

By using essentially the same composition and procedure as in Example 21, while changing only the 7.06g activated alumina(72.2wt% Al₂O₃) and 2.15g Zr(NO₃)₄ • 5H₂O in Example 21 to 6.00g psudo-boemite(85.0wt% Al₂O₃)and 1.46g Co(NO₃)₃ • 6 H₂O, respectively, a final product was obtained. The product was determined by XRD(Table 5) to be the CoAPSO-18 molecular sieve.

**Table 5**

| No. | 2θ | d(Å) | 100× I/I₀ |
|---|---|---|---|
| 1 | 9.460 | 9.3414 | 100 |
| 2 | 10.500 | 8.4184 | 12 |
| 3 | 12.800 | 6.9104 | 10 |
| 4 | 13.950 | 6.3432 | 9 |
| 5 | 14.750 | 6.0009 | 8 |
| 6 | 15.920 | 5.5624 | 37 |
| 7 | 16.920 | 5.2359 | 50 |
| 8 | 19.570 | 4.5324 | 17 |
| 9 | 20.490 | 4.3309 | 37 |
| 10 | 21.210 | 4.1855 | 24 |
| 11 | 23.890 | 3.7217 | 19 |
| 12 | 25.730 | 3.4596 | 14 |
| 13 | 26.210 | 3.3973 | 21 |
| 14 | 27.750 | 3.2122 | 13 |
| 15 | 30.320 | 2.9455 | 17 |
| 16 | 30.920 | 2.8897 | 24 |

### Example 23

### (Preparation of TAPSO-18)

By using essentially the same composition and procedure as in Example 21, while changing the 2.35g silica sol and 2.15g Zr(NO₃)₄ • 5H₂O in Example 21 to 1.50g activated dioxide silica(40% SiO₂) and 0.63g Ti(SO₄)₂, respectively, a final product was obtained. The product was determined by XRD(Table 6) to be TAPSO-18 molecular sieve.

**Table 6**

| No. | 2θ | d(Å) | 100× I/I₀ |
|---|---|---|---|
| 1 | 9.490 | 9.3119 | 100 |
| 2 | 10.430 | 8.4747 | 14 |
| 3 | 10.860 | 8.1401 | 12 |
| 4 | 12.950 | 6.8307 | 9 |
| 5 | 14.760 | 5.9969 | 11 |
| 6 | 15.520 | 5.7049 | 30 |
| 7 | 15.910 | 5.5659 | 17 |
| 8 | 16.880 | 5.2482 | 73 |
| 9 | 17.680 | 5.0125 | 21 |
| 10 | 19.500 | 4.5485 | 15 |
| 11 | 20.020 | 4.4315 | 31 |
| 12 | 20.810 | 4.2651 | 35 |
| 13 | 21.740 | 4.0847 | 15 |
| 14 | 23.820 | 3.7325 | 16 |
| 15 | 26.170 | 3.4024 | 23 |
| 16 | 26.720 | 3.3336 | 14 |
| 17 | 27.930 | 3.1919 | 22 |
| 18 | 30.090 | 2.9675 | 18 |
| 19 | 30.720 | 2.9080 | 18 |
| 20 | 32.330 | 2.7668 | 20 |

### Comparison Example 3

By using essentially the same composition and procedure as in Example 21, while changing the 2.15g Zr(NO₃)₄ • 5H₂O in Example 21 to 13.65g Ti(SO₄)₂(96%), a final product was obtained. The product was a mixture of TAPSO-18 and TAPSO-44 crystals. The XRD result is shown in Table 7.

**Table 7**

| No. | 2θ | D(Å) | 100× I/I₀ |
|---|---|---|---|
| 1 | 9.450 | 9.3513 | 17 |
| 2 | 12.840 | 6.8890 | 12 |
| 3 | 14.860 | 5.9567 | 26 |
| 4 | 15.940 | 5.5555 | 12 |
| 5 | 16.880 | 5.2482 | 13 |
| 6 | 19.710 | 4.5005 | 60 |
| 7 | 20.880 | 4.2509 | 100 |
| 8 | 22.330 | 3.9781 | 76 |
| 9 | 23.830 | 3.7309 | 10 |
| 10 | 25.910 | 3.4359 | 38 |
| 11 | 28.930 | 3.0838 | 16 |
| 12 | 30.020 | 2.9742 | 21 |
| 13 | 34.550 | 2.5939 | 17 |
| 14 | 37.530 | 2.3945 | 12 |

### Example24

### (Preparation of MnAPSO-18)

By using essentially the same composition and procedure as in Example21, while changing the 2.15g Zr(NO₃)₄ •5H₂O in Example 21 to 1.23g Mn(CH₃COO)₂ •4H₂O, a final product was obtained. The product was MnAPSO-18 molecular sieve(Table 8).

**Table 8**

| No. | 2θ | d(Å) | 100× I/I₀ |
|---|---|---|---|
| 1 | 9.480 | 9.3217 | 100 |
| 2 | 10.540 | 8.3865 | 14 |
| 3 | 12.820 | 6.8997 | 10 |
| 4 | 14.750 | 6.0009 | 10 |
| 5 | 15.940 | 5.5555 | 33 |
| 6 | 16.960 | 5.2236 | 62 |
| 7 | 19.560 | 4.5347 | 20 |
| 8 | 20.030 | 4.4294 | 22 |
| 9 | 20.510 | 4.3268 | 34 |
| 10 | 21.290 | 4.1700 | 28 |
| 11 | 23.860 | 3.7263 | 22 |
| 12 | 25.820 | 3.4477 | 15 |
| 13 | 26.250 | 3.3922 | 21 |
| 14 | 27.910 | 3.1941 | 17 |
| 15 | 30.250 | 2.9521 | 17 |
| 16 | 31.010 | 2.8815 | 24 |

### Example 25

### (Preparation of MgAPSO-18)

By using essentially the same composition and procedure as in Example 21, while changing the 2.15g Zr(NO₃)₄ •5H₂O in Example 21 to 1.07g Mg(CH₃COO)₂ •4H₂O, a final product was obtained. The product was MgAPSO-18 molecular sieve(Table 9).

**Table 9**

| No. | 2θ | d(Å) | 100× I/I₀ |
|---|---|---|---|
| 1 | 9.490 | 9.3119 | 100 |
| 2 | 10.460 | 8.4505 | 17 |
| 3 | 10.910 | 8.1029 | 15 |
| 4 | 15.540 | 5.6976 | 32 |
| 5 | 16.910 | 5.2389 | 93 |
| 6 | 17.730 | 4.9984 | 24 |
| 7 | 19.530 | 4.5416 | 22 |
| 8 | 20.060 | 4.4228 | 39 |
| 9 | 20.870 | 4.2529 | 45 |
| 10 | 21.960 | 4.0442 | 20 |
| 11 | 22.360 | 3.9728 | 16 |
| 12 | 23.880 | 3.7232 | 20 |
| 13 | 24.320 | 3.6569 | 16 |
| 14 | 26.220 | 3.3960 | 27 |
| 15 | 27.970 | 3.1874 | 23 |
| 16 | 30.110 | 2.9655 | 22 |
| 17 | 31.070 | 2.8761 | 22 |
| 18 | 32.350 | 2.7651 | 25 |

### Example 26

### (Preparation of FAPSO-18)

By using essentially the same composition and procedure as in Example 21, while changing the 2.15g Zr(NO₃)₄ • 5H₂O and 10.34g N,N-diisopropylethylamine in Example 21 to 2.02g Fe(NO₃)₃ • 9H₂O and 10.61g N,N-diisopropylpropylamine respectively, a final product was obtained. The product was determined by XRD(Table 10) to be FAPSO-18 molecular sieve.

**Table 10**

| No. | 2θ | d(Å) | 100× I/I₀ |
|---|---|---|---|
| 1 | 9.510 | 9.2924 | 100 |
| 2 | 10.440 | 8.4666 | 14 |
| 3 | 10.860 | 8.1401 | 14 |
| 4 | 15.560 | 5.6903 | 28 |
| 5 | 16.950 | 5.2267 | 71 |
| 6 | 17.670 | 5.0153 | 18 |
| 7 | 19.540 | 4.5393 | 16 |
| 8 | 20.060 | 4.4228 | 32 |
| 9 | 20.820 | 4.2630 | 40 |
| 10 | 21.780 | 4.0773 | 18 |
| 11 | 23.990 | 3.7064 | 14 |
| 12 | 24.320 | 3.6569 | 16 |
| 13 | 26.210 | 3.3973 | 25 |
| 14 | 30.120 | 2.9646 | 17 |
| 15 | 31.090 | 2.8743 | 19 |
| 16 | 32.340 | 2.7660 | 21 |

### Eaample27

### (Preparation of NiAPSO-18)

By using essentially the same composition and procedure as in Example21, while changing the 2.15g Zr(NO₃)₄ • 5H₂O and 10.34g N,N-diisopropylethylamine in Example 21 to 1.45g Ni(NO₃)₂ • 6H₂O and 9.96g tetraethyl hydroxide amine, a final product was obtained. The product was determined by XRD(Table 11) to be NiAPSO-18 molecular sieve.

**Table 11**

| No. | 2θ | d(Å) | 100× I/I₀ |
|---|---|---|---|
| 1 | 9.450 | 9.3513 | 100 |
| 2 | 10.550 | 8.3786 | 15 |
| 3 | 12.780 | 6.9212 | 12 |
| 4 | 14.740 | 6.0050 | 9 |
| 5 | 15.960 | 5.5486 | 48 |
| 6 | 16.880 | 5.2482 | 47 |
| 7 | 19.560 | 4.5347 | 21 |
| 8 | 20.510 | 4.3268 | 43 |
| 9 | 21.290 | 4.1700 | 35 |
| 10 | 23.830 | 3.7309 | 31 |
| 11 | 25.760 | 3.4556 | 19 |
| 12 | 26.270 | 3.3897 | 24 |
| 13 | 27.790 | 3.2076 | 21 |
| 14 | 30.330 | 2.9445 | 18 |
| 15 | 31.020 | 2.8806 | 28 |

### Example 28

### (Preparation of ZnAPSO-18)

By using essentially the same composition and procedure as in Example 21, while changing the 2.15g Zr(NO₃)₄ •5H₂O in Example 21 to 1.10g Zn(CH₃COO)₂ •2H₂O, a final product was obtained. The product was ZnAPSO-18 molecular sieve(Table 12).

**Table 12**

| No. | 2θ | d(Å) | 100× I/I₀ |
|---|---|---|---|
| 1 | 9.430 | 9.3711 | 100 |
| 2 | 10.500 | 8.4184 | 12 |
| 3 | 12.790 | 6.9158 | 11 |
| 4 | 15.920 | 5.5624 | 45 |
| 5 | 16.880 | 5.2482 | 55 |
| 6 | 19.560 | 4.5347 | 20 |
| 7 | 20.460 | 4.3372 | 41 |
| 8 | 21.240 | 4.1797 | 30 |
| 9 | 23.810 | 3.7340 | 26 |
| 10 | 25.720 | 3.4609 | 16 |
| 11 | 26.270 | 3.3897 | 22 |
| 12 | 27.780 | 3.2088 | 15 |
| 13 | 30.310 | 2.9464 | 17 |
| 14 | 30.980 | 2.8842 | 27 |

### Comparison Example 4

By using essentially the same composition and procedure as in Example 21, while changing 10.34g N, N-diisopropylpropylamine in Example 21 to 5.82g N, N-diisopropylethylamine, a product of unknown phase was obtained. The XRD analysis result is shown in the table 13

**Table 13**

| No. | 2θ | d(Å) | 100× I/I₀ |
|---|---|---|---|
| 1 | 7.500 | 11.7777 | 8 |
| 2 | 13.000 | 6.8045 | 2 |
| 3 | 14.930 | 5.9290 | 3 |
| 4 | 19.800 | 4.4803 | 6 |
| 5 | 20.530 | 4.3226 | 17 |
| 6 | 21.160 | 4.1953 | 6 |
| 7 | 21.890 | 4.0570 | 100 |
| 8 | 22.480 | 3.9518 | 11 |
| 9 | 23.260 | 3.8211 | 7 |
| 10 | 25.970 | 3.4281 | 4 |
| 11 | 28.320 | 3.1488 | 8 |
| 12 | 30.050 | 2.9713 | 4 |
| 13 | 31.270 | 2.8581 | 9 |
| 14 | 35.920 | 2.4981 | 12 |
| 15 | 42.400 | 2.1301 | 3 |
| 16 | 46.710 | 1.9431 | 5 |
| 17 | 48.310 | 1.8824 | 5 |
| 18 | 53.790 | 1.7028 | 3 |
| 19 | 56.700 | 1.6221 | 3 |

### Example 29

### (Preparation of CuZrAPSO-18)

By using essentially the same composition and procedure as in Example 21, while changing the 2.15g Zr(NO₃)₄ •5H₂O in Example 21 to 1.08g Zr(NO₃)₄ •5H₂O and 1.08g Cu(NO₃)₂ •3H₂O, a final product was obtained. The product was determined CuZrAPSO-18 molecular sieve.

### Example 30

### (Preparation of ZrAPSO-34)

7.06g psudo-bromite(72.2wt% Al₂O₃) was dissolved in 19ml de-ionized water, and then 4.8g silica sol was added to the prepared alumina sol under stirring. 10.95g orthophosphoric acid (85wt% H₃PO₄) and 10ml de-ionized water was then added slowly under continual stirring for 10 minutes. After that, 1.07g Zr(NO₃)₄ • 5H₂O plus 10ml de-ionized water were added to the prepared mixture, and stirred for 20 minutes. Finally, 15.15g triethylamine was added to the mixture under continuous stirring until attaining a homogeneous phase. The composition of the final reaction mixture in molar oxide ratio was: 3Et₃N: 0.4SiO₂: Al₂O₃: P₂O₅: 0.05ZrO₂: 39H₂O.

The gel mixture is radiated in microwave oven for 2 minutes, then the mixture was sealed in a autoclave lined with polytetrafluoroethylene and crystallized under autogeneous pressure for 2.5 hours under temperature programmed 50∼200°C. The solid product was washed to neutral, and then dried at 100°C in air. The product was determined by XRD (Table 14) to be the ZrAPSO-34 by XRD. Its water adsorption capacity was 31.2wt% at 25°C.

The chemical composition of the product was: 2.6wt.%C, 0.5wt.%N, 4.6wt.%SiO₂, 37.1wt.%Al₂O₃, 49.4wt.%P₂O_{5,}2.2wt%ZrO₂, 3.6wt.%H₂O.

**Table 14**

| No. | 2θ | d(Å) | 100× I/I₀ |
|---|---|---|---|
| 1 | 9.660 | 9.1485 | 100 |
| 2 | 13.010 | 6.7993 | 10 |
| 3 | 16.200 | 5.4669 | 35 |
| 4 | 17.040 | 5.1992 | 13 |
| 5 | 20.750 | 4.2773 | 37 |
| 6 | 21.380 | 4.1526 | 15 |
| 7 | 24.270 | 3.6643 | 10 |
| 8 | 26.040 | 3.4191 | 14 |
| 9 | 30.590 | 2.9201 | 14 |
| 10 | 31.230 | 2.8617 | 18 |
| 11 | 49.090 | 1.8543 | 7 |

### Example 31

### (Preparation of TAPSO-34)

By using essentially the same composition and procedure as in Example 30, while changing the 1.07g Zr(NO₃)₄.5H₂O in Example 30 to 0.63g titanium sulfate(containing 96wt% Ti(SO₄)₂). The mixture was sealed in a autoclave lined with polytetrafluoroethylene after pressurizing with nitrogen to 0.4Mpa, heated at a temperature sufficiently high for 12 hours and crystallized for 2 hours under temperature programmed 50∼200°C, a final product was obtained. The product was determined by XRD to be the TAPSO-34 molecular sieve, as shown in Table 15. Its water adsorption capacity was measured to be 35.1wt% at 25°C.

**Table 15**

| No. | 2θ | d(Å) | 100× I/I₀ |
|---|---|---|---|
| 1 | 9.430 | 9.3711 | 100 |
| 2 | 12.780 | 6.9292 | 18 |
| 3 | 13.980 | 6.3297 | 8 |
| 4 | 15.940 | 5.5555 | 49 |
| 5 | 17.900 | 4.9513 | 12 |
| 6 | 18.940 | 4.6817 | 8 |
| 7 | 20.510 | 4.3268 | 79 |
| 8 | 21.000 | 4.2269 | 13 |
| 9 | 23.040 | 3.8570 | 10 |
| 10 | 25.140 | 3.5394 | 17 |
| 11 | 25.780 | 3.4530 | 20 |
| 12 | 30.490 | 2.9294 | 24 |
| 13 | 31.590 | 2.8299 | 9 |

### Example 32

### (Preparation of CoAPSO-34)

By using essentially the same composition and procedure as in Example 30, while changing the 1.07g Zr(NO₃)₄.5H₂O in Example 30 to 1.25g of Co(CH₃COO)₄.4H₂O, a final product was obtained. The product was determined by XRD to be the CoAPSO-34 molecular sieve, as shown in Table 16. Its water adsorption capacity was measured to be 34.0wt% at 25°C.

**Table 16**

| No. | 2θ | d(Å) | 100× I/I₀ |
|---|---|---|---|
| 1 | 9.430 | 9.3711 | 100 |
| 2 | 12.760 | 6.9320 | 20 |
| 3 | 13.940 | 6.3477 | 8 |
| 4 | 15.930 | 5.5589 | 49 |
| 5 | 17.860 | 4.9623 | 14 |
| 6 | 20.490 | 4.3309 | 81 |
| 7 | 23.010 | 3.8620 | 11 |
| 8 | 25.080 | 3.5477 | 21 |
| 9 | 25.790 | 3.4517 | 23 |
| 10 | 30.470 | 2.9313 | 28 |
| 11 | 31.110 | 2.8725 | 22 |

### Example 33

### (Preparation of MnAPSO-34)

By using essentially the same composition and procedure as in Example 30, while changing the 1.07g Zr(NO₃)₄.5H₂O in Example 30 to 0.62g of Mn(CH₃COO)₄.4H₂O, a final product was obtained. The product was determined by XRD to be the MnAPSO-34 molecular sieve, as shown in Table 17. Its water adsorption capacity was measured to be 32.3wt% at 25°C.

**Table 17**

| No. | 2θ | d(Å) | 100× I/I₀ |
|---|---|---|---|
| 1 | 9.430 | 9.3711 | 100 |
| 2 | 12.780 | 6.9212 | 16 |
| 3 | 13.960 | 6.3387 | 8 |
| 4 | 15.930 | 5.5589 | 47 |
| 5 | 20.490 | 4.3309 | 73 |
| 6 | 23.020 | 3.8603 | 11 |
| 7 | 25.090 | 3.5463 | 15 |
| 8 | 25.770 | 3.4543 | 20 |
| 9 | 30.510 | 2.9276 | 24 |
| 10 | 31.100 | 2.8734 | 21 |

### Example 34

### (Preparation of NiAPSO-34)

By using essentially the same composition and procedure as in Example 30, while changing the 1.07g Zr(NO₃)₄.5H₂O in Example 30 to 0.62g of Ni(NO₃)₂.6H₂O, a final product was obtained. The product was determined by XRD to be the NiAPSO-34 molecular sieve, as shown in Table 18. Its water adsorption capacity was measured to be 34.6wt% at 25°C.

**Table 18**

| No. | 2θ | d(Å) | 100× I/I₀ |
|---|---|---|---|
| 1 | 9.410 | 9.3909 | 100 |
| 2 | 12.760 | 6.9320 | 11 |
| 3 | 13.890 | 6.3707 | 4 |
| 4 | 15.930 | 5.5589 | 30 |
| 5 | 16.740 | 5.2917 | 8 |
| 6 | 17.800 | 4.9789 | 6 |
| 7 | 20.480 | 4.3330 | 45 |
| 8 | 21.190 | 4.1894 | 10 |
| 9 | 23.020 | 3.8603 | 7 |
| 10 | 25.020 | 3.5561 | 8 |
| 11 | 25.770 | 3.4543 | 12 |
| 12 | 27.620 | 3.2270 | 9 |
| 13 | 29.390 | 3.0365 | 6 |
| 14 | 30.960 | 2.8860 | 4 |

### Example 35

### (Preparation of ZnAPSO-34)

By using essentially the same composition and procedure as in Example 30, while changing the 1.07g Zr(NO₃)₄.5H₂O in Example 30 to 0.62g of Zn(NO₃)₂.6H₂O, a final product was obtained. The product was determined by XRD to be the ZnAPSO-34 molecular sieve, as shown in Table 19. Its water adsorption capacity was measured to be 32.9wt% at 25°C.

**Table 19**

| No. | 2θ | d(Å) | 100× I/I₀ |
|---|---|---|---|
| 1 | 9.450 | 9.3513 | 100 |
| 2 | 12.780 | 6.9212 | 23 |
| 3 | 14.000 | 6.3207 | 10 |
| 4 | 15.950 | 5.5520 | 48 |
| 5 | 17.910 | 4.9486 | 20 |
| 6 | 20.510 | 4.3268 | 96 |
| 7 | 23.020 | 3.8603 | 9 |
| 8 | 25.130 | 3.5408 | 27 |
| 9 | 25.780 | 3.4530 | 23 |
| 10 | 30.490 | 2.9294 | 35 |
| 11 | 31.160 | 2.8680 | 24 |
| 12 | 34.330 | 2.6100 | 9 |

### Example 36

### (Preparation of MgAPSO-34)

By using essentially the same composition and procedure as in Example 30, while changing the 1.07g Zr(NO₃)₄.5H₂O in Example 30 to 1.28g of Mg(NO₃)₂.6H₂O, a final product was obtained. The product was determined by XRD to be the MgAPSO-34 molecular sieve, as shown in Table 20. Its water adsorption capacity was measured to be 31.5wt% at 25°C.

**Table 20**

| No. | 2θ | d(Å) | 100× I/I₀ |
|---|---|---|---|
| 1 | 9.430 | 9.3711 | 100 |
| 2 | 12.760 | 6.9320 | 15 |
| 3 | 13.930 | 6.3523 | 7 |
| 4 | 15.940 | 5.5555 | 44 |
| 5 | 17.890 | 4.9541 | 9 |
| 6 | 20.480 | 4.3330 | 70 |
| 7 | 21.030 | 4.2209 | 14 |
| 8 | 23.040 | 3.8570 | 9 |
| 9 | 25.110 | 3.5436 | 11 |
| 10 | 25.780 | 3.4530 | 18 |
| 11 | 30.490 | 2.9294 | 20 |
| 12 | 30.970 | 2.8851 | 18 |

### Example 37

### (Preparation of LaAPSO-34)

By using essentially the same composition and procedure as in Example 30, while changing the 1.07g Zr(NO₃)₄.5H₂O in Example 30 to 2.17g of La(NO₃)₃.6H₂O, a final product was obtained. The product was determined by XRD to be the LaAPSO-34 molecular sieve, as shown in Table 21. Its water adsorption capacity was measured to be 31.6 wt% at 25°C.

**Table 21**

| No. | 2θ | d(Å) | 100× I/I₀ |
|---|---|---|---|
| 1 | 9.420 | 9.3810 | 100 |
| 2 | 12.760 | 6.9320 | 16 |
| 3 | 15.930 | 5.5589 | 45 |
| 4 | 16.940 | 5.2297 | 12 |
| 5 | 20.480 | 4.3330 | 58 |
| 6 | 21.270 | 4.1738 | 14 |
| 7 | 25.780 | 3.4530 | 20 |
| 8 | 30.450 | 2.9332 | 19 |
| 9 | 30.990 | 2.8833 | 23 |

### Example 38

### (Preparation of FAPSO-34)

By using essentially the same composition and procedure as in Example 30, while changing the 1.07g Zr(NO₃)₄.5H₂O in Example 30 to 2.17g of Fe(NO₃)₃.9H₂O, a final product was obtained. The product was determined by XRD to be the FAPSO-34 molecular sieve, as shown in Table 22. Its water adsorption capacity was measured to be 34.2 wt% at 25°C.

**Table 22**

| No. | 2θ | d(Å) | 100× I/I₀ |
|---|---|---|---|
| 1 | 9.440 | 9.3612 | 100 |
| 2 | 12.790 | 6.9158 | 15 |
| 3 | 13.970 | 6.3342 | 6 |
| 4 | 15.950 | 5.5520 | 39 |
| 5 | 17.910 | 4.9486 | 9 |
| 6 | 20.500 | 4.3289 | 60 |
| 7 | 25.090 | 3.5463 | 15 |
| 8 | 25.820 | 3.4477 | 16 |
| 9 | 30.480 | 2.9304 | 19 |
| 10 | 31.040 | 2.8788 | 19 |

### Example 39

### (Preparation of VAPSO-34)

By using essentially the same composition and procedure as in Example 30, while changing the 1.07g Zr(NO₃)₄.5H₂O in Example 30 to 0.59g of NH₄VO₃, a final product was obtained. The product was determined by XRD to be the VAPSO-34 molecular sieve, as shown in Table 23. Its water adsorption capacity was measured to be 33.5 wt% at 25°C.

**Table 23**

| No. | 2θ | d(Å) | 100× I/I₀ |
|---|---|---|---|
| 1 | 9.450 | 9.3513 | 67 |
| 2 | 12.790 | 6.9158 | 12 |
| 3 | 15.960 | 5.5486 | 33 |
| 4 | 16.830 | 5.2636 | 9 |
| 5 | 20.510 | 4.3268 | 50 |
| 6 | 21.470 | 4.1354 | 100 |
| 7 | 23.010 | 3.8620 | 17 |
| 8 | 25.810 | 3.4490 | 15 |
| 9 | 30.520 | 2.9066 | 14 |
| 10 | 31.020 | 2.8806 | 19 |

### Example 40

### (Preparation of CrAPSO-34)

By using essentially the same composition and procedure as in Example 30, while changing the 1.07g Zr(NO₃)₄.5H₂O in Example 30 to 2.00g of Cr(NO₃)₃.9H₂O, a final product was obtained. The product was determined by XRD to be the CrAPSO-34 molecular sieve, as shown in Table 24. Its water adsorption capacity was measured to be 32.4 wt% at 25°C.

**Table 24**

| No. | 2θ | d(Å) | 100× I/I₀ |
|---|---|---|---|
| 1 | 9.440 | 9.3612 | 100 |
| 2 | 12.790 | 6.9158 | 17 |
| 3 | 13.970 | 6.3342 | 7 |
| 4 | 15.940 | 5.5555 | 53 |
| 5 | 16.830 | 5.2636 | 11 |
| 6 | 17.900 | 4.9513 | 13 |
| 7 | 20.510 | 4.3268 | 79 |
| 8 | 21.040 | 4.2190 | 15 |
| 9 | 23.030 | 3.8587 | 12 |
| 10 | 25.110 | 3.5436 | 17 |
| 11 | 25.780 | 3.4530 | 23 |
| 12 | 30.480 | 2.9304 | 25 |
| 13 | 31.020 | 2.8806 | 24 |

### Example 41

### (Preparation of CuAPSO-34)

By using essentially the same composition and procedure as in Example 30, while changing the 1.07g Zr(NO₃)₄.5H₂O in Example 30 to 2.17g of Cu(NO₃)₂.3H₂O, a final product was obtained. The product was determined by XRD to be the CuAPSO-34 molecular sieve, as shown in Table 25. Its water adsorption capacity was measured to be 30.1 wt% at 25°C.

**Table25**

| No. | 2θ | d(Å) | 100× I/I₀ |
|---|---|---|---|
| 1 | 9.450 | 9.3513 | 100 |
| 2 | 12.800 | 6.9104 | 16 |
| 3 | 14.000 | 6.3207 | 7 |
| 4 | 15.970 | 5.5451 | 49 |
| 5 | 17.900 | 4.9513 | 10 |
| 6 | 20.520 | 4.3247 | 66 |
| 7 | 21.140 | 4.1992 | 14 |
| 8 | 23.060 | 3.8537 | 12 |
| 9 | 25.120 | 3.5422 | 15 |
| 10 | 25.800 | 3.4503 | 20 |
| 11 | 30.530 | 2.9257 | 21 |
| 12 | 31.040 | 2.8788 | 21 |

### Example 42

### (Preparation of MoAPSO-34)

By using essentially the same composition and procedure as in Example 30, while changing the 1.07g Zr(NO₃)₄.5H₂O in Example 30 to 0.89g of (NH₄)₆Mo₇O₂₄.4H₂O, a final product was obtained. The product was determined by XRD to be the MoAPSO-34 molecular sieve, as shown in Table 26 Its water adsorption capacity was measured to be 36.8 wt% at 25°C.

**Table 26**

| No. | 2θ | d(Å) | 100× I/I₀ |
|---|---|---|---|
| 1 | 9.410 | 9.3909 | 100 |
| 2 | 12.750 | 6.9374 | 15 |
| 3 | 13.910 | 6.3613 | 6 |
| 4 | 15.920 | 5.5624 | 47 |
| 5 | 16.890 | 5.2451 | 12 |
| 6 | 17.870 | 4.9596 | 10 |
| 7 | 20.480 | 4.3330 | 63 |
| 8 | 21.250 | 4.1777 | 14 |
| 9 | 25.090 | 3.5463 | 12 |
| 10 | 25.760 | 3.4556 | 19 |
| 11 | 30.430 | 2.9351 | 18 |
| 12 | 30.990 | 2.8833 | 19 |

### Example 43

### (Preparation of CaAPSO-34)

By using essentially the same composition and procedure as in Example 30, while changing the 1.07g Zr(NO₃)₄.5H₂O in Example 30 to 1.19g of Ca(NO₃)₂.3H₂O, a final product was obtained. The product was determined by XRD to be the CaAPSO-34 molecular sieve, as shown in Table 27. Its water adsorption capacity was measured to be 30.1 wt% at 25°C.

**Table 27**

| No. | 2θ | d(Å) | 100× I/I₀ |
|---|---|---|---|
| 1 | 9.460 | 9.3414 | 100 |
| 2 | 12.820 | 6.8997 | 18 |
| 3 | 14.000 | 6.3207 | 8 |
| 4 | 15.970 | 5.5451 | 47 |
| 5 | 17.930 | 4.9431 | 13 |
| 6 | 20.530 | 4.3226 | 75 |
| 7 | 21.030 | 4.2209 | 14 |
| 8 | 23.070 | 3.8521 | 11 |
| 9 | 25.160 | 3.5366 | 18 |
| 10 | 25.820 | 3.4477 | 22 |
| 11 | 30.530 | 2.9257 | 26 |
| 12 | 31.070 | 2.8761 | 21 |

### Example 44

### (Preparation of SrAPSO-34)

By using essentially the same composition and procedure as in Example 30, while changing the 1.07g Zr(NO₃)₄.5H₂O in Example 30 to 2.17g of Sr(NO₃)₂, a final product was obtained. The product was determined by XRD to be the SrAPSO-34 molecular sieve, as shown in Table 28. Its water adsorption capacity was measured to be 32.3 wt% at 25°C.

**Table 28**

| No. | 2θ | d(Å) | 100× I/I₀ |
|---|---|---|---|
| 1 | 9.420 | 9.3810 | 100 |
| 2 | 12.760 | 6.9320 | 16 |
| 3 | 14.000 | 6.3207 | 6 |
| 4 | 15.930 | 5.5589 | 45 |
| 5 | 16.730 | 5.2949 | 11 |
| 6 | 17.910 | 4.9486 | 9 |
| 7 | 20.490 | 4.3309 | 59 |
| 8 | 21.210 | 4.1855 | 15 |
| 9 | 25.110 | 3.5436 | 15 |
| 10 | 25.780 | 3.4530 | 18 |
| 11 | 30.440 | 2.9341 | 21 |
| 12 | 31.000 | 2.8824 | 19 |

### Example 45

### (Preparation of BaAPSO-34)

By using essentially the same composition and procedure as in Example 30, while changing the 1.07g Zr(NO₃)₄.5H₂O in Example 30 to 1.31g of Ba(NO₃)₂, a final product was obtained. The product was determined by XRD to be the BaAPSO-34 molecular sieve, as shown in Table 29. Its water adsorption capacity was measured to be 32.2 wt% at 25°C.

**Table 29**

| No. | 2θ | d(Å) | 100× I/I₀ |
|---|---|---|---|
| 1 | 9.460 | 9.3414 | 100 |
| 2 | 12.810 | 6.9050 | 16 |
| 3 | 15.980 | 5.5417 | 48 |
| 4 | 17.920 | 4.9459 | 12 |
| 5 | 20.530 | 4.3224 | 69 |
| 6 | 21.240 | 4.1797 | 17 |
| 7 | 25.180 | 3.5339 | 15 |
| 8 | 25.830 | 3.4464 | 21 |
| 9 | 30.530 | 2.9257 | 20 |
| 10 | 31.050 | 2.8779 | 24 |

### Example 46

### (Preparation of ZrAPSO-34)

By using essentially the same composition and procedure as in Example 30, while changing the 1.07g Zr(NO₃)₄.5H₂O in Example 30 to 1.61g of ZrOCl₂.8H₂O, a final product was obtained. The product was determined by XRD to be the ZrAPSO-34 molecular sieve, as shown in Table 30. Its water adsorption capacity was measured to be 32.2 wt% at 25°C.

**Table 30**

| No. | 2θ | d(Å) | 100× I/I₀ |
|---|---|---|---|
| 1 | 9.400 | 9.4009 | 100 |
| 2 | 12.740 | 6.9428 | 14 |
| 3 | 15.920 | 5.5624 | 41 |
| 4 | 16.860 | 5.2543 | 11 |
| 5 | 20.460 | 4.3372 | 59 |
| 6 | 21.070 | 4.2130 | 14 |
| 7 | 21.240 | 4.1797 | 12 |
| 8 | 23.010 | 3.8620 | 8 |
| 9 | 25.050 | 3.5519 | 10 |
| 10 | 25.740 | 3.4582 | 17 |
| 11 | 29.420 | 3.0335 | 7 |
| 12 | 30.940 | 2.8878 | 20 |
| 13 | 31.550 | 2.8334 | 9 |
| 14 | 48.910 | 1.8607 | 8 |

### Example 47

### (Preparation of ZrAPO-34)

A reaction mixture was prepared by combining 21ml of de-ionized water and 7.06g of hydrated aluminum oxide (a pseudo-boehmite phase, 72.2 wt% Al₂O₃), to which was added 11.53g of 85 wt% orthophosphoric acid (H₃PO₄) and 10ml of de-ionized water with stirring. After stirring for 10 minutes, to this mixture was added 2.15g of Zr(NO₃)₄.5H₂O and 10ml of de-ionized water, and then stirred for 20 minutes. Finally 15.15g of triethylamine was added, and the mixture stirred until homogeneous. The following gel composition was prepared in terms of mole ratios of oxides: 3Net₃: Al₂O₃: P₂O₅: 0.1ZrO₂: 50H₂O.

The gel mixture is radiated in microwave oven for 2 minutes, then the mixture was sealed in a autoclave lined with polytetrafluoroethylene and crystallized under autogeneous pressure for 2.5 hours under temperature programmed 50∼200°C. The solid product was washed with de-ionized water to neutral, and dried in air at 100°C. ZrAPO-34 molecular sieve was produced, as evidenced by the X-ray powder diffraction pattern of solid product. The analysis result of XRD was shown in Table 31.The water adsorption capacity of ZrAPO-34 at 25 °C measured to be 34.3 wt%.

**Table 31**

| No. | 2θ | d(Å) | 100× I/I₀ |
|---|---|---|---|
| 1 | 9.610 | 9.1959 | 100 |
| 2 | 15.560 | 5.6903 | 15 |
| 3 | 16.910 | 5.2389 | 38 |
| 4 | 17.840 | 4.9679 | 23 |
| 5 | 20.180 | 4.3968 | 16 |
| 6 | 21.100 | 4.2071 | 23 |
| 7 | 22.070 | 4.0243 | 9 |
| 8 | 22.420 | 3.9623 | 9 |
| 9 | 24.460 | 3.6362 | 8 |
| 10 | 24.850 | 3.5801 | 9 |
| 11 | 25.530 | 3.4862 | 11 |
| 12 | 26.280 | 3.3884 | 10 |
| 13 | 26.870 | 3.3153 | 8 |
| 14 | 28.100 | 3.1729 | 18 |
| 15 | 30.190 | 2.9579 | 14 |
| 16 | 30.810 | 2.8997 | 9 |
| 17 | 31.300 | 2.8554 | 15 |
| 18 | 32.510 | 2.7519 | 17 |

### Example 48

### (Preparation of ZrAPSO-34)

A reaction mixture was prepared by combining 19ml of de-ionized water and 7.06g of hydrated aluminum oxide (a pseudo-boehmite phase, 72.2 wt% Al₂O₃), to which was added slowly and with stirring 4.8g of silica sol (25.0 wt%SiO₂).Then 11.53g of 85 wt% orthophosphoric acid (H₃PO₄) and 10ml of de-ionized water was added. After stirring for 10 minutes, to this mixture was added a solution of 1.07g of Zr(NO₃)₄.5H₂O and 10ml of de-ionized water, and then stirred for 20 minutes. Finally 7.58g of triethylamine and 5.40g of diethylamine was added, and the mixture stirred until homogeneous. The following gel composition was prepared in terms of mole ratios of oxides: 1.5(Net₃+Net₂): 0.4SiO₂: Al₂O₃: P₂O₅: 0.05ZrO₂: 50H₂O.

The gel mixture is radiated in microwave oven for 2 minutes, then the mixture was sealed in a autoclave lined with polytetrafluoroethylene and pressurizing with nitrogen gas to 0.4Mpa, and crystallized for 2.5 hours under temperature programmed 50∼200°C. The solid product was washed with de-ionized water to neutral, and dried in air at 100°C. ZrAPSO-34 molecular sieve was produced, as evidenced by the X-ray powder diffraction pattern of solid product. The analysis result of XRD was shown in Table 32. The water adsorption capacity of ZrAPSO-34 at 25°C measured to be 27.7 wt%.

**Table 32**

| No. | 2θ | d(Å) | 100× I/I₀ |
|---|---|---|---|
| 1 | 9.750 | 9.0642 | 100 |
| 2 | 13.130 | 6.7374 | 12 |
| 3 | 16.290 | 5.4369 | 26 |
| 4 | 20.860 | 4.2549 | 42 |
| 5 | 22.100 | 4.0189 | 96 |
| 6 | 25.500 | 3.4902 | 12 |
| 7 | 26.140 | 3.4062 | 14 |
| 8 | 28.510 | 3.1282 | 9 |
| 9 | 30.450 | 2.9332 | 9 |
| 10 | 30.900 | 2.8915 | 17 |
| 11 | 31.400 | 2.8466 | 21 |
| 12 | 36.060 | 2.4887 | 9 |
| 13 | 36.240 | 2.4767 | 10 |
| 14 | 49.270 | 1.8479 | 7 |

### Example 49

### (Preparation of ZrAPSO-35)

A reaction mixture was prepared by combining 19ml of de-ionized water and 7.06g of hydrated aluminum oxide (a pseudo-boehmite phase,72.2 wt% Al₂O₃), to which was added slowly and with stirring 3.60g of silica sol(25 wl%SiO₂).Then 11.53g of 85 wt% orthophosphoric acid (H₃PO₄) and 10ml of de-ionized water was added. After stirring for 10 minutes, to this mixture was added a solution of 1.07g of Zr(NO₃)₄.5H₂O and 20ml of de-ionized water, and then stirred for 20 minutes. Finally 7.50g of hexamethyleneimine was added, and the mixture stirred for about 20 minutes until homogeneous. The composition of the final reaction mixture in mole oxide ratios was: 1.5HN(CH₂)₆: 0.3SiO₂: Al₂O₃: P₂O₅: 0.05ZrO₂: 55.5H₂O.

The gel mixture is radiated in microwave oven for 1 minutes, then the mixture was sealed in a autoclave lined with polytetrafluoroethylene and crystallized under autogeneous pressure for 2 hours under temperature programmed 50∼200°C. The solid product was washed with de-ionized water to neutral, and dried in air at 100°C. ZrAPSO-35 molecular sieve was produced, as evidenced by the X-ray powder diffraction pattern of solid product. The analysis result of XRD was shown in Table 33.The water adsorption capacity of ZrAPSO-35 at 25°C measured to be 35.5 wt%.

Chemical analysis established that the solid product was comprised of 3.2 wt% C, 0.6wt% N, 6.9wt% SiO₂, 39.1 wt% Al₂O₃, 45.4 wt% P₂O₅, 2.4 wt% ZrO₂ and 2.3 wt% H₂O.

**Table 33**

| No. | 2θ | d(Å) | 100× I/I₀ |
|---|---|---|---|
| 1 | 8.590 | 10.2855 | 21 |
| 2 | 10.930 | 8.0881 | 50 |
| 3 | 13.300 | 6.6517 | 45 |
| 4 | 15.870 | 5.9290 | 8 |
| 5 | 17.270 | 5.1305 | 77 |
| 6 | 17.740 | 4.9956 | 10 |
| 7 | 21.020 | 4.2229 | 33 |
| 8 | 21.880 | 4.0588 | 100 |
| 9 | 23.180 | 3.8341 | 21 |
| 10 | 24.970 | 3.5631 | 10 |
| 11 | 26.830 | 3.3202 | 25 |
| 12 | 28.540 | 301250 | 24 |
| 13 | 29.050 | 3.0713 | 12 |
| 14 | 32.090 | 2.7869 | 48 |
| 15 | 34.490 | 2.5983 | 8 |

### Comparison Example 5

By using essentially the same composition and procedure as in Example 49, while changing the 7.50g hexamethylene tetramine in Example 49 to 15.0g of the same templating agent(R/Al₂O₃ = 3.0), a final product was obtained. The product was not pure ZrAPSO-35 molecular sieve, but was a mixed crystal with unknown structure.

### Comparison Example 6

By using essentially the same composition and procedure as in Example 49, while changing the 7.50g hexamethyleneimine in Example 49 to 2.5g of the same templating agent(R/Al₂O₃ = 0.5), a final product was obtained. The product was not pure ZrAPSO-35 molecular sieve, but was a mixed crystal that containing ZrAPSO-5 molecular sieve.

### Comparison Example 7

By using essentially the same composition and procedure as in Example 49, while changing the 3.60g silica sol in Example 49 to 2.4g of the same silica sol(SiO₂Al₂O₃ = 0.2), a final product was obtained. The product was not pure ZrAPSO-35 molecular sieve, but was a mixed crystal that containing small amount of ZrAPSO-5 molecular sieve.

### Comparison Example 8

By using essentially the same composition and procedure as in Example 49, while changing the 3.60g silica sol in Example 49 to 1.2g of the same silica sol(SiO₂/Al₂O₃ = 0.1), a final product was obtained. The product was not pure ZrAPSO-35 molecular sieve, but was a mixed crystal that containing ZrAPSO-5 molecular sieve, as evidenced by the XRD pattern.

### Comparison Example 9

By using essentially the same composition and procedure as in Example 49, while changing the 3.60g silica sol in Example 49 to 0g of silica sol(SiO₂/Al₂O₃ = 0), a final product was obtained. The product was not pure ZrAPO-35 molecular sieve, but was ZrAPO-16 molecular sieve.

### Comparison Example 10

By using essentially the same composition and procedure as in Example 49, while changing the 3.60g silica sol in Example 49 to 8.4g of the same silica sol(SiO₂/Al₂O₃ = 0.7), a final product was obtained. The product was not pure ZrAPSO-35 molecular sieve, but was a mixed crystal that containing ZrAPSO-5 molecular sieve.

### Example 50

### (Preparation of TAPSO-35)

By using essentially the same composition and procedure as in Example 49, while changing the 1.07g Zr(NO₃)₄.5H₂O in Example 49 to 0.63g of titanium sulfate(containing Ti(SO₄)₂ 96%), a final product was obtained. The product was determined by XRD to be the TAPSO-35 molecular sieve, as shown in Table 34. Its water adsorption capacity was measured to be 37.1 wt% at 25°C.

**Table 34**

| No. | 2θ | D(Å) | 100× I/I₀ |
|---|---|---|---|
| 1 | 8.520 | 10.3698 | 18 |
| 2 | 10.840 | 8.1551 | 46 |
| 3 | 13.220 | 6.6918 | 37 |
| 4 | 15.800 | 5.6044 | 8 |
| 5 | 17.170 | 5.1602 | 65 |
| 6 | 20.930 | 4.2409 | 46 |
| 7 | 21.780 | 4.0773 | 100 |
| 8 | 23.080 | 3.8504 | 17 |
| 9 | 24.870 | 3.5772 | 11 |
| 10 | 26.730 | 3.3324 | 20 |
| 11 | 28.450 | 3.1347 | 34 |
| 12 | 28.950 | 3.0817 | 12 |
| 13 | 32.000 | 2.7946 | 47 |

### Example 51

### (Preparation of CoAPSO-35)

By using essentially the same composition and procedure as in Example 49, while changing the 1.07g Zr(NO₃)₄.5H₂O in Example 49 to 1.25g of Co(CH₃COO).4H₂O, then aging for 2 hours at room temperature and crystallizing for 12 hours at 200°C, a final product was obtained. The product was determined by XRD to be the CoAPSO-35 molecular sieve, as shown in Table 35. Its water adsorption capacity was measured to be 33.2 wt% at 25°C.

**Table 35**

| No. | 2θ | d(Å) | 100× I/I₀ |
|---|---|---|---|
| 1 | 8.520 | 10.3698 | 16 |
| 2 | 10.850 | 8.1476 | 48 |
| 3 | 13.240 | 6.6817 | 38 |
| 4 | 15.800 | 6.0090 | 10 |
| 5 | 17.190 | 5.1542 | 65 |
| 6 | 17.670 | 5.0756 | 12 |
| 7 | 20.940 | 4.2389 | 33 |
| 8 | 21.790 | 4.0754 | 100 |
| 9 | 23.100 | 3.8472 | 21 |
| 10 | 24.890 | 3.5744 | 13 |
| 11 | 26.750 | 3.3299 | 21 |
| 12 | 28.450 | 3.1347 | 38 |
| 13 | 28.960 | 2.8646 | 11 |
| 14 | 32.000 | 2.7946 | 45 |
| 15 | 34.380 | 2.6064 | 12 |

### Example 52

### (Preparation of MnAPSO-35)

By using essentially the same composition and procedure as in Example 49, while changing the 1.07g Zr(NO₃)₄.5H₂O in Example 49 to 0.62g of Mn(CH₃COO).4H₂O, a final product was obtained. The product was determined by XRD to be the MnAPSO-35 molecular sieve, as shown in Table 36. Its water adsorption capacity was measured to be 31.3 wt% at 25°C.

**Table 36**

| No. | 2θ | d(Å) | 100× I/I₀ |
|---|---|---|---|
| 1 | 8.530 | 10.3577 | 22 |
| 2 | 10.860 | 8.1401 | 49 |
| 3 | 13.230 | 6.6867 | 37 |
| 4 | 15.810 | 5.9982 | 9 |
| 5 | 17.190 | 5.1542 | 69 |
| 6 | 17.680 | 5.0655 | 10 |
| 7 | 20.940 | 4.2389 | 45 |
| 8 | 21.790 | 4.0754 | 100 |
| 9 | 23.090 | 3.8488 | 20 |
| 10 | 24.900 | 3.5730 | 11 |
| 11 | 26.760 | 3.3288 | 22 |
| 12 | 28.340 | 3.1466 | 34 |
| 13 | 28.980 | 3.1013 | 11 |
| 14 | 32.010 | 2.7937 | 48 |
| 15 | 34.410 | 2.6042 | 11 |

### Example 53

### (Preparation of NiAPSO-35)

By using essentially the same composition and procedure as in Example 49, while changing the 1.07g Zr(NO₃)₄.5H₂O in Example 49 to 1.45g of Ni(NO₃)₂.6H₂O, a final product was obtained. The product was determined by XRD to be the NiAPSO-35 molecular sieve, as shown in Table 37. Its water adsorption capacity was measured to be 36.4 wt% at 25°C.

**Table 37**

| No. | 2θ | d(Å) | 100× I/I₀ |
|---|---|---|---|
| 1 | 8.550 | 10.3335 | 50 |
| 2 | 10.930 | 8.0881 | 48 |
| 3 | 13.320 | 6.6418 | 38 |
| 4 | 15.890 | 5.5729 | 7 |
| 5 | 17.280 | 5.1276 | 65 |
| 6 | 17.770 | 4.9873 | 11 |
| 7 | 21.040 | 4.2190 | 30 |
| 8 | 21.890 | 4.0570 | 100 |
| 9 | 23.190 | 3.8324 | 23 |
| 10 | 24.980 | 3.5617 | 9 |
| 11 | 26.860 | 3.3165 | 23 |
| 12 | 28.450 | 3.1347 | 29 |
| 13 | 29.060 | 3.0703 | 13 |
| 14 | 32.110 | 2.7852 | 48 |
| 15 | 34.450 | 2.6381 | 8 |

### Example 54

### (Preparation of ZnAPSO-35)

By using essentially the same composition and procedure as in Example 49, while changing the 1.07g Zr(NO₃)₄.5H₂O in Example 49 to 1.49g of Zn(NO₃)₂.6H₂O, a final product was obtained. The product was determined by XRD to be the ZnAPSO-35 molecular sieve. Its water adsorption capacity was measured to be 29.9 wt% at 25°C.

### Example 55

### (Preparation of MgAPSO-35)

By using essentially the same composition and procedure as in Example 49, while changing the 1.07g Zr(NO₃)₄.5H₂O in Example 49 to 1.49g of Mg(NO₃)₂.6H₂O, a final product was obtained. The product was determined by XRD to be the MgAPSO-35 molecular sieve. Its water adsorption capacity was measured to be 33.3 wt% at 25°C.

### Example 56

### (Preparation of LaAPSO-35)

By using essentially the same composition and procedure as in Example 49, while changing the 1.07g Zr(NO₃)₄.5H₂O in Example 49 to 2.17g of La(NO₃)₃.6H₂O, a final product was obtained. The product was determined by XRD to be the LaAPSO-35 molecular sieve. Its water adsorption capacity was measured to be 35.6 wt% at 25°C.

### Example 57

### (Preparation of FAPSO-35)

By using essentially the same composition and procedure as in Example 49, while changing the 1.07g Zr(NO₃)₄.5H₂O in Example 49 to 2.02g of Fe(NO₃)₃.9H₂O, a final product was obtained. The product was determined by XRD to be the FAPSO-35 molecular sieve. Its water adsorption capacity was measured to be 30.8 wt% at 25°C.

### Example 58

### (Preparation of VAPSO-35)

By using essentially the same composition and procedure as in Example 49, while changing the 1.07g Zr(NO₃)₄.5H₂O in Example 49 to 0.59g of NH₄VO₃, a final product was obtained. The product was determined by XRD to be the VAPSO-35 molecular sieve. Its water adsorption capacity was measured to be 32.2 wt% at 25°C.

### Example 59

### (Preparation of CrAPSO-35)

By using essentially the same composition and procedure as in Example 49, while changing the 1.07g Zr(NO₃)₄.5H₂O in Example 49 to 2.00g of Cr(NO₃)₂.9H₂O, a final product was obtained. The product was determined by XRD to be the CrAPSO-35 molecular sieve. Its water adsorption capacity was measured to be 34.4 wt% at 25°C.

### Example 60

### (Preparation of CuAPSO-35)

By using essentially the same composition and procedure as in Example 49, while changing the 1.07g Zr(NO₃)₄.5H₂O in Example 49 to 1.21g Cu(NO₃)₂.3H₂O, a final product was obtained. The product was determined by XRD to be the CuAPSO-35 molecular sieve. Its water adsorption capacity was measured to be 33.1 wt% at 25°C.

### Example 61

### (Preparation of MoAPSO-35)

By using essentially the same composition and procedure as in Example 49, while changing the 1.07g Zr(NO₃)₄.5H₂O and the 7.50g hexamethyleneimine in Example 49 to 0.89g of (NH₄)₆Mo₇O₂₄.4H₂O and a mixture of 2.56g of hexamethyleneimine and 4.67g of diethylamine, respectively, a final product was obtained. The product was determined by XRD to be the MoAPSO-35 molecular sieve. Its water adsorption capacity was measured to be 31.8 wt% at 25°C.

### Example 62

### (Preparation of CaAPSO-35)

By using essentially the same composition and procedure as in Example 49, while changing the 1.07g Zr(NO₃)₄.5H₂O and the 7.50g hexamethyleneimine in Example 49 to 1.19g of Ca(NO₃)₂.3H₂O and a mixture of 4.21g of triethylamine and 2.56g of hexamethyleneimine, respectively, a final product was obtained. The product was determined by XRD to be the CaAPSO-35 molecular sieve. Its water adsorption capacity was measured to be 29.1 wt% at 25°C.

### Example 63

### (Preparation of SrAPSO-35)

By using essentially the same composition and procedure as in Example 49, while changing the 1.07g Zr(NO₃)₄.5H₂O in Example 49 to 1.06g of Sr(NO₃)₂ and the autoclave was sealed after pressurizing it with nitrogen to 0.2Mpa, a final product was obtained. The product was determined by XRD to be the SrAPSO-35 molecular sieve. Its water adsorption capacity was measured to be 30.3 wt% at 25°C.

### Example 64

### (Preparation of BaAPSO-35)

By using essentially the same composition and procedure as in Example 49, while changing the 1.07g Zr(NO₃)₄.5H₂O in Example 49 to 1.31g of Ba(NO₃)₂ and the autoclave was sealed after pressurizing it with nitrogen to 0.2Mpa, a final product was obtained. The product was determined by XRD to be the BaAPSO-35 molecular sieve. Its water adsorption capacity was measured to be 30.8 wt% at 25°C.

### Example 65

### (Preparation of ZrAPSO-35)

A reaction mixture was prepared by combining 3.60g of silica sol (25wt.% SiO₂) under stirring, to which were added 7.06g of diaspore (74.2wt.% Al₂O₃) and 19ml of de-ionized water. Then 11.53g of 85wt.% orthophosphoric acid (H₃PO₄) and 10ml of de-ionized water were added slowly, and stirred for 10min. To this mixture 1.07g of Zr(NO₃)₄·5H₂O(AR) and 10ml of de-ionized water were added, and stirred for 20min. Then a mixture of 3.75g of hexamethyleneimine and 3.75g of cyclohexylamine were added as the templating agent, and the mixture was stirred for 15min until homogeneous.

The mixture was sealed in a autoclave lined with polytetrafluoroethylene, heated at a temperature sufficiently high for 12 hours and crystallized under autogeneous pressure for 2 hours under temperature programmed 50∼200°C. The solid product was recovered by centrifuging and washing with water until neutral, and dried in air at 100°C. XRD analysis of the isolated product established that ZrAPSO-35 molecular sieve was produced. Its water adsorption capacity was 36.0 wt.% at 25°C.

### Example 66

### (Preparation of ZrAPSO-35)

By using essentially the same composition and procedure as in Example 65, while changing the 7.06g of diaspore in Example 65 to 6.80g of pseudoboehmite (75.0wt% Al₂O₃), a final product was obtained. The product was determined by XRD to be the ZrAPSO-35 molecular sieve. Its water adsorption capacity was measured to be 32.2 wt% at 25°C.

### Example 67

### (Preparation of CoAPSO-44)

A reaction mixture was prepared by slowly combining 11.53g of 85wt.% orthophosphoric acid (H₃PO₄) and 14ml of de-ionized water, to which was added 6.88g of diaspore (74.2wt.% Al₂O₃) with stirring until homogeneous. Then 7.2g of silica sol (25wt.% SiO₂) was added, and stirred for 10min. To this mixture 1.25g of Co(CH₃COO)₄·4H₂O(AR) and 12ml of de-ionized water were added, and stirred for 10min. 12ml of cyclohexylamine was added as the templating agent, and the mixture was stirred for 15min until homogeneous. The composition of the final reaction mixture in molar oxide ratios was: 2.5C₆H₁₁NH₂: 0.6SiO₂: Al₂O₃: P₂O₅: 0.05CoO₂: 39H₂O

The gel mixture is radiated in microwave oven for 2 minutes, then the mixture was sealed in a autoclave lined with polytetrafluoroethylene and crystallized under autogeneous pressure for 3 hours under temperature programmed 50∼200°C. The autoclave was then taken out and cooled to room temperature. The solid product was separated from the mother liquid and washed with water until neutral, then dried in air at 100°C. X-ray analysis(Table 38) of the isolated product established that the product was CoAPSO-44 molecular sieve. Its water adsorption capacity was measured to be 32.2 wt.% at 25°C.

**Table 38**

| No. | 2θ | d(Å) | 100× I/I₀ |
|---|---|---|---|
| 1 | 9.400 | 9.4009 | 77 |
| 2 | 12.950 | 6.8307 | 21 |
| 3 | 16.060 | 5.5142 | 52 |
| 4 | 18.930 | 4.6842 | 10 |
| 5 | 20.710 | 4.2854 | 100 |
| 6 | 21.670 | 4.0977 | 26 |
| 7 | 22.600 | 3.9311 | 10 |
| 8 | 23.030 | 3.8587 | 12 |
| 9 | 24.330 | 3.6554 | 70 |
| 10 | 26.150 | 3.4049 | 23 |
| 11 | 27.840 | 3.2020 | 10 |
| 12 | 30.020 | 2.9742 | 20 |
| 13 | 30.840 | 2.8970 | 51 |
| 14 | 35.450 | 2.5301 | 11 |

### Comparison Example 11

By using essentially the same composition and procedure as in Example 67, while changing the 7.2g of silica sol in Example 65 to 1.80g of the same material, a final product was obtained. The product was determined by XRD to be a mixture of TAPSO-17 and TAPSO-44 molecular sieves.

### Comparison Example 12

By using essentially the same composition and procedure as in Example 67, while changing the 7.2g of silica sol in Example 65 to 0.96g of the same material, a final product was obtained. The product was determined by XRD to be the TAPSO-17 molecular sieve.

### Example 68

### (Preparation of MnAPSO-44)

By using essentially the same composition and procedure as in Example 67, while changing the 1.25g of Co(CH₃COO)₄.4H₂O in Example 67 to 1.24g of Mn(CH₃COO)₄.4H₂O, a final product was obtained. The product was determined by XRD(Table 39) to be the MnAPSO-44 molecular sieve. Its water adsorption capacity was measured to be 31.5 wt% at 25°C.

**Table 39**

| No. | 2θ | d(Å) | 100× I/I₀ |
|---|---|---|---|
| 1 | 9.360 | 9.4410 | 80 |
| 2 | 12.890 | 6.8623 | 26 |
| 3 | 15.900 | 5.5382 | 57 |
| 4 | 18.870 | 4.6989 | 9 |
| 5 | 20.640 | 4.2998 | 100 |
| 6 | 21.610 | 4.1089 | 26 |
| 7 | 22.520 | 3.9449 | 11 |
| 8 | 22.970 | 3.8686 | 13 |
| 9 | 24.250 | 3.6673 | 70 |
| 10 | 26.080 | 3.4139 | 24 |
| 11 | 27.740 | 3.2133 | 11 |
| 12 | 29.940 | 2.9820 | 19 |
| 13 | 30.720 | 2.9080 | 47 |
| 14 | 35.370 | 2.5356 | 11 |

### Example 69

### (Preparation of CrAPSO-44)

By using essentially the same composition and procedure as in Example 67, while changing the 1.25g of Co(CH₃COO)₄.4H₂O in Example 67 to 2.00g of Cr(NO₃)₃.4H₂O, a final product was obtained. The product was determined by XRD(Table 40) to be the CrAPSO-44 molecular sieve. Its water adsorption capacity was measured to be 30.8 wt% at 25°C.

**Table 40**

| No. | 2θ | d(Å) | 100× I/I₀ |
|---|---|---|---|
| 1 | 9.410 | 9.3909 | 76 |
| 2 | 12.970 | 6.8202 | 24 |
| 3 | 16.070 | 5.5108 | 52 |
| 4 | 18.930 | 4.6842 | 10 |
| 5 | 20.730 | 4.2813 | 100 |
| 6 | 21.700 | 4.0921 | 30 |
| 7 | 22.600 | 3.9311 | 12 |
| 8 | 23.050 | 3.8554 | 14 |
| 9 | 24.350 | 3.6524 | 74 |
| 10 | 26.190 | 3.3998 | 26 |
| 11 | 27.890 | 3.1963 | 12 |
| 12 | 30.050 | 2.9713 | 22 |
| 13 | 30.870 | 2.8942 | 52 |
| 14 | 35.490 | 2.5273 | 12 |

### Example 70

### (Preparation of CuAPSO-44)

By using essentially the same composition and procedure as in Example 67, while changing the 1.25g of Co(CH₃COO)₄.4H₂O in Example 67 to 1.21g of Cu(NO₃)₃.4H₂O, a final product was obtained. The product was determined by XRD(Table 41) to be the CuAPSO-44 molecular sieve. Its water adsorption capacity was measured to be 28.9 wt% at 25°C.

**Table 41**

| No. | 2θ | d(Å) | 100× I/I₀ |
|---|---|---|---|
| 1 | 9.420 | 9.3810 | 84 |
| 2 | 12.960 | 6.8254 | 20 |
| 3 | 16.080 | 5.5074 | 60 |
| 4 | 18.960 | 4.6768 | 12 |
| 5 | 20.740 | 4.2793 | 99 |
| 6 | 21.690 | 4.0940 | 40 |
| 7 | 23.050 | 3.8554 | 14 |
| 8 | 24.340 | 3.6539 | 100 |
| 9 | 26.190 | 3.3998 | 20 |
| 10 | 27.870 | 3.1986 | 11 |
| 11 | 30.030 | 2.9733 | 31 |
| 12 | 30.870 | 2.8942 | 48 |
| 13 | 35.480 | 2.5280 | 17 |

### Example 71

### (Preparation of VAPSO-44)

By using essentially the same composition and procedure as in Example 67, while changing the 1.25g of Co(CH₃COO)₄.4H₂O in Example 67 to 0.59g of NH₄VO₃, a final product was obtained. The product was determined by XRD(Table 42) to be the VAPSO-44 molecular sieve. Its water adsorption capacity was measured to be 28.5 wt% at 25°C.

**Table 42**

| No. | 2θ | d(Å) | 100× I/I₀ |
|---|---|---|---|
| 1 | 9.420 | 9.3810 | 74 |
| 2 | 12.980 | 6.8150 | 26 |
| 3 | 16.080 | 5.5074 | 49 |
| 4 | 17.290 | 5.1246 | 8 |
| 5 | 18.960 | 4.6768 | 10 |
| 6 | 20.740 | 4.2793 | 100 |
| 7 | 21.680 | 4.0958 | 23 |
| 8 | 22.610 | 3.9294 | 12 |
| 9 | 23.060 | 3.8537 | 16 |
| 10 | 24.350 | 3.6524 | 57 |
| 11 | 26.170 | 3.4024 | 18 |
| 12 | 27.920 | 3.1930 | 10 |
| 13 | 30.040 | 2.9723 | 22 |
| 14 | 30.860 | 2.8952 | 45 |
| 15 | 35.480 | 2.5280 | 14 |

### Example 72

### (Preparation of MoAPSO-44)

By using essentially the same composition and procedure as in Example 67, while changing the 1.25g of Co(CH₃COO)₄.4H₂O in Example 67 to 0.89g of (NH₄)₆Mo₇O₂₄·4H₂O, a final product was obtained. The product was determined by XRD(Table 43) to be the MoAPSO-44 molecular sieve. Its water adsorption capacity was measured to be 28.6 wt% at 25°C.

**Table 43**

| No. | 2θ | d(Å) | 100× I/I₀ |
|---|---|---|---|
| 1 | 9.400 | 9.4009 | 95 |
| 2 | 12.970 | 6.8202 | 29 |
| 3 | 16.050 | 5.5177 | 42 |
| 4 | 18.940 | 4.6817 | 12 |
| 5 | 20.720 | 4.2834 | 100 |
| 6 | 21.680 | 4.0958 | 24 |
| 7 | 23.040 | 3.8570 | 16 |
| 8 | 24.350 | 3.6524 | 100 |
| 9 | 26.140 | 3.4062 | 28 |
| 10 | 30.030 | 2.9733 | 26 |
| 11 | 30.760 | 2.9043 | 44 |
| 12 | 35.470 | 2.5287 | 15 |

### Example 73

### (Preparation of TAPSO-44)

A reaction mixture was prepared by slowly combining 11.53g of 85wt.% orthophosphoric acid (H₃PO₄) and 14ml of de-ionized water, to which was added 6.88g of diaspore (74.2wt.% Al₂O₃) with stirring until homogeneous. Then 7.2g of silica sol (25wt.% SiO₂) was added, and stirred for 10min. To this mixture 1.7ml of tetrabutylorthotitanate (Ti(OC₄H₁₀)₄) and 12ml of de-ionized water was added, and stirred for 10min. Then 12.5ml of cyclohexylamine was added as the templating agent, and the mixture was stirred for 15min until homogeneous. The composition of the final reaction mixture in molar oxide ratios was: 2.5C₆H₁₁NH₂: 0.6SiO₂: Al₂O₃: P₂O₅: 0.05TiO₂: 39H₂O

The gel mixture is radiated in microwave oven for 2 minutes, then the mixture was sealed in a autoclave lined with polytetrafluoroethylene after filled with 0.2MPa N₂, and crystallized for 3 hours under temperature programmed 50∼200°C. The autoclave was then taken out and cooled to room temperature. The solid product was separated from the mother liquid and washed with water until neutral, and dried in air at 100°C. X-ray analysis of the isolated product established that the product was TAPSO-44 molecular sieve (Table 44). Its water adsorption capacity was 33.0 wt.% at 25°C.

**Table 44**

| No. | 2θ | d(Å) | 100× I/I₀ |
|---|---|---|---|
| 1 | 9.410 | 9.3909 | 82 |
| 2 | 12.960 | 6.8254 | 21 |
| 3 | 13.720 | 6.4490 | 5 |
| 4 | 16.070 | 5.5108 | 56 |
| 5 | 17.280 | 5.1276 | 8 |
| 6 | 18.940 | 4.6817 | 10 |
| 7 | 20.720 | 4.2834 | 100 |
| 8 | 21.690 | 4.0940 | 28 |
| 9 | 23.050 | 3.8554 | 14 |
| 10 | 24.350 | 3.6524 | 83 |
| 11 | 26.160 | 3.4037 | 23 |
| 12 | 27.890 | 3.1963 | 9 |
| 13 | 30.040 | 2.9723 | 23 |
| 14 | 30.870 | 2.8942 | 50 |
| 15 | 35.500 | 2.5266 | 13 |

### Example 74

### (Preparation of ZrAPSO-44)

A reaction mixture was prepared by slowly combining 11.53g of 85wt.% orthophosphoric acid (H₃PO₄) and 14ml of de-ionized water, to which was added 7.06g of pseudoboehmite (72.2wt.% Al₂O₃) with stirring until homogeneous. Then 7.2 g of silica sol (25wt.% SiO₂) was added, and stirred for 10min. To this mixture 1.07g of Zr(NO₃)·5H₂O and 12ml of de-ionized water were added and stirred for 10min. Then 12.5ml of cyclohexylamine was added as the templating agent, and the mixture was stirred for 15min until homogeneous. The composition of the final reaction mixture in molar oxide ratios was: 2.5C₆H₁₁NH₂: 0.6SiO₂: Al₂O₃: P₂O₅: 0.05ZrO₂: 39H₂O.

The gel mixture is radiated in microwave oven for 2 minutes, then the mixture was sealed in a autoclave lined with polytetrafluoroethylene, filled with 0.2MPa N_{2,} and crystallized for 3 hours under temperature programmed 50∼200°C. The autoclave was then taken out and cooled to room temperature. The solid product was separated from the mother liquid and washed with water until neutral, and dried in air at 100°C. X-ray analysis of the isolated product established that the product was ZrAPSO-44 molecular sieve(Table 45). Its water adsorption capacity was 34.1wt% at 25°C.

**Table 45**

| No. | 2θ | d(Å) | 100× I/I₀ |
|---|---|---|---|
| 1 | 9.400 | 9.4009 | 80 |
| 2 | 12.940 | 6.8359 | 19 |
| 3 | 16.060 | 5.5142 | 48 |
| 4 | 17.250 | 5.1364 | 12 |
| 5 | 20.710 | 4.2854 | 88 |
| 6 | 21.680 | 4.0958 | 39 |
| 7 | 22.600 | 3.9311 | 14 |
| 8 | 23.030 | 3.8587 | 15 |
| 9 | 24.320 | 3.6569 | 100 |
| 10 | 26.150 | 3.4049 | 23 |
| 11 | 30.010 | 2.9752 | 31 |
| 12 | 30.850 | 2.8961 | 46 |
| 13 | 35.460 | 2.5294 | 15 |

### Example 75

### (Preparation of NiAPSO-44)

By using essentially the same composition and procedure as in Example 74, while changing the 1.07g of Zr(NO₃)·5H₂O in Example 74 to 1.45g of Ni(NO₃)₂·6H₂O (AR, 98%), a final product was obtained. The product was determined by XRD to be the NiAPSO-44 molecular sieve (Table 46). Its water adsorption capacity was measured to be 32.5 wt% at 25°C.

**Table 46**

| No. | 2θ | d(Å) | 100× I/I₀ |
|---|---|---|---|
| 1 | 9.450 | 9.3513 | 67 |
| 2 | 12.990 | 6.8097 | 14 |
| 3 | 16.100 | 5.5006 | 36 |
| 4 | 17.330 | 5.1129 | 10 |
| 5 | 18.970 | 4.6744 | 9 |
| 6 | 20.750 | 4.2773 | 65 |
| 7 | 21.740 | 4.0847 | 29 |
| 8 | 23.080 | 3.8504 | 11 |
| 9 | 24.380 | 3.6480 | 100 |
| 10 | 26.190 | 3.3998 | 18 |
| 11 | 30.070 | 2.9694 | 28 |
| 12 | 30.890 | 2.8924 | 42 |
| 13 | 32.900 | 2.7201 | 9 |
| 14 | 35.510 | 2.5260 | 13 |

### Example 76

### (Preparation of ZnAPSO-44)

By using essentially the same composition and procedure as in Example 74, while changing the 1.07g of Zr(NO₃)·5H₂O in Example 74 to 1.49g of Zn(NO₃)₂·6H₂O (AR), a final product was obtained. The product was determined by XRD to be the ZnAPSO-44 molecular sieve(Table 47). Its water adsorption capacity was measured to be 29.8 wt% at 25°C.

**Table 47**

| No. | 2θ | d(Å) | 100× I/I₀ |
|---|---|---|---|
| 1 | 9.370 | 9.4309 | 86 |
| 2 | 12.930 | 6.8412 | 22 |
| 3 | 16.030 | 5.5245 | 52 |
| 4 | 17.230 | 5.1423 | 9 |
| 5 | 18.900 | 4.6914 | 11 |
| 6 | 20.690 | 4.2895 | 100 |
| 7 | 21.650 | 4.1014 | 26 |
| 8 | 22.570 | 3.9363 | 11 |
| 9 | 23.010 | 3.8620 | 14 |
| 10 | 24.290 | 3.6613 | 93 |
| 11 | 26.120 | 3.4088 | 24 |
| 12 | 27.830 | 3.2031 | 11 |
| 13 | 29.990 | 2.9771 | 24 |
| 14 | 30.830 | 2.8979 | 52 |
| 15 | 35.430 | 2.5315 | 13 |

### Example 77

### (Preparation of FAPSO-44)

By using essentially the same composition and procedure as in Example 74, while changing the 1.07g of Zr(NO₃)·5H₂O and 12.5ml of cyclohexylamine in Example 74 to 2.02g of Fe(NO₃)₃·6H₂O (AR) and 13.1ml tetrabutylammonium hydroxide respectively, a final product was obtained. The product was determined by XRD to be the FAPSO-44 molecular sieve(Table 48). Its water adsorption capacity was measured to be 28.8 wt% at 25°C.

**Table 48**

| No. | 2θ | d(Å) | 100× I/I₀ |
|---|---|---|---|
| 1 | 9.349 | 9.4511 | 79 |
| 2 | 12.900 | 6.8571 | 19 |
| 3 | 16.000 | 5.5348 | 47 |
| 4 | 17.210 | 5.1483 | 10 |
| 5 | 18.880 | 4.6965 | 12 |
| 6 | 20.670 | 4.2936 | 91 |
| 7 | 21.610 | 4.1089 | 31 |
| 8 | 22.530 | 3.9432 | 10 |
| 9 | 22.980 | 3.8670 | . 16 |
| 10 | 24.260 | 3.6658 | 100 |
| 11 | 26.100 | 3.4114 | 21 |
| 12 | 27.800 | 3.2065 | 9 |
| 13 | 29.950 | 2.9810 | 35 |
| 14 | 30.810 | 2.8997 | 53 |
| 15 | 32.760 | 2.7314 | 10 |
| 16 | 35.410 | 2.5329 | 15 |

### Example 78

### (Preparation of MgAPSO-44)

By using essentially the same composition and procedure as in Example 74, while changing the 1.07g of Zr(NO₃)·5H₂O in Example 74 to 1.28g of Mg(NO₃)₂·6H₂O (AR), a final product was obtained. The product was determined by XRD to be the ZnAPSO-44 molecular sieve(Table 49). Its water adsorption capacity was measured to be 33.0 wt% at 25°C.

**Table 49**

| No. | 2θ | d(Å) | 100× I/I₀ |
|---|---|---|---|
| 1 | 9.420 | 9.3810 | 100 |
| 2 | 12.970 | 6.8202 | 20 |
| 3 | 16.070 | 5.5108 | 50 |
| 4 | 18.960 | 4.6768 | 13 |
| 5 | 20.730 | 4.2813 | 99 |
| 6 | 21.690 | 4.0940 | 30 |
| 7 | 23.050 | 3.8554 | 14 |
| 8 | 24.340 | 3.6539 | 93 |
| 9 | 26.190 | 3.3998 | 22 |
| 10 | 30.040 | 2.9723 | 26 |
| 11 | 30.760 | 2.9043 | 38 |
| 12 | 30.860 | 2.8952 | 47 |
| 13 | 35.470 | 2.5287 | 12 |

### Example 79

### (Preparation of CaAPSO-44)

By using essentially the same composition and procedure as in Example 74, while changing the 1.07g of Zr(NO₃)·5H₂O in Example 74 to 0.59g of Ca(NO₃)₂·4H₂O (AR), a final product was obtained. The product was determined by XRD to be the CaAPSO-44 molecular sieve(Table 50). Its water adsorption capacity was measured to be 32.2 wt% at 25°C.

**Table 50**

| No. | 2θ | d(Å) | 100× I/I₀ |
|---|---|---|---|
| 1 | 9.340 | 9.4612 | 69 |
| 2 | 12.910 | 6.8518 | 17 |
| 3 | 16.010 | 5.5313 | 34 |
| 4 | 17.240 | 5.1394 | 12 |
| 5 | 18.870 | 4.6989 | 7 |
| 6 | 20.660 | 4.2957 | 60 |
| 7 | 21.620 | 4.1071 | 23 |
| 8 | 22.980 | 3.8670 | 9 |
| 9 | 24.290 | 3.6613 | 100 |
| 10 | 26.090 | 3.4126 | 16 |
| 11 | 27.810 | 3.2054 | 8 |
| 12 | 29.980 | 2.9781 | 31 |
| 13 | 30.770 | 2.9034 | 29 |
| 14 | 32.930 | 2.7258 | 8 |
| 15 | 35.410 | 2.5329 | 13 |

### Example 80

### (Preparation of SrAPSO-44)

By using essentially the same composition and procedure as in Example 74, while changing the 1.07g of Zr(NO₃)·5H₂O in Example 74 to 0.53g of Sr(NO₃)₂ (AR), a final product was obtained. The product was determined by XRD to be the SrAPSO-44 molecular sieve(Table 51). Its water adsorption capacity was measured to be 30.5 wt% at 25°C.

**Table 51**

| No. | 2θ | d(Å) | 100× I/I₀ |
|---|---|---|---|
| 1 | 9.400 | 9.4009 | 63 |
| 2 | 12.950 | 6.8307 | 16 |
| 3 | 16.060 | 5.5142 | 36 |
| 4 | 17.280 | 5.1276 | 9 |
| 5 | 20.720 | 4.2834 | 77 |
| 6 | 21.680 | 4.0958 | 36 |
| 7 | 23.060 | 3.8537 | 13 |
| 8 | 24.330 | 3.6554 | 100 |
| 9 | 26.150 | 3.4049 | 18 |
| 10 | 27.870 | 3.1986 | 9 |
| 11 | 30.030 | 2.9733 | 33 |
| 12 | 30.740 | 2.9062 | 29 |
| 13 | 30.870 | 2.8942 | 37 |
| 14 | 35.470 | 2.5287 | 12 |

### Example 81

### (Preparation of BaAPSO-44)

By using essentially the same composition and procedure as in Example 74, while changing the 1.07g of Zr(NO₃)·5H₂O in Example 74 to 0.65g of Ba(NO₃)₂ (AR), a final product was obtained. The product was determined by XRD to be the BaAPSO-44 molecular sieve(Table 52). Its water adsorption capacity was measured to be 31.8 wt% at 25°C.

**Table 52**

| No. | 2θ | d(Å) | 100× I/I₀ |
|---|---|---|---|
| 1 | 9.410 | 9.3909 | 65 |
| 2 | 12.940 | 6.8359 | 15 |
| 3 | 16.080 | 5.5074 | 41 |
| 4 | 20.740 | 4.2793 | 81 |
| 5 | 21.700 | 4.0921 | 23 |
| 6 | 23.050 | 3.8554 | 14 |
| 7 | 24.350 | 3.6524 | 100 |
| 8 | 26.170 | 3.4024 | 24 |
| 9 | 30.020 | 2.9742 | 25 |
| 10 | 30.740 | 2.9062 | 30 |
| 11 | 30.880 | 2.8933 | 41 |
| 12 | 35.490 | 2.5273 | 13 |

### Example 82

### (Preparation of LaAPSO-44)

By using essentially the same composition and procedure as in Example 74, while changing the 1.07g of Zr(NO₃)·5H₂O in Example 74 to 2.17g of La(NO₃)₃·6H₂O (AR), a final product was obtained. The product was determined by XRD to be the LaAPSO-44 molecular sieve(Table 53). Its water adsorption capacity was measured to be 31.3 wt% at 25°C.

**Table 53**

| No. | 2θ | d(Å) | 100× I/I₀ |
|---|---|---|---|
| 1 | 9.400 | 9.4009 | 80 |
| 2 | 12.970 | 6.8202 | 20 |
| 3 | 16.070 | 5.5108 | 61 |
| 4 | 18.940 | 4.6817 | 10 |
| 5 | 20.730 | 4.2813 | 100 |
| 6 | 21.690 | 4.0940 | 34 |
| 7 | 22.600 | 3.9311 | 10 |
| 8 | 23.050 | 3.8554 | 13 |
| 9 | 24.330 | 3.6554 | 90 |
| 10 | 26.170 | 3.4024 | 20 |
| 11 | 27.870 | 3.1986 | 10 |
| 12 | 30.030 | 2.9733 | 34 |
| 13 | 30.880 | 2.8933 | 54 |
| 14 | 32.860 | 2.7234 | 9 |
| 15 | 35.460 | 2.5294 | 13 |

### Example 83

### (Preparation of SAPO-56)

A reaction mixture was prepared by orderly combining 10.40g of silica sol (40wt.% SiO₂) and 26.28g of 85wt.% orthophosphoric acid (H₃PO₄), to which was added 12.75g of activated alumina (73.0wt.% Al₂O₃) and 75ml of de-ionized water. To this mixture 40g of N', N', N, N-tetramethyl-1,6-hexanediamine was added as the templating agent, and the mixture was stirred until homogeneous.

The gel mixture is radiated in microwave oven for 2 minutes, then the mixture was sealed in a autoclave lined with polytetrafluoroethylene and crystallized under autogeneous pressure for 2 hours under temperature programmed 50∼200°C. The solid product was recovered by centrifuging and washed with water until neutral, then dried in air at 100°C, the SAPO-56 had been produced. The above product has an X-ray powder diffraction pattern characterized by the following data(Table 54):

**Table 54**

| No. | 2θ | d(Å) | 100× I/I₀ |
|---|---|---|---|
| 1 | 7.380 | 11.9689 | 18 |
| 2 | 8.610 | 10.2616 | 58 |
| 3 | 11.530 | 7.6686 | 56 |
| 4 | 12.840 | 6.8890 | 35 |
| 5 | 15.490 | 5.7158 | 36 |
| 6 | 17.310 | 5.1188 | 44 |
| 7 | 17.720 | 5.0012 | 65 |
| 8 | 20.180 | 4.3968 | 78 |
| 9 | 21.610 | 4.1089 | 100 |
| 10 | 21.960 | 4.0442 | 24 |
| 11 | 23.440 | 3.7921 | 36 |
| 12 | 25.870 | 3.4412 | 36 |
| 13 | 27.780 | 3.2088 | 67 |
| 14 | 29.900 | 2.9859 | 24 |
| 15 | 30.320 | 2.9455 | 38 |
| 16 | 31.310 | 2.8546 | 33 |
| 17 | 33.430 | 2.6782 | 27 |
| 18 | 34.470 | 2.5998 | 19 |

### Example 84

### (Preparation of TAPSO-56)

Reaction mixture A was prepared by orderly combining 10.40g of silica sol (40wt.% SiO₂) and 26.28g of 85wt.% orthophosphoric acid (H₃PO₄), to which was added 12.10g of activated alumina (73.0wt.% Al₂O₃) and 70ml of de-ionized water and stirred until homogeneous. Solution B was prepared by combining 2.85g of Ti(SO₄)₂ (96wt.%) and 5ml of de-ionized water and stirring until homogeneous. Solusion B was added to mixture A with intensively stirring for all of 30min. To this mixture 40g of N', N', N, N-tetramethyl-1, 6-hexanediamine was added as the templating agent, and the mixture was stirred until homogeneous.

The gel mixture is radiated in microwave oven for 2 minutes, then the mixture was sealed in a autoclave lined with polytetrafluoroethylene and crystallized under autogeneous pressure for 2 hours under temperature programmed 50∼200°C. The solid product was recovered by centrifuging and washed with water until neutral, then dried in air at 100°C, the TAPSO-56 molecular sieve had been produced. The above product has an X-ray powder diffraction pattern characterized by the following data in Table 55.

**Table 55**

| No. | 2θ | d(Å) | 100× I/I₀ |
|---|---|---|---|
| 1 | 7.340 | 12.0341 | 20 |
| 2 | 8.559 | 10.3215 | 64 |
| 3 | 11.480 | 7.7018 | 61 |
| 4 | 12.790 | 6.9158 | 35 |
| 5 | 15.440 | 5.7342 | 35 |
| 6 | 17.260 | 5.1335 | 42 |
| 7 | 17.680 | 5.0125 | 47 |
| 8 | 19.650 | 4.5141 | 18 |
| 9 | 20.140 | 4.4054 | 79 |
| 10 | 21.570 | 4.1165 | 100 |
| 11 | 23.410 | 3.7969 | 32 |
| 12 | 25.840 | 3.4451 | 36 |
| 13 | 27.760 | 3.2110 | 60 |
| 14 | 30.280 | 2.9493 | 36 |
| 15 | 31.270 | 2.8581 | 30 |
| 16 | 33.410 | 2.6798 | 26 |
| 17 | 34.440 | 2.6020 | 15 |

### Comparison Example 13

By using essentially the same composition and procedure as in Example 84, while changing the 40g of N', N', N, N-tetramethyl-1, 6-hexanediamine in Example 84 to 10g of the same material. The proportion of the template and Al₂O₃ was 0.62g. A final product was obtained. The product was determined by XRD to be TAPSO-11 molecular sieve. The product has an X-ray powder diffraction pattern characterized by the following data(Table 56).

**Table 56**

| No. | 2θ | d(Å) | 100× I/I₀ |
|---|---|---|---|
| 1 | 8.070 | 10.9470 | 20 |
| 2 | 9.450 | 9.3513 | 56 |
| 3 | 13.200 | 6.7019 | 24 |
| 4 | 15.700 | 5.6399 | 47 |
| 5 | 20.510 | 4.3268 | 77 |
| 6 | 21.050 | 4.2170 | 93 |
| 7 | 22.760 | 3.9039 | 91 |
| 8 | 23.240 | 3.8243 | 100 |
| 9 | 24.780 | 3.5900 | 29 |
| 10 | 26.700 | 3.3360 | 30 |
| 11 | 28.740 | 3.1037 | 33 |
| 12 | 33.020 | 2.7105 | 25 |

### Example 85

### (Preparation of FAPSO-56)

Reaction mixture A was prepared by orderly combining 12.80g of silica sol (40wt.% SiO₂) and 19.50g of 85wt.% orthophosphoric acid (H₃PO₄), to which was added 15.90g of activated alumina (73.0wt.% Al₂O₃) and 70ml of de-ionized water and stirred until homogeneous. Solution B was prepared by combining 2.85g of Fe₂(SO₄)₃ (96wt.%) and 5ml of de-ionized water and stirring until homogeneous. Solution B was added to mixture A with intensively stirring for all of 30min. To this mixture 40g of N', N', N, N-tetramethyl-1, 6-hexanediamine was added as the templating agent, and the mixture was stirred until homogeneous.

The mixture was sealed in a autoclave lined with polytetrafluoroethylene, heated at a temperature sufficiently high for 12 hours and crystallized under autogeneous pressure for 2 hours under temperature programmed 50∼200°C. The solid product was recovered by centrifuging and washed with water until neutral, then dried in air at 100°C, the FAPSO-56 had been produced. The above product has an X-ray powder diffraction pattern characterized by the following data in Table 57.

**Table 57**

| No. | 2θ | d(Å) | 100× I/I₀ |
|---|---|---|---|
| 1 | 7.360 | 12.0041 | 14 |
| 2 | 8.559 | 10.3215 | 49 |
| 3 | 11.480 | 7.7018 | 60 |
| 4 | 12.810 | 6.9050 | 28 |
| 5 | 15.450 | 5.7306 | 28 |
| 6 | 17.270 | 5.1305 | 40 |
| 7 | 17.700 | 5.0068 | 100 |
| 8 | 19.660 | 4.5119 | 15 |
| 9 | 20.150 | 4.4032 | 65 |
| 10 | 21.580 | 4.1146 | 76 |
| 11 | 23.420 | 3.7953 | 45 |
| 12 | 25.840 | 3.4451 | 35 |
| 13 | 27.770 | 3.2099 | 98 |
| 14 | 29.870 | 2.9888 | 21 |
| 15 | 30.280 | 2.9493 | 31 |
| 16 | 31.280 | 2.8572 | 26 |
| 17 | 33.420 | 2.6790 | 27 |
| 18 | 34.460 | 2.6005 | 17 |

### Example 86

### (Preparation of ZrAPSO-56)

By using essentially the same composition and procedure as in Example 84, while changing the 2.85g of Ti(SO₄)₂ (96wt.%) and 5ml of de-ionized water in preparing solution B and 40g of N', N', N, N-tetramethyl-1, 6-hexanediamine as the templating agent in Example 84 to 3.71g of ZrOCl₂·8H₂O (99wt.%) and 5ml of de-ionized water and a mixture of 20g of N', N', N, N-tetramethyl-1, 6-hexanediamine and 13g of tripropylamine respectively, a final product was obtained. The product was ZrAPSO-56 molecular sieve. The above product has an X-ray powder diffraction pattern characterized by the following data in Table 58.

**Table 58**

| No. | 2θ | d(Å) | 100× I/I₀ |
|---|---|---|---|
| 1 | 7.360 | 11.9851 | 21 |
| 2 | 8.580 | 10.2855 | 61 |
| 3 | 11.510 | 7.6855 | 63 |
| 4 | 12.820 | 6.8997 | 40 |
| 5 | 15.480 | 5.7269 | 35 |
| 6 | 17.280 | 5.1246 | 46 |
| 7 | 17.700 | 5.0125 | 67 |
| 8 | 20.180 | 4.3968 | 77 |
| 9 | 21.610 | 4.1089 | 100 |
| 10 | 23.430 | 3.7937 | 39 |
| 11 | 25.890 | 3.4386 | 44 |
| 12 | 27.750 | 3.2122 | 78 |
| 13 | 30.330 | 2.9445 | 37 |
| 14 | 31.340 | 2.8519 | 36 |
| 15 | 33.420 | 2.6790 | 29 |
| 16 | 34.500 | 2.5976 | 22 |
| 17 | 50.650 | 1.8008 | 18 |

### Example 87

### (Preparation of MnAPSO-56)

By using essentially the same composition and procedure as in Example 84, while changing the 2.85g of Ti(SO₄)₂ (96wt.%) and 5ml of de-ionized water in preparing solution B and 40g of N', N', N, N-tetramethyl-1, 6-hexanediamine as the templating agent in Example 84 to 2.82g of MnAc₂·4H₂O (99wt.%) and 5ml of de-ionized water and a mixture of 10g of N', N', N, N-tetramethyl-1, 6-hexanediamine and 25g of *n*-propylamine respectively, a final product was obtained. The product was MnAPSO-56 molecular sieve. The above product has an X-ray powder diffraction pattern characterized by the following data in Table 59.

**Table 59**

| No. | 2θ | d(Å) | 100× I/I₀ |
|---|---|---|---|
| 1 | 7.380 | 11.9689 | 19 |
| 2 | 8.600 | 10.2735 | 56 |
| 3 | 11.520 | 7.6752 | 58 |
| 4 | 12.830 | 6.8943 | 38 |
| 5 | 14.810 | 5.9767 | 12 |
| 6 | 15.490 | 5.7158 | 37 |
| 7 | 17.290 | 5.1246 | 44 |
| 8 | 17.710 | 5.0040 | 68 |
| 9 | 19.660 | 4.5119 | 19 |
| 10 | 20.170 | 4.3989 | 81 |
| 11 | 21.600 | 4.1108 | 100 |
| 12 | 21.940 | 4.0479 | 22 |
| 13 | 23.450 | 3.7905 | 37 |
| 14 | 25.860 | 3.4425 | 37 |
| 15 | 27.790 | 3.2076 | 71 |
| 16 | 29.900 | 2.9859 | 25 |
| 17 | 30.280 | 2.9493 | 39 |
| 18 | 31.300 | 2.8554 | 33 |
| 19 | 33.440 | 2.6774 | 29 |
| 20 | 34.470 | 2.5998 | 20 |

### Example 88

### (Preparation of CoAPSO-56)

By using essentially the same composition and procedure as in Example 84, while changing the 2.85g of Ti(SO₄)₂ (96wt.%) and 5ml of de-ionized water in preparing solution B in Example 84 to 2.05g of CoAc₂·4H₂O (99.5wt.%) and 5ml of de-ionized water, a final product was obtained. The product was CoAPSO-56 molecular sieve.

### Example 89

### (Preparation of NiAPSO-56)

By using essentially the same composition and procedure as in Example 84, while changing the 2.85g of Ti(SO₄)₂ (96wt.%) and 5ml of de-ionized water in preparing solution B in Example 84 to 2.45g of Ni(NO₃)₂·6H₂O (98wt.%) and 5ml of de-ionized water, a final product was obtained. The product was NiAPSO-56 molecular sieve.

### Example 90

### (Preparation of CuAPSO-56)

By using essentially the same composition and procedure as in Example 84, while changing the 2.85g of Ti(SO₄)₂ (96wt.%) and 5ml of de-ionized water in preparing solution B in Example 84 to 3.05g of CuSO₄·6H₂O (98wt.%) and 5ml of de-ionized water, a final product was obtained. The product was CuAPSO-56 molecular sieve.

### Example 91

### (Preparation of TCuAPSO-56)

By using essentially the same composition and procedure as in Example 84, while changing the 2.85g of Ti(SO₄)₂ (96wt.%) and 5ml of de-ionized water in preparing solution B in Example 84 to 1.42g of Ti(SO₄)₂ (96wt.%) and 1.52g of CuSO₄·6H₂O (98wt.%) and 5ml of de-ionized water, a final product was obtained. The product was TCuAPSO-56 molecular sieve.

### Example 92

A portion of solid product of Example 84 was placed in crucible pot and calcined in air at 550°C for no less than 1, preferred 3-8 hours. The calcined sample was quantified exactly and placed in the desiccator that was loaded with the saturated NaCI solution at room temperature for 24 hours. The value of saturated water adsorption capacity was measured by the changed weight of the calcined sample. The experiment indicated that the water adsorption capacity of TAPSO-56 molecular sieve was 29.6%.

### Example 93

### (Catalytic reaction)

The primary powder of synthesized MeAPSO-17 molecular sieves of Example 1∼16 were calcined in air at 550°C for 5 hours, thus the microporous MeAPSO-17 molecular sieves were obtained, which can be used as catalysts. The MTO(*Methanol to olefins*) reactions were performed with reaction temperature of 450°C. The weight hour's space velocity of methanol was 2h⁻¹. The results showed that the conversion of methanol was 100% and the selectivity of C₂⁼-C₃⁼ was the following data in Table 60.

**Table 60**

| Samples | C₂⁼∼C₃⁼(wt%) |
|---|---|
| TAPSO-17 | 56.84 |
| VAPSO-17 | 56.28 |
| CrAPSO-17 | 53.44 |
| ZrAPSO-17 | 53.32 |
| MgAPSO-17 | 52.55 |
| CaAPSO-17 | 52.10 |
| SrAPSO-17 | 48.55 |
| BaAPSO-17 | 48.47 |
| FAPSO-17 | 46.78 |
| CoAPSO-17 | 48.65 |
| NiAPSO-17 | 55.62 |
| CuAPSO-17 | 47.87 |
| ZnAPSO-17 | 57.84 |
| MnAPSO-17 | 49.81 |
| MoAPSO-17 | 46.24 |
| LaAPSO-17 | 51.22 |

### Example 94

The primary powder of synthesized ZrAPSO-18 molecular sieves of Example 21 The Sample of Example 21 were calcined in air at 550°C for 4 hours, thus the microporous ZrAPSO-18 molecular sieve was obtained, which can be used as catalyst. Then the catalyst was pressed, crushed and sorted into 20-40 mesh. 1.28g of the sample was placed in a fixed-bed quartz reactor for estimating the catalytic activity of methanol to olefins (MTO) reaction. The MTO reaction was performed with reaction temperature of 450°C. Methanol was carried by N₂, the weight hour's space velocity of which was 2h⁻¹. The products were analyzed by on-line gas chromatogram. The results showed that the conversion of methanol was 100%, the selectivity of C₂⁼-C₃⁼ was upwards of 85%, which indicated that ZrAPSO-18 molecular sieve had high activity on MTO reaction.

### Example 95

### (Catalytic reactions)

The primary powder of synthesized MeAPSO-34 molecular sieves of Example 30∼45 were calcined in air at 550°C for 5 hours, thus the microporous MeAPSO-34 molecular sieves were obtained, which can be used as catalysts. The MTO(*Methanol to olefins*) reactions were performed with reaction temperature of 450°C. The weight hour's space velocity of methanol was about 2h⁻¹. The results showed that the conversions of methanol were 100% and the selectivity of C₂⁼-C₃⁼ were the following data in Table 61.

**Table 61**

| Samples | C₂⁼∼C₃⁼(wt%) |
|---|---|
| ZrAPSO-34 | 89.41 |
| TAPSO-34 | 86.67 |
| CoAPSO-34 | 92.93 |
| MnAPSO-34 | 88.27 |
| NiAPSO-34 | 87.15 |
| ZnAPSO-34 | 91.62 |
| MgAPSO-34 | 91.57 |
| LaAPSO-34 | 88.97 |
| FAPSO-34 | 88.41 |
| VAPSO-34 | 84.96 |
| CrAPSO-34 | 88.06 |
| CuAPSO-34 | 88.45 |
| MoAPSO-34 | 90.07 |
| CaAPSO-34 | 89.90 |
| SrAPSO-34 | 89.92 |
| BaAPSO-34 | 89.40 |

### Example 96

### (Catalytic reactions)

The primary powder of synthesized MeAPSO-35 molecular sieves of Example 49∼64 were calcined in air at 550°C for 5 hours, thus the microporous MeAPSO-35 molecular sieves were obtained, which can be used as catalysts. The MTO(*Methanol to olefins*) reactions were performed with reaction temperature of 450°C. The weight hour's space velocity of methanol was about 2h⁻¹. The results showed that the conversions of methanol were 100% and the selectivity of C₂⁼-C₃⁼ were the following data in Table 62.

**Table 62**

| Samples | C₂⁼∼C₃⁼(wt%) |
|---|---|
| ZrAPSO-35 | 68.44 |
| TAPSO-35 | 66.35 |
| CoAPSO-35 | 64.78 |
| MnAPSO-35 | 64.57 |
| NiAPSO-35 | 62.22 |
| ZnAPSO-35 | 65.88 |
| MgAPSO-35 | 64.35 |
| LaAPSO-35 | 64.21 |
| FAPSO-35 | 63.27 |
| VAPSO-35 | 63.11 |
| CrAPSO-35 | 62.25 |
| CuAPSO-35 | 61.92 |
| MoAPSO-35 | 59.14 |
| CaAPSO-35 | 58.66 |
| SrAPSO-35 | 55.37 |
| BaAPSO-35 | 52.83 |

### Example 97

### (Catalytic reactions)

The primary powder of synthesized MeAPSO-44 molecular sieves of Example 67-82 were calcined in air at 550°C for 5 hours, thus the microporous MeAPSO-44 molecular sieves were obtained, which can be used as catalysts. The MTO(*Methanol to olefins*) reactions were performed with reaction temperature of 450°C. The MTO reactions were performed with reaction temperature of 450°C. The weight hour's space velocity of methanol was about 2h⁻¹. The results showed that the conversions of methanol were 100% and the selectivity of C₂⁼-C₃⁼ were the following data in Table 63.

**Table 63**

| Samples | C₂⁼∼C₃⁼(wt%) |
|---|---|
| CoAPSO-44 | 96.62 |
| MnAPSO-44 | 82.00 |
| CrAPSO-44 | 60.94 |
| CuAPSO-44 | 72.97 |
| VAPSO-44 | 75.61 |
| TAPSO-44 | 64.17 |
| ZrAPSO-44 | 86.08 |
| NiAPSO-44 | 74.66 |
| ZnAPSO-44 | 70.93 |
| MgAPSO-44 | 82.94 |
| CaAPSO-44 | 91.59 |
| SrAPSO-44 | 84.95 |
| BaAPSO-44 | 83.38 |
| LaAPSO-44 | 86.42 |
| FAPSO-44 | 76.45 |
| MoAPSO-44 | 62.77 |

### Example 98

The primary powder of synthesized TAPSO-56 molecular sieves of Example 84 were calcined in air at 550°C for 5 hours, thus the microporous TAPSO-56 molecular sieves were obtained, which can be used as catalysts. Then the catalyst was pressed, crushed and sorted into 20∼40 mesh. 1.28g of the sample was placed in a fixed-bed quartz reactor for estimating the catalytic activity of methanol to olefins (MTO) reaction. The MTO reaction was performed with reaction temperature of 450°C. Methanol was carried by N₂, the weight hour's space velocity of which was 2h⁻¹. The products were analyzed by on-line gas chromatogram. The results showed that the conversion of methanol was 100%, the selectivity of C₂⁼-C₃⁼ was upwards of 70%, which indicated that TAPSO-56 molecular sieve had high activity on MTO reaction.

According to the results of the above full-scale tests and reference tests, we can conclude conveniently that MeAPSOs molecular sieves could be fast synthesized by the use of the above templating agents and by microwave preparation of the mixture gel and by hydrothermal crystallization at programmed temperature. Because the processes are simple and the technological conditions can be controlled easily, the processes are suitable for use in the commercial scale. Additionally, after calcination, MeAPSO molecular sieves can be used as absorbents or catalysts (for example, the reaction of catalytic cracking, polymerization, reforming, alkylation, dealkylation, oxidation, transalkyation, isomerization, hydrocyclization, dehydrogenation, and hydrogenation, etc.). Especially in the process of MTO reaction, the catalytic activity and selectivity are very high, which illustrated that these MeAPSO molecular sieves were promising to be used in a commercial scale.

## Claims

1. A class of microporous metal-containing silicoaluminophosphate molecular sieves whose as-synthesized chemical composition on an anhydrous basis is:
mR·(M_{q}SiₓAl_{y}P_{z})O₂
wherein:
*"R"* represents the templating agent presented in the intracrystalline pore system;
*"m"* is the molar amount of *"R"* per mole of (M_{q}SiₓAl_{y}P_{z})O₂ and has a value from 0.01 to 8.00;
"M" represents at least one metal element selected from the group consisting of Zr, V, Fe, Cu, Zn, Mo, Ca, Sr, Ba and La;
*"q", "x ", "y"* and *"z"* represent the molar fractions of metal, silicon, aluminum and phosphorus respectively whose variations are q=0∼0.98, x=0.01∼0.98, y=0.01∼0.60, z=0.01∼0.60 and q+*x*+*y*+*z*=1,
wherein the metal-containing silicoaluminophosphate molecular sieves are selected from the group consisting of MeAPSO-17, MeAPSO-18, MeAPSO-34, MeAPSO-35, MeAPSO-44, MeAPSO-56 and wherein the metal atoms at least in part exist in the framework of the molecular sieve in the form of Me02 tetrahedra.

2. The molecular sieves according to claim 1 wherein the metal-containing silicoaluminophosphate(MeAPSO-17) has a characteristic X-ray powder diffraction pattern containing at least the d-spacing which corresponds to the five main peaks set forth in Table I.
**Table I**
| No. | 2θ | d(Å) | Relative Intensity |
|---|---|---|---|
| 1 | 7.56-7.75 | 11.68-11.60 | vs |
| 2 | 13.18-13.25 | 6.69-6.60 | s-vs |
| 3 | 15.26-15.38 | 5.77-5.65 | w-m |
| 4 | 19.44-19.48 | 4.58-4.46 | w-m |
| 5 | 20.32-20.42 | 4.37-4.25 | vs |

3. The molecular sieves according to claim 1 wherein the metal-containing silicoaluminophosphate(MeAPSO-18) has a characteristic X-ray powder diffraction pattern containing at least the d-spacing which corresponds to the five main peaks set forth in Table II.
**Table II**
| No. | 2θ | d(Å) | Relative Intensity |
|---|---|---|---|
| 1 | 9.43-9.51 | 9.37-9.29 | vs |
| 2 | 10.50-10.86 | 8.42-8.14 | w |
| 3 | 16.88-16.95 | 5.25-5.22 | m-s |
| 4 | 19.56-20.06 | 4.53-4.42 | w |
| 5 | 20.46-20.82 | 4.34-4.26 | m |

4. The molecular sieves according to claim 1 wherein the metal-containing silicoaluminophosphate(MeAPSO-34) has a characteristic X-ray powder diffraction pattern containing at least the d-spacing which corresponds to the five main peaks set forth in Table III.
**Table III**
| No. | 2θ | d(Å) | Relative Intensity |
|---|---|---|---|
| 1 | 9.41-9.46 | 9.39-9.34 | vs |
| 2 | 15.93-15.97 | 5.56-5.54 | w-m |
| 3 | 17.80-17.93 | 4.98-4.94 | w |
| 4 | 20.48-20.53 | 4.33-4.32 | m-s |
| 5 | 25.02-25.16 | 3.55-3.53 | w |

5. The molecular sieves according to claim 1 wherein the metal-containing silicoaluminophosphate (MeAPSO-35) has a characteristic X-ray powder diffraction pattern containing at least the d-spacing which corresponds to the five main peaks set forth in Table IV.
**Table IV**
| No. | 2θ | d(Å) | Relative Intensity |
|---|---|---|---|
| 1 | 8.52-8.59 | 10.37-10.28 | w |
| 2 | 10.84-10.93 | 8.15-8.09 | m-s |
| 3 | 13.22-13.30 | 6.69-6.65 | w-m |
| 4 | 17.17-17.27 | 5.16-5.13 | s |
| 5 | 21.78-21.88 | 4.08-4.05 | vs |

6. The molecular sieves according to claim 1 wherein the metal-containing silicoaluminophosphate (MeAPSO-44) has a characteristic X-ray powder diffraction pattern containing at least the d-spacing which corresponds to the five main peaks set forth in Table V.
**Table V**
| No. | 2θ | d(Å) | Relative Intensity |
|---|---|---|---|
| 1 | 9.37-9.42 | 9.43-9.38 | s |
| 2 | 16.03-16.08 | 5.52-5.50 | m |
| 3 | 20.69-20.74 | 4.29-4.28 | vs |
| 4 | 24.29-24.35 | 3.66-3.65 | vs |
| 5 | 30.83-30.86 | 2.90-2.89 | s-vs |

7. The molecular sieves according to claim 1 wherein the metal-containing silicoaluminophosphate(MeAPSO-56) has a characteristic X-ray powder diffraction pattern containing at least the d-spacing which corresponds to the five main peaks set forth in Table VI.
**Table VI**
| No. | 2θ | d(Å) | Relative Intensity |
|---|---|---|---|
| 1 | 7.34-7.38 | 12.03-11.97 | w |
| 2 | 11.48-11.52 | 7.70-7.67 | m-s |
| 3 | 17.68-17.71 | 5.01-5.00 | m-s |
| 4 | 20.14-20.17 | 4.41-4.40 | s-vs |
| 5 | 21.57-21.60 | 4.12-4.11 | vs |

8. The molecular sieves according to claim 1 wherein the zirconium-containing silicoaluminophosphate (ZrAPSO-17) has a characteristic X-ray powder diffraction pattern containing at least the d-spacing which corresponds to the five main peaks set forth in Table VII.
**Table VII**
| No. | 2θ | d(Å) | Relative Intensity |
|---|---|---|---|
| 1 | ∼7.75 | ∼11.60 | vs |
| 2 | ∼13.25 | ∼6.60 | s-vs |
| 3 | ∼15.38 | ∼5.65 | w-m |
| 4 | ∼19.48 | ∼3.46 | m |
| 5 | ∼20.42 | -4.26 | vs |

9. The molecular sieves according to claim 1 wherein the vanadium-containing silicoaluminophosphate (VAPSO-17) has a characteristic X-ray powder diffraction pattern containing at least the d-spacing which corresponds to the five main peaks set forth in Table VIII
**Table VIII**
| No. | 2θ | d(Å) | Relative Intensity |
|---|---|---|---|
| 1 | ∼7.57 | ∼11.66 | vs |
| 2 | ∼13.22 | ∼6.70 | s-vs |
| 3 | ∼15.30 | ~5.79 | w-m |
| 4 | ∼20.32 | ∼4.37 | s-vs |
| 5 | ∼21.21 | ~4.19 | m |

10. The molecular sieves according to claim 1 wherein the zirconium-containing silicoaluminophosphate (ZrAPSO-18) has a characteristic X-ray powder diffraction pattern containing at least the d-spacing which corresponds to the five main peaks set forth in Table X
**Table X**
| No. | 2θ | d(Å) | Relative Intensity |
|---|---|---|---|
| 1 | ∼9.45 | ∼9.35 | vs |
| 2 | ∼10.54 | ∼8.39 | w |
| 3 | ∼16.91 | ∼5.24 | s |
| 4 | ∼20.02 | ∼4.43 | w |
| 5 | ∼20.51 | ∼4.33 | w-m |

11. The molecular sieves according to claim 1 wherein the nickel-containing silicoaluminophosphate (NiAPSO-18) has a characteristic X-ray powder diffraction pattern containing at least the d-spacing which corresponds to the five main peaks set forth in Table XV
**Table XV**
| No. | 2θ | d(Å) | Relative Intensity |
|---|---|---|---|
| 1 | ∼9.45 | ∼9.35 | vs |
| 2 | ∼15.96 | ∼5.55 | w-m |
| 3 | ~16.88 | ∼5.25 | w-m |
| 4 | ~20.51 | ∼4.33 | w-m |
| 5 | ∼21.29 | ∼4.17 | w |

12. The molecular sieves according to claim 1 wherein the iron-containing aluminophosphate (FeAPO-18) has a characteristic X-ray powder diffraction pattern containing at least the d-spacing which corresponds to the five main peaks set forth in Table XVI
**Table XVI**
| No. | 2θ | d(Å) | Relative Intensity |
|---|---|---|---|
| 1 | ∼9.51 | ∼9.29 | vs |
| 2 | ∼15.56 | ∼5.69 | w |
| 3 | ∼16.95 | ∼5.23 | s |
| 4 | ∼20.82 | ∼4.26 | m |
| 5 | ∼21.78 | ∼4.08 | w |

13. The molecular sieves according to claim 1 wherein the zinc-containing silicoaluminophosphate (ZnAPSO-18) has a characteristic X-ray powder diffraction pattern containing at least the d-spacing which corresponds to the five main peaks set forth in Table XVII
**TableXVII**
| No. | 2θ | d(Å) | Relative Intensity |
|---|---|---|---|
| 1 | ∼9.43 | ∼9.37 | vs |
| 2 | ∼15.92 | ∼5.56 | m |
| 3 | ∼16.88 | ∼5.25 | s |
| 4 | ∼20.46 | ∼4.34 | w |
| 5 | ∼21.24 | ∼4.18 | w |

14. The molecular sieves according to claim 1 wherein the zirconium-containing silicoaluminophosphate (ZrAPSO-34) has a characteristic X-ray powder diffraction pattern containing at least the d-spacing which corresponds to the five main peaks set forth in Table XVIII.
**Table XVIII**
| No. | 2θ | d(Å) | Relative Intensity |
|---|---|---|---|
| 1 | 9.40-9.66 | 9.40-9.15 | vs |
| 2 | 15.92-16.20 | 5.56-5.46 | w-m |
| 3 | 16.86-17.04 | 5.25-5.20 | w |
| 4 | 20.46-20.75 | 4.33-4.28 | m-s |
| 5 | 21.07-21.38 | 4.21-4.15 | w |

15. The molecular sieves according to claim 1 wherein the zirconium-containing aluminophosphate (ZrAPO-34) has a characteristic X-ray powder diffraction pattern containing at least the d-spacing which corresponds to the five main peaks set forth in Table XIX.
**Table XIX**
| No. | 2θ | d(Å) | Relative Intensity |
|---|---|---|---|
| 1 | ∼9.61 | ∼9.19 | vs |
| 2 | ∼16.91 | ∼5.24 | w-m |
| 3 | ∼17.84 | ∼4.97 | w |
| 4 | ∼20.18 | ∼4.40 | w |
| 5 | ∼21.10 | ∼4.21 | w |

16. The molecular sieves according to claim 1 wherein the vanadium-containing silicoaluminophosphate (VAPSO-34) has a characteristic X-ray powder diffraction pattern containing at least the d-spacing which corresponds to the five main peaks set forth in Table XX
**Table XX**
| No. | 2θ | d(Å) | Relative Intensity |
|---|---|---|---|
| 1 | ∼9.45 | ∼9.35 | v |
| 2 | ∼15.96 | ∼5.55 | w |
| 3 | ∼16.83 | ∼5.26 | vw |
| 4 | ∼20.51 | ∼4.33 | m |
| 5 | ∼21.47 | ∼4.13 | vs |

17. The molecular sieves according to claim 1 wherein the copper-containing silicoaluminophosphate (CuAPSO-34) has a characteristic X-ray powder diffraction pattern containing at least the d-spacing which corresponds to the five main peaks set forth in Table XXI
**Table XXI**
| | No. 2θ | d(Å) | Relative Intensity |
|---|---|---|---|
| 1 | ∼9.45 | ∼9.35 | vs |
| 2 | ∼15.97 | ∼5.54 | w |
| 3 | ∼17.90 | ∼4.95 | vw |
| 4 | ∼20.52 | ∼4.32 | m-s |
| 5 | ∼21.14 | ∼4.20 | vw |

18. The molecular sieves according to claim 1 wherein the lanthanum-containing silicoaluminophosphate (LaAPSO-34) has a characteristic X-ray powder diffraction pattern containing at least the d-spacing which corresponds to the five main peaks set forth in Table XXII
**Table XXII**
| No. | 2θ | d(Å) | Relative Intensity |
|---|---|---|---|
| 1 | ∼9.42 | ∼9.38 | vs |
| 2 | ∼15.93 | ∼5.56 | w |
| 3 | ∼16.94 | ∼5.23 | vw |
| 4 | ∼20.48 | ∼4.33 | m-s |
| 5 | ∼21.27 | ∼4.17 | vw |

19. The molecular sieves according to claim 1 wherein the molybdenum-containing silicoaluminophosphate (MoAPSO-34) has a characteristic X-ray powder diffraction pattern containing at least the d-spacing which corresponds to the five main peaks set forth in Table XXIII
**Table XXIII**
| No. | 2θ | d(Å) | Relative Intensity |
|---|---|---|---|
| 1 | ∼9.41 | ∼9.39 | vs |
| 2 | ∼15.92 | ∼5.56 | m |
| 3 | ∼16.89 | ∼5.24 | vw |
| 4 | ∼20.48 | ∼4.33 | m-s |
| 5 | ∼21.25 | ∼4.18 | vw |

20. The molecular sieves according to claim 1 wherein the zirconium-containing silicoaluminophosphate (ZrAPSO-35) has a characteristic X-ray powder diffraction pattern containing at least the d-spacing which corresponds to the five main peaks set forth in Table XXIV.
**Table XXIV**
| No. | 2θ | d(Å) | Relative Intensity |
|---|---|---|---|
| 1 | ∼8.59 | ∼10.28 | w |
| 2 | ∼10.93 | ∼8.09 | m |
| 3 | ∼13.30 | ∼6.65 | m |
| 4 | ∼17.27 | ∼5.13 | s |
| 5 | ∼21.88 | ∼4.06 | vs |

21. The molecular sieves according to claim 1 wherein the zirconium-containing silicoaluminophosphate (ZrAPSO-44) has a characteristic X-ray powder diffraction pattern containing at least the d-spacing which corresponds to the five main peaks set forth in Table XXVI
**Table XXVI**
| No. | 2θ | d(Å) | Relative Intensity |
|---|---|---|---|
| 1 | ∼9.40 | ∼9.40 | s-vs |
| 2 | ∼16.06 | ~5.51 | m |
| 3 | ∼20.71 | ∼4.29 | s-vs |
| 4 | ∼24.32 | ∼3.66 | vs |
| 5 | ∼30.85 | ∼2.90 | m |

22. The molecular sieves according to claim 1 wherein the copper-containing silicoaluminophosphate (CuAPSO-44) has a characteristic X-ray powder diffraction pattern containing at least the d-spacing which corresponds to the five main peaks set forth in Table XXVIII
**Table XXVIII**
| No. | 2θ | d(Å) | Relative Intensity |
|---|---|---|---|
| 1 | ∼9.42 | ∼9.38 | s-vs |
| 2 | ∼16.08 | ∼5.51 | m-s |
| 3 | ∼20.74 | ∼4.28 | s-vs |
| 4 | ∼24.34 | ∼3.65 | vs |
| 5 | ∼30.87 | ∼2.89 | m |

23. The molecular sieves according to claim 1 wherein the vanadium-containing silicoaluminophosphate (VAPSO-44) has a characteristic X-ray powder diffraction pattern containing at least the d-spacing which corresponds to the five main peaks set forth in Table XXIX
**Table XXIX**
| No. | 2θ | d(Å) | Relative Intensity |
|---|---|---|---|
| 1 | ∼9.42 | ∼9.38 | s |
| 2 | ∼16.08 | ∼5.51 | m |
| 3 | ∼20.74 | ∼4.28 | vs |
| 4 | ∼24.35 | ∼3.65 | m-s |
| 5 | ∼30.86 | ∼2.89 | m |

24. The molecular sieves according to claim 1 wherein the iron-containing silicoaluminophosphate (FAPSO-44) has a characteristic X-ray powder diffraction pattern containing at least the d-spacing which corresponds to the five main peaks set forth in Table XXXI
**Table XXXI**
| No. | 2θ | d(Å) | Relative Intensity |
|---|---|---|---|
| 1 | ∼9.35 | ∼9.45 | s |
| 2 | ∼16.00 | ∼5.53 | m |
| 3 | ∼20.67 | ∼4.29 | s-vs |
| 4 | ∼24.26 | ∼3.66 | vs |
| 5 | ∼30.81 | ∼2.90 | m |

25. The molecular sieves according to claim 1 wherein the lanthanum-containing silicoaluminophosphate (LaAPSO-44) has a characteristic X-ray powder diffraction pattern containing at least the d-spacing which corresponds to the five main peaks set forth in Table XXXII
**Table XXXII**
| No. | 2θ | d(Å) | Relative Intensity |
|---|---|---|---|
| 1 | ∼9.40 | ∼9.40 | s |
| 2 | ∼16.07 | ∼5.51 | m |
| 3 | ∼20.73 | ∼4.28 | vs |
| 4 | ∼24.33 | ∼3.65 | s |
| 5 | ∼30.88 | ∼2.89 | m |

26. The molecular sieves according to claim 1 wherein the zirconium-containing silicoaluminophosphate (ZrAPSO-56) has a characteristic X-ray powder diffraction pattern containing at least the d-spacing which corresponds to the five main peaks set forth in Table XXXIII.
**Table XXXIII**
| No. | 2θ | d(Å) | Relative Intensity |
|---|---|---|---|
| 1 | ∼7.36 | ∼11.98 | w |
| 2 | ∼11.51 | ∼7.69 | m-s |
| 3 | ∼20.18 | ∼4.40 | s |
| 4 | ∼21.61 | ∼4.11 | vs |
| 5 | ∼27.75 | ∼3.21 | s |

27. The molecular sieves according to claim 1 wherein the iron-containing silicoaluminophosphate (FAPSO-56) has a characteristic X-ray powder diffraction pattern containing at least the d-spacing which corresponds to the five main peaks set forth in Table XXXV.
**Table XXXV**
| No. | 2θ | d(Å) | Relative Intensity |
|---|---|---|---|
| 1 | ∼7.36 | ∼12.00 | vw |
| 2 | ∼11.48 | ∼7.70 | m-s |
| 3 | ∼17.70 | ∼5.00 | vs |
| 4 | ∼21.58 | ∼4.11 | s |
| 5 | ∼27.77 | ∼3.21 | vs |

28. Crystalline metal-silicoaluminophosphate molecular sieves prepared by calcining the primary powder of any one of claim 1-27 at a temperature sufficiently high to remove at least some of the templating agent present in the intracrystalline pore system.

29. The crystalline metal-silicoaluminophosphate molecular sieves according to claim 28 having a three-dimensional microporous framework structure of SiO₂, AlO₂⁻, PO₂⁺ and MeO2 tetrahedral units, and whose essential empirical chemical formula basis is as follows: mR· (M_{q}SiₓAl_{y}P_{z})O₂, wherein *"m*" has a value of zero.

30. The crystalline metal-silicoaluminophosphate molecular sieves according to claim 28 or claim 29 having a characteristic X-ray powder diffraction pattern containing at least the d-spacing set forth in any of Tables I to XXXV in claims 2 to 27.

31. A process for preparing a primary mixture gel of metal-containing silicoaluminophosphate crystalline according to claim 1 comprising a step of mixing proportional silicon source, aluminum source, phosphorus source, metal compound, templating agent and water under stirring.

32. The process according to claim 31 wherein the silicon source is one or more of silica sol, sodium silicate sol, activated silica and orthosilicate ester.

33. The process according to claim 31 wherein the aluminum source is one or more of aluminum salt, aluminate, activated alumina, aluminum alkoxy, diaspore and pseudoboehmite.

34. The process according to claim 31 wherein the phosphorus source is one or more of orthophosphoric acid, phosphate, organic phosphide and phosphoric oxide.

35. The process according to claim 31 wherein the metal compound is one or more of metal oxide, metal oxychloride, metal salts of inorganic and organic acid of Zr, V, Fe, Cu, Zn, Mo, Ca, Sr, Ba and La.

36. The process according to claim 31 wherein the templating agent is one or more kinds of cyclohexylamine, triethylamine, diethylamine, n-propylamine, isopropylamine, n-dipropylamine, diisopropylamine, tripropylamine, n-butylamine, isobutylamine, hexamethyenlaminelidyne, hexanediamine, N, N-diisopropyl ethylamine, N, N-diisopropyl propylamine, N', N', N, N-tetramethyl-(1,6-)hexanediamine, ethanolamine, diethanolamine, triethanolamine, tetramethylammonium hydroxide, tetraethylammonium hydroxide, tetrapropylammonium hydroxide, tetrabutylammonium hydroxide, or the corresponding alcohol.

37. The process according to claim 31 wherein the formula ratio of the ingredients of the mixture gel in the synthesis of the microporous metal silicoaluminophosphate is in the following (the molecular ratio of oxides):
MeOₙ/Al₂O₃ =0.01∼1.0;
SiO₂/Al₂O₃ = 0∼10;
P₂O₅/Al₂O₃ = 0.01∼15;
H₂O/Al₂O₃ = 10∼100;
R/Al₂O₃ = 0.1∼10 (*"R* " is one or a mixture of templating agents).

38. The process according to any one of claims 31 to 37 comprising aging under microwave radiation for 0.1 to 30 minutes.

39. The process according to any one of claims 31 to 37 comprising aging under a temperature sufficiently high for 1 to 24 hours.

40. The process according to any one of claims 31 to 39 wherein the crystallization pressure is at autogenous pressure or 0.1∼0.5MPa of N₂, air or inert gas.

41. The process according to any one of claims 31 to 39 wherein the crystallization temperature is programmed at 50∼250°C.

42. The process according to any one of claims 31 to 39 wherein the crystallization time is 1-24 hours.

43. The metal silicoaluminophosphate molecular sieves (MeAPSOs) according to claim 30 for use in ion exchangers, adsorbents and catalysts.

44. The metal silicoaluminophosphate molecular sieves (MeAPSOs) according to claim 30 for use as a catalyst of methanol to C₂-C₄ olefins.

45. The metal silicoaluminophosphate molecular sieves (MeAPSOs) according to claim 30 for use as a catalyst of dimethyl ether or a mixture of any ratio of methanol and dimethyl ether to C₂-C₄ olefins.

## Patentansprüche

1. Klasse mikroporöser Metall-enthaltender Silicoaluminophosphat-Molekularsiebe, deren chemische Zusammensetzung, wie synthetisiert, auf wasserfreier Basis ist:
mR· (M_{q}SiₓAl_{y}P_{z})O₂
worin:
"R" das Schablonenmittel, das in dem intrakristallinen Porensystem präsentiert wird, darstellt;
"m" die Molmenge von "R" pro Mol (M_{q}SiₓAl_{y}P_{z})O₂ ist und einen Wert von 0,01 bis 8,00 hat;
"M" wenigstens ein Metallelement, ausgewählt aus der Gruppe, bestehend aus Zr, V, Fe, Cu, Zn, Mo, Ca, Sr, Ba und La, darstellt;
"q", "x", "y" und "z" die Molenbrüche von Metall, Silicium, Aluminium bzw. Phosphor darstellen, deren Schwankungen q=0∼0,98, x=0,01∼0,98, y=0,01∼0,60, z=0,01∼0,60 und q+x+y+z=1 sind,
wobei die Metall-enthaltenden Silicoaluminophosphat-Molekularsiebe ausgewählt sind aus der Gruppe, bestehend aus MeAPSO-17, MeAPSO-18, MeAPSO-34, MeAPSO-35, MeAPSO-44, MeAPSO-56, und wobei die Metallatome wenigstens teilweise im Gerüst des Molekularsiebs in der Form von MeO₂-Tetraedern vorliegen.

2. Molekularsiebe gemäß Anspruch 1, wobei das Metallenthaltende Silicoaluminophosphat (MeAPSO-17) ein charakteristisches Pulver-Röntgenbeugungsdiagramm hat, das wenigstens den d-Abstand enthält, der den fünf Hauptpeaks entspricht, die in Tabelle I angegeben sind.
**Tabelle I**
| Nr. | 2θ | d(Å) | relative Intensität |
|---|---|---|---|
| 1 | 7,56-7,75 | 11,68-11,60 | VS |
| 2 | 13,18-13,25 | 6,69-6,60 | S-VS |
| 3 | 15,26-15,38 | 5,77-5,65 | W-M |
| 4 | 19,44-19,48 | 4,58-4,46 | W-M |
| 5 | 20,32-20,42 | 4,37-4,25 | VS |

3. Molekularsiebe gemäß Anspruch 1, wobei das Metallenthaltende Silicoaluminophosphat (MeAPSO-18) ein charakteristisches Pulver-Röntgenbeugungsdiagramm hat, das wenigstens den d-Abstand enthält, der den fünf Hauptpeaks entspricht, die in Tabelle II angegeben sind.
**Tabelle II**
| Nr. | 2θ | d(Å) | relative Intensität |
|---|---|---|---|
| 1 | 9,43-9,51 | 9,37-9,29 | VS |
| 2 | 10,50-10,86 | 8,42-8,14 | W |
| 3 | 16,88-16,95 | 5,25-5,22 | M-S |
| 4 | 19,56-20,06 | 4,53-4,42 | W |
| 5 | 20,46-20,82 | 4,34-4,26 | M |

4. Molekularsiebe gemäß Anspruch 1, wobei das Metallenthaltende Silicoaluminophosphat (MeAPSO-34) ein charakteristisches Pulver-Röntgenbeugungsdiagramm hat, das wenigstens den d-Abstand enthält, der den fünf Hauptpeaks entspricht, die in Tabelle III angegeben sind.
**Tabelle III**
| Nr. | 2θ | d(Å) | relative Intensität |
|---|---|---|---|
| 1 | 9,41-9,46 | 9,39-9,34 | VS |
| 2 | 15,93-15,97 | 5,56-5,54 | W-M |
| 3 | 17,80-17,93 | 4,98-4,94 | W |
| 4 | 20,48-20,53 | 4,33-4,32 | M-S |
| 5 | 25,02-25,16 | 3,55-3,53 | W |

5. Molekularsiebe gemäß Anspruch 1, wobei das Metallenthaltende Silicoaluminophosphat (MeAPSO-35) ein charakteristisches Pulver-Röntgenbeugungsdiagramm hat, das wenigstens den d-Abstand enthält, der den fünf Hauptpeaks entspricht, die in Tabelle IV angegeben sind.
**Tabelle IV**
| Nr. | 2θ | d(Å) | relative Intensität |
|---|---|---|---|
| 1 | 8,52-8,59 | 10,37-10,28 | W |
| 2 | 10,84-10,93 | 8,15-8,09 | M-S |
| 3 | 13,22-13,30 | 6,69-6,65 | W-M |
| 4 | 17,17-17,27 | 5,16-5,13 | S |
| 5 | 21,78-21,88 | 4,08-4,05 | VS |

6. Molekularsiebe gemäß Anspruch 1, wobei das Metallenthaltende Silicoaluminophosphat (MeAPSO-44) ein charakteristisches Pulver-Röntgenbeugungsdiagramm hat, das wenigstens den d-Abstand enthält, der den fünf Hauptpeaks entspricht, die in Tabelle V angegeben sind.
**Tabelle V**
| Nr. | 2θ | d(Å) | relative Intensität |
|---|---|---|---|
| 1 | 9,37-9,42 | 9,43-9,38 | S |
| 2 | 16,03-16,08 | 5,52-5,50 | M |
| 3 | 20,69-20,74 | 4,29-4,28 | VS |
| 4 | 24,29-24,35 | 3,66-3,65 | VS |
| 5 | 30,83-30,86 | 2,90-2,89 | S-VS |

7. Molekularsiebe gemäß Anspruch 1, wobei das Metallenthaltende Silicoaluminophosphat (MeAPSO-56) ein charakteristisches Pulver-Röntgenbeugungsdiagramm hat, das wenigstens den d-Abstand enthält, der den fünf Hauptpeaks entspricht, die in Tabelle VI angegeben sind.
**Tabelle VI**
| Nr. | 2θ | d(Å) | relative Intensität |
|---|---|---|---|
| 1 | 7,34-7,38 | 12,03-11,97 | W |
| 2 | 11,48-11,52 | 7,70-7,67 | M-S |
| 3 | 17,68-17,71 | 5,01-5,00 | M-S |
| 4 | 20,14-20,17 | 4,41-4,40 | S-VS |
| 5 | 21,57-21,60 | 4,12-4,11 | VS |

8. Molekularsiebe gemäß Anspruch 1, wobei das Zirkoniumenthaltende Silicoaluminophosphat (ZrAPSO-17) ein charakteristisches Pulver-Röntgenbeugungsdiagramm hat, das wenigstens den d-Abstand enthält, der den fünf Hauptpeaks entspricht, die in Tabelle VII angegeben sind.
**Tabelle VII**
| Nr. | 2θ | d(Å) | relative Intensität |
|---|---|---|---|
| 1 | ∼7,75 | ∼11,60 | VS |
| 2 | ∼13,25 | ∼6,60 | S-VS |
| 3 | ∼15,38 | ∼5,65 | W-M |
| 4 | ∼19,48 | ∼3,46 | M |
| 5 | ∼20,42 | ∼4,26 | VS |

9. Molekularsiebe gemäß Anspruch 1, wobei das Vanadiumenthaltende Silicoaluminophosphat (VAPSO-17) ein charakteristisches Pulver-Röntgenbeugungsdiagramm hat, das wenigstens den d-Abstand enthält, der den fünf Hauptpeaks entspricht, die in Tabelle VIII angegeben sind.
**Tabelle VIII**
| Nr. | 2θ | d(Å) | relative Intensität |
|---|---|---|---|
| 1 | ∼7,57 | ∼11,66 | VS |
| 2 | ∼13,22 | ∼6,70 | S-VS |
| 3 | ∼15,30 | ∼5,79 | W-M |
| 4 | ∼20,32 | ∼4,37 | S-VS |
| 5 | ∼21,21 | ∼4,19 | M |

10. Molekularsiebe gemäß Anspruch 1, wobei das Zirkoniumenthaltende Silicoaluminophosphat (ZrAPSO-18) ein charakteristisches Pulver-Röntgenbeugungsdiagramm hat, das wenigstens den d-Abstand enthält, der den fünf Hauptpeaks entspricht, die in Tabelle X angegeben sind.
**Tabelle X**
| Nr. | 2θ | d(Å) | relative Intensität |
|---|---|---|---|
| 1 | ∼9,45 | ∼9,35 | VS |
| 2 | ∼10,54 | ∼8,39 | W |
| 3 | ∼16,91 | ∼5,24 | S |
| 4 | ∼20,02 | ∼4,43 | W |
| 5 | ∼20,51 | ∼4,33 | W-M |

11. Molekularsiebe gemäß Anspruch 1, wobei das Nickelenthaltende Silicoaluminophosphat (NiAPSO-18) ein charakteristisches Pulver-Röntgenbeugungsdiagramm hat, das wenigstens den d-Abstand enthält, der den fünf Hauptpeaks entspricht, die in Tabelle XV angegeben sind.
**Tabelle XV**
| Nr. | 2θ | d(Å) | relative Intensität |
|---|---|---|---|
| 1 | ∼9,45 | ∼9,35 | VS |
| 2 | ∼15,96 | ∼5,55 | W-M |
| 3 | ∼16,88 | ∼5,25 | W-M |
| 4 | ∼20,51 | ∼4,33 | W-M |
| 5 | ∼21,29 | ∼4,17 | W |

12. Molekularsiebe gemäß Anspruch 1, wobei das Eisenenthaltende Aluminophosphat (FeAPO-18) ein charakteristisches Pulver-Röntgenbeugungsdiagramm hat, das wenigstens den d-Abstand enthält, der den fünf Hauptpeaks entspricht, die in Tabelle XVI angegeben sind.
**Tabelle XVI**
| Nr. | 2θ | d(Å) | relative Intensität |
|---|---|---|---|
| 1 | ∼9,51 | ∼9,29 | VS |
| 2 | ∼15,56 | ∼5,69 | W |
| 3 | ∼16,95 | ∼5,23 | S |
| 4 | ∼20,82 | ∼4,26 | M |
| 5 | ∼21,78 | ∼4,08 | W |

13. Molekularsiebe gemäß Anspruch 1, wobei das Zinkenthaltende Silicoaluminophosphat (ZnAPSO-18) ein charakteristisches Pulver-Röntgenbeugungsdiagramm hat, das wenigstens den d-Abstand enthält, der den fünf Hauptpeaks entspricht, die in Tabelle XVII angegeben sind.
**Tabelle XVII**
| Nr. | 2θ | d(Å) | relative Intensität |
|---|---|---|---|
| 1 | ∼9,43 | ∼9,37 | VS |
| 2 | ∼15,92 | ∼5,56 | M |
| 3 | ∼16,88 | ∼5,25 | S |
| 4 | ∼20,46 | ∼4,34 | W |
| 5 | ∼21,24 | ∼4,18 | W |

14. Molekularsiebe gemäß Anspruch 1, wobei das Zirkoniumenthaltende Silicoaluminophosphat (ZrAPSO-34) ein charakteristisches Pulver-Röntgenbeugungsdiagramm hat, das wenigstens den d-Abstand enthält, der den fünf Hauptpeaks entspricht, die in Tabelle XVIII angegeben sind.
**Tabelle XVIII**
| Nr. | 2θ | d(Å) | relative Intensität |
|---|---|---|---|
| 1 | 9,40-9,66 | 9,40-9,15 | VS |
| 2 | 15,92-16,20 | 5,56-5,46 | W-M |
| 3 | 16,86-17,04 | 5,25-5,20 | W |
| 4 | 20,46-20,75 | 4,33-4,28 | M-S |
| 5 | 21,07-21,38 | 4,21-4,15 | W |

15. Molekularsiebe gemäß Anspruch 1, wobei das Zirkoniumenthaltende Aluminophosphat (ZrAPO-34) ein charakteristisches Pulver-Röntgenbeugungsdiagramm hat, das wenigstens den d-Abstand enthält, der den fünf Hauptpeaks entspricht, die in Tabelle XIX angegeben sind.
**Tabelle XIX**
| Nr. | 2θ | d(Å) | relative Intensität |
|---|---|---|---|
| 1 | ∼9,61 | ∼9,19 | VS |
| 2 | ∼16,91 | ∼5,24 | W-M |
| 3 | ∼17,84 | ∼4,97 | W |
| 4 | ∼20,18 | ∼4,40 | W |
| 5 | ∼21,10 | ∼4,21 | W |

16. Molekularsiebe gemäß Anspruch 1, wobei das Vanadiumenthaltende Silicoaluminophosphat (VAPSO-34) ein charakteristisches Pulver-Röntgenbeugungsdiagramm hat, das wenigstens den d-Abstand enthält, der den fünf Hauptpeaks entspricht, die in Tabelle XX angegeben sind.
**Tabelle XX**
| Nr. | 2θ | d(Å) | relative Intensität |
|---|---|---|---|
| 1 | ∼9,45 | ∼9,35 | V |
| 2 | ∼15/96 | ~5,55 | W |
| 3 | ~16,83 | ~5,26 | VW |
| 4 | ~20,51 | ~4,33 | M |
| 5 | ~21,47 | ∼4,13 | VS |

17. Molekularsiebe gemäß Anspruch 1, wobei das Kupferenthaltende Silicoaluminophosphat (CuAPSO-34) ein charakteristisches Pulver-Röntgenbeugungsdiagramm hat, das wenigstens den d-Abstand enthält, der den fünf Hauptpeaks entspricht, die in Tabelle XXI angegeben sind.
**Tabelle XXI**
| Nr. | 2θ | d(Å) | relative Intensität |
|---|---|---|---|
| 1 | ∼9,45 | ∼9,35 | VS |
| 2 | ∼15,97 | ∼5,54 | W |
| 3 | ∼17,90 | ∼4,95 | VW |
| 4 | ∼20,52 | ∼4,32 | M-S |
| 5 | ∼21,14 | ∼4,20 | VW |

18. Molekularsiebe gemäß Anspruch 1, wobei das Lanthanenthaltende Silicoaluminophosphat (LaAPSO-34) ein charakteristisches Pulver-Röntgenbeugungsdiagramm hat, das wenigstens den d-Abstand enthält, der den fünf Hauptpeaks entspricht, die in Tabelle XXII angegeben sind.
**Tabelle XXII**
| Nr. | 2θ | d(Å) | relative Intensität |
|---|---|---|---|
| 1 | ∼9,42 | ∼9,38 | VS |
| 2 | ∼15,93 | ∼5,56 | W |
| 3 | ∼16,94 | ∼5,23 | VW |
| 4 | ∼20,48 | ∼4,33 | M-S |
| 5 | ∼21,27 | ∼4,17 | VW |

19. Molekularsiebe gemäß Anspruch 1, wobei das Molybdänenthaltende Silicoaluminophosphat (MoAPSO-34) ein charakteristisches Pulver-Röntgenbeugungsdiagramm hat, das wenigstens den d-Abstand enthält, der den fünf Hauptpeaks entspricht, die in Tabelle XXIII angegeben sind.
**Tabelle XXIII**
| Nr. | 2θ | d(Å) | relative Intensität |
|---|---|---|---|
| 1 | ∼9,41 | ∼9,39 | VS |
| 2 | ∼15,92 | ∼5,56 | M |
| 3 | ∼16,89 | ∼5,24 | VW |
| 4 | ∼20,48 | ∼4,33 | M-S |
| 5 | ∼21,25 | ∼4,18 | VW |

20. Molekularsiebe gemäß Anspruch 1, wobei das Zirkoniumenthaltende Silicoaluminophosphat (ZrAPSO-35) ein charakteristisches Pulver-Röntgenbeugungsdiagramm hat, das wenigstens den d-Abstand enthält, der den fünf Hauptpeaks entspricht, die in Tabelle XXIV angegeben sind.
**Tabelle XXIV**
| Nr. | 2θ | d(Å) | relative Intensität |
|---|---|---|---|
| 1 | ∼8,59 | ∼10,28 | W |
| 2 | ∼10,93 | ∼8,09 | M |
| 3 | ∼13,30 | ∼6,65 | M |
| 4 | ∼17,27 | ∼5,13 | S |
| 5 | ∼21,88 | ∼4,06 | VS |

21. Molekularsiebe gemäß Anspruch 1, wobei das Zirkoniumenthaltende Silicoaluminophosphat (ZrAPSO-44) ein charakteristisches Pulver-Röntgenbeugungsdiagramm hat, das wenigstens den d-Abstand enthält, der den fünf Hauptpeaks entspricht, die in Tabelle XXVI angegeben sind.
**Tabelle XXVI**
| Nr. | 2θ | d(Å) | relative Intensität |
|---|---|---|---|
| 1 | ∼9,40 | ∼9,40 | S-VS |
| 2 | ∼16,06 | ∼5,51 | M |
| 3 | ∼20,71 | ∼4,29 | S-VS |
| 4 | ∼24,32 | ∼3,66 | VS |
| 5 | ∼30,85 | ∼2,90 | M |

22. Molekularsiebe gemäß Anspruch 1, wobei das Kupferenthaltende Silicoaluminophosphat (CuAPSO-44) ein charakteristisches Pulver-Röntgenbeugungsdiagramm hat, das wenigstens den d-Abstand enthält, der den fünf Hauptpeaks entspricht, die in Tabelle XXVIII angegeben sind.
**Tabelle XXVIII**
| Nr. | 2θ | d(Å) | relative Intensität |
|---|---|---|---|
| 1 | ∼9,42 | ∼9,38 | S-VS |
| 2 | ∼16,08 | ∼5,51 | M-S |
| 3 | ∼20,74 | ∼4,28 | S-VS |
| 4 | ∼24,34 | ∼3,65 | VS |
| 5 | ∼30,87 | ∼2,89 | M |

23. Molekularsiebe gemäß Anspruch 1, wobei das Vanadiumenthaltende Silicoaluminophosphat (VAPSO-44) ein charakteristisches Pulver-Röntgenbeugungsdiagramm hat, das wenigstens den d-Abstand enthält, der den fünf Hauptpeaks entspricht, die in Tabelle XXIX angegeben sind.
**Tabelle XXIX**
| Nr. | 2θ | d(Å) | relative Intensität |
|---|---|---|---|
| 1 | ∼9,42 | ∼9,38 | S |
| 2 | ∼16,08 | ∼5,51 | M |
| 3 | ∼20,74 | ∼4,28 | VS |
| 4 | ∼24,35 | ∼3,65 | M-S |
| 5 | ∼30,86 | ∼2,89 | M |

24. Molekularsiebe gemäß Anspruch 1, wobei das Eisenenthaltende Silicoaluminophosphat (FAPSO-44) ein charakteristisches Pulver-Röntgenbeugungsdiagramm hat, das wenigstens den d-Abstand enthält, der den fünf Hauptpeaks entspricht, die in Tabelle XXXI angegeben sind.
**Tabelle XXXI**
| Nr. | 2θ | d(Å) | relative Intensität |
|---|---|---|---|
| 1 | ∼9,35 | ∼9,45 | S |
| 2 | ∼16,00 | ∼5,53 | M |
| 3 | ∼20,67 | ∼4,29 | S-VS |
| 4 | ∼24,26 | ∼3,66 | VS |
| 5 | ∼30,81 | ∼2,90 | M |

25. Molekularsiebe gemäß Anspruch 1, wobei das Lanthanenthaltende Silicoaluminophosphat (LaAPSO-44) ein charakteristisches Pulver-Röntgenbeugungsdiagramm hat, das wenigstens den d-Abstand enthält, der den fünf Hauptpeaks entspricht, die in Tabelle XXXII angegeben sind.
**Tabelle XXXII**
| Nr. | 2θ | d(Å) | relative Intensität |
|---|---|---|---|
| 1 | ∼9,40 | ∼9,40 | S |
| 2 | ∼16,07 | ∼5,51 | M |
| 3 | ∼20,73 | ∼4,28 | VS |
| 4 | ∼24,33 | ∼3,65 | S |
| 5 | ∼30,88 | ∼2,89 | M |

26. Molekularsiebe gemäß Anspruch 1, wobei das Zirkoniumenthaltende Silicoaluminophosphat (ZrAPSO-56) ein charakteristisches Pulver-Röntgenbeugungsdiagramm hat, das wenigstens den d-Abstand enthält, der den fünf Hauptpeaks entspricht, die in Tabelle XXXIII angegeben sind.
**Tabelle XXXIII**
| Nr. | 2θ | d(Å) | relative Intensität |
|---|---|---|---|
| 1 | ∼7,36 | ∼11,98 | W |
| 2 | ∼11,51 | ∼7,69 | M-S |
| 3 | ∼20,18 | ∼4,40 | S |
| 4 | ∼21,61 | ∼4,11 | VS |
| 5 | ∼27,75 | ∼3,21 | S |

27. Molekularsiebe gemäß Anspruch 1, wobei das Eisenenthaltende Silicoaluminophosphat (FAPSO-56) ein charakteristisches Pulver-Röntgenbeugungsdiagramm hat, das wenigstens den d-Abstand enthält, der den fünf Hauptpeaks entspricht, die in Tabelle XXXV angegeben sind.
**Tabelle XXXV**
| Nr. | 2θ | d(Å) | relative Intensität |
|---|---|---|---|
| 1 | ∼7,36 | ∼12,00 | VW |
| 2 | ∼11,48 | ∼7,70 | M-S |
| 3 | ∼17,70 | ∼5,00 | VS |
| 4 | ∼21,58 | ∼4,11 | S |
| 5 | ∼27,77 | ∼3,21 | VS |

28. Kristalline Metall-Silicoaluminophosphat-Molekularsiebe, hergestellt durch Kalzinieren des Primärpulvers gemäß einem der Ansprüche 1-27 bei einer Temperatur, die ausreichend hoch ist, um wenigstens einiges des Schablonenmittels, das in dem intrakristallinen Porensystem vorhanden ist, zu entfernen.

29. Kristalline Metall-Silicoaluminophosphat-Molekularsiebe gemäß Anspruch 28, die eine dreidimensionale mikroporöse Gerüststruktur aus SiO₂-, AlO₂⁻-, PO₂⁺- und MeO₂-Tetraedereinheiten haben, und deren essentielle empirische chemische Formelbasis wie folgt ist: mR·(M_{q}SiₓAl_{y}P_{z})O₂, worin "m" den Wert Null hat.

30. Kristalline Metall-Silicoaluminophosphat-Molekularsiebe gemäß Anspruch 28 oder Anspruch 29, die ein charakteristisches Pulver-Röntgenbeugungsdiagramm haben, das wenigstens den d-Abstand enthält, der in einer der Tabellen I bis XXXV in den Ansprüchen 2 bis 27 angegeben ist.

31. Verfahren zur Herstellung eines primären Mischungsgels von Metall-enthaltenden Silicoaluminophosphat-Kristallen gemäß Anspruch 1, umfassend einen Schritt des proportionalen Mischens einer Siliciumquelle, Aluminiumquelle, Phosphorquelle, Metallverbindung, eines Schablonenmittels und Wasser unter Rühren.

32. Verfahren gemäß Anspruch 31, wobei die Siliciumquelle eines oder mehr von Silicasol, Natriumsilicatsol, aktiviertem Siliciumdioxid und Orthokieselsäureester ist.

33. Verfahren gemäß Anspruch 31, wobei die Aluminiumquelle eines oder mehr von Aluminiumsalz, Aluminat, aktiviertem Aluminiumoxid, Aluminiumalkoxy, Diaspor und Pseudoboehmit ist.

34. Verfahren gemäß Anspruch 31, wobei die Phosphorquelle eines oder mehr von Orthophosphorsäure, Phosphat, organischem Phosphid und Phosphorpentoxid ist.

35. Verfahren gemäß Anspruch 31, wobei die Metallverbindung eine oder mehr von Metalloxid, Metalloxychlorid, Metallsalzen von anorganischen und organischen Säuren von Zr, V, Fe, Cu, Zn, Mo, Ca, Sr, Ba und La ist.

36. Verfahren gemäß Anspruch 31, wobei das Schablonenmittel eine Art oder mehrere Arten von Cyclohexylamin, Triethylamin, Diethylamin, n-Propylamin, Isopropylamin, n-Dipropylamin, Diisopropylamin, Tripropylamin, n-Butylamin, Isobutylamin, Hexamethylenaminlidyn, Hexandiamin, N,N-Diisopropylethylamin, N,N-Diisopropylpropylamin, N',N',N,N-Tetramethyl-(1,6)-hexandiamin, Ethanolamin, Diethanolamin, Triethanolamin, Tetramethylammoniumhydroxid, Tetraethylammoniumhydroxid, Tetrapropylammoniumhydroxid, Tetrabutylammoniumhydroxid oder dem entsprechenden Alkohol ist.

37. Verfahren gemäß Anspruch 31, wobei das Formelverhältnis der Ingredienzien des Mischungsgels in der Synthese des mikroporösen Metall-Silicoaluminophosphats wie folgt ist (das Molverhältnis von Oxiden):
MeOₙ/Al₂O₃ = 0,01∼1,0;
SiO₂/Al₂O₃ = 0∼10;
P₂O₅/Al₂O₃ = 0,01~15;
H₂O/Al₂O₃ = 10~100;
R/Al₂O₃ = 0,1∼10 ("R" ist ein Schablonenmittel oder ein Gemisch von Schablonenmitteln).

38. Verfahren gemäß einem der Ansprüche 31 bis 37, das eine Alterung unter Mikrowellenstrahlung für 0,1 bis 30 Minuten umfasst.

39. Verfahren gemäß einem der Ansprüche 31 bis 37, das eine Alterung unter einer ausreichend hohen Temperatur für 1 bis 24 Stunden umfasst.

40. Verfahren gemäß einem der Ansprüche 31 bis 39, wobei der Kristallisationsdruck bei autogenem Druck oder 0,1~0,5 MPa N₂, Luft oder Inertgas ist.

41. Verfahren gemäß einem der Ansprüche 31 bis 39, wobei die Kristallisationstemperatur auf 50∼250°C programmiert ist.

42. Verfahren gemäß einem der Ansprüche 31 bis 39, wobei die Kristallisationszeit 1-24 Stunden ist.

43. Metall-Silicoaluminophosphat-Molekularsiebe (MeAPSOs) gemäß Anspruch 30 zur Verwendung in Ionenaustauschern, Adsorbentien und Katalysatoren.

44. Metall-Silicoaluminophosphat-Molekularsiebe (MeAPSOs) gemäß Anspruch 30 zur Verwendung als Katalysator von Methanol zu C₂-C₄-Olefinen.

45. Metall-Silicoaluminophosphat-Molekularsiebe (MeAPSOs) gemäß Anspruch 30 zur Verwendung als Katalysator von Dimethylether oder einem Gemisch mit beliebigem Verhältnis von Methanol und Dimethylether zu C₂-C₄-Olefinen.

## Revendications

1. Classe de tamis moléculaires de silicoaluminophosphate contenant un métal microporeux dont la composition chimique telle que synthétisée sur une base anhydre est :
mR.(M_{q}SiₓAl_{y}P_{z})O₂
où
« R » représente l'agent structurant présenté dans le système de pore intracristallin ;
« m » est la quantité molaire de « R » par mole de (M_{q}SiₓAlyP_{z})O₂ et a une valeur de 0,01 à 8,00 ;
« M » représente au moins un élément métallique choisi dans le groupe constitué de Zr, V, Fe, Cu, Zn, Mo, Ca, Sr, Ba et La ;
« *q »*, *« x », « y » et « z* » représentent les fractions molaires de métal, de silicium, d'aluminium et de phosphore, respectivement dont les variations sont q = 0∼0,98, x = 0,01∼0,98, y = 0,01∼0,60, z = 0,01∼0,60 et q+x+y+z = 1,
dans laquelle les tamis moléculaires de silicoaluminophosphates contenant un métal sont choisis dans le groupe constitué de MeAPSO-17, MeAPSO-34, MeAPSO-35, MeAPSO-44, MeAPSO-56, et dans laquelle les atomes de métal existent au moins en partie dans le cadre du tamis moléculaire sous la forme de tétraèdre de MeO2.

2. Tamis moléculaires selon la revendication 1, dans lesquels le silicoaluminophosphate contenant du métal (MeAPSO-17) a une caractéristique de diffraction de rayons X pulvérulente contenant au moins l'espacement d qui correspond aux cinq pics principaux indiqués dans le tableau I
**Tableau 1**
| N° | 2θ | d(Å) | Intensité relative |
|---|---|---|---|
| 1 | 7,56-7,75 | 11,68-11,60 | vs |
| 2 | 13,18-13,25 | 6,69-6,60 | s-vs |
| 3 | 15,26-15,38 | 5,77-5,65 | w-m |
| 4 | 19,44-19,48 | 4,58-4,46 | w-m |
| 5 | 20,32-20,42 | 4,37-4,25 | vs |

3. Tamis moléculaires selon la revendication 1, dans lesquels le silicoaluminophosphate contenant du métal (MeAPSO-18) a une caractéristique de diffraction de rayons X pulvérulente contenant au moins l'espacement d qui correspond aux cinq pics principaux indiqués dans le tableau II
**Tableau II**
| N° | 2θ | d(Å) | Intensité relative |
|---|---|---|---|
| 1 | 9,43-9,51 | 9,37-9,29 | vs |
| 2 | 10,50-10,86 | 8,42-8,14 | w |
| 3 | 16,88-16,95 | 5,25-5,22 | m-s |
| 4 | 19,56-20,06 | 4,53-4,43 | w |
| 5 | 20,46-20,82 | 4,34-4,26 | m |

4. Tamis moléculaires selon la revendication 1, dans lesquels le silicoaluminophosphate contenant du métal (MeAPSO-34) a une caractéristique de diffraction de rayons X pulvérulente contenant au moins l'espacement d qui correspond aux cinq pics principaux indiqués dans le tableau III
**Tableau III**
| N° | 2θ | d(Å) | Intensité relative |
|---|---|---|---|
| 1 | 9,41-9,46 | 9,39-9,34 | vs |
| 2 | 15,93-15,97 | 5,56-5,54 | w-m |
| 3 | 17,80-17,93 | 4,98-4,94 | w |
| 4 | 20,48-20,53 | 4,33-4,32 | m-s |
| 5 | 25,02-25,16 | 3,55-3,53 | w |

5. Tamis moléculaires selon la revendication 1, dans lesquels le silicoaluminophosphate contenant du métal (MeAPSO-35) a une caractéristique de diffraction de rayons X pulvérulente contenant au moins l'espacement d qui correspond aux cinq pics principaux indiqués dans le tableau IV
**Tableau IV**
| N° | 2θ | d(Å) | Intensité relative |
|---|---|---|---|
| 1 | 8,52-8,59 | 10,37-10,28 | vs |
| 2 | 10,84-10,93 | 8,15-8,09 | s-vs |
| 3 | 13,22-13,30 | 6,69-6,65 | w-m |
| 4 | 17,17-17,27 | 5,16-5,13 | w-m |
| 5 | 21,78-21,88 | 4,08-4,05 | vs |

6. Tamis moléculaires selon la revendication 1, dans lesquels le silicoaluminophosphate contenant du métal (MeAPSO-44) a une caractéristique de diffraction de rayons X pulvérulente contenant au moins l'espacement d qui correspond aux cinq pics principaux indiqués dans le tableau V
**Tableau V**
| N° | 2θ | d(Å) | Intensité relative |
|---|---|---|---|
| 1 | 9,37-8,42 | 9,43-9,38 | s |
| 2 | 16,03-16,08 | 5,52-5,50 | m |
| 3 | 20,69-20,74 | 4,29-4,28 | vs |
| 4 | 24,29-24,35 | 3,66-3,65 | vs |
| 5 | 30,83-30,86 | 2,90-2,89 | s-vs |

7. Tamis moléculaires selon la revendication 1, dans lesquels le silicoaluminophosphate contenant du métal (MeAPSO-56) a une caractéristique de diffraction de rayons X pulvérulente contenant au moins l'espacement d qui correspond aux cinq pics principaux indiqués dans le tableau VI
**Tableau VI**
| N° | 2θ | d(Å) | Intensité relative |
|---|---|---|---|
| 1 | 7,34-7,38 | 12,03-11,97 | w |
| 2 | 11,48-11,52 | 7,70-7,67 | m-s |
| 3 | 17,68-17,71 | 5,01-5,00 | m-s |
| 4 | 20,14-20,17 | 4,41-4,40 | s-vs |
| 5 | 21,57-21,60 | 4,12-4,11 | vs |

8. Tamis moléculaires selon la revendication 1, dans lesquels le silicoaluminophosphate contenant du zirconium (ZrAPSO-17) a une caractéristique de diffraction de rayons X pulvérulente contenant au moins l'espacement d qui correspond aux cinq pics principaux indiqués dans le tableau VII
**Tableau VII**
| N° | 2θ | d(Å) | Intensité relative |
|---|---|---|---|
| 1 | ∼7,75 | ∼11,60 | vs |
| 2 | ∼13,25 | ∼6,60 | s-vs |
| 3 | ∼15,38 | ∼5,65 | w-m |
| 4 | ∼19,48 | ∼3,46 | m |
| 5 | ∼20,42 | ∼4,26 | vs |

9. Tamis moléculaires selon la revendication 1, dans lesquels le silicoaluminophosphate contenant du vanadium (VAPSO-17) a une caractéristique de diffraction de rayons X pulvérulente contenant au moins l'espacement d qui correspond aux cinq pics principaux indiqués dans le tableau VIII
**Tableau VIII**
| N° | 2θ | d(Å) | Intensité relative |
|---|---|---|---|
| 1 | ∼7,57 | ∼11,66 | vs |
| 2 | ∼13,22 | ∼6,70 | s-vs |
| 3 | ∼15,30 | ∼5,79 | w-m |
| 4 | ∼20,32 | ∼4,37 | s-vs |
| 5 | ∼21,21 | ∼4,19 | m |

10. Tamis moléculaires selon la revendication 1, dans lesquels le silicoaluminophosphate contenant du zirconium (ZrAPSO-18) a une caractéristique de diffraction de rayons X pulvérulente contenant au moins l'espacement d qui correspond aux cinq pics principaux indiqués dans le tableau X
**Tableau X**
| N° | 2θ | d(Å) | Intensité relative |
|---|---|---|---|
| 1 | ∼9,45 | ∼9,35 | vs |
| 2 | ∼10,54 | ∼8,39 | w |
| 3 | ∼16,91 | ∼5,24 | s |
| 4 | ∼20,02 | ∼4,43 | w |
| 5 | ∼20,51 | ∼4,33 | w-m |

11. Tamis moléculaires selon la revendication 1, dans lesquels le silicoaluminophosphate contenant du nickel (NiAPSO-18) a une caractéristique de diffraction de rayons X pulvérulente contenant au moins l'espacement d qui correspond aux cinq pics principaux indiqués dans le tableau XV
**Tableau XV**
| N° | 2θ | d(Å) | Intensité relative |
|---|---|---|---|
| 1 | ∼9,45 | ∼9,35 | vs |
| 2 | ∼15,96 | ∼5,55 | w-m |
| 3 | ∼16,88 | ∼5,25 | w-m |
| 4 | ∼20,51 | ∼4,33 | w-m |
| 5 | ∼21,29 | ∼4,17 | w |

12. Tamis moléculaires selon la revendication 1, dans lesquels l'aluminophosphate contenant du fer (FeAPO-18) a une caractéristique de diffraction de rayons X pulvérulente contenant au moins l'espacement d qui correspond aux cinq pics principaux indiqués dans le tableau XVI
**Tableau XVI**
| N° | 2θ | d(Å) | Intensité relative |
|---|---|---|---|
| 1 | ∼9,51 | ∼9,29 | vs |
| 2 | ∼15,56 | ∼5,69 | w |
| 3 | ∼16,95 | ∼5,23 | s |
| 4 | ∼20,82 | ∼4,26 | m |
| 5 | ∼21,78 | ∼4,08 | w |

13. Tamis moléculaires selon la revendication 1, dans lesquels le silicoaluminophosphate contenant du zinc (ZnAPSO-18) a une caractéristique de diffraction de rayons X pulvérulente contenant au moins l'espacement d qui correspond aux cinq pics principaux indiqués dans le tableau XVII
**Tableau XVII**
| N° | 2θ | d(Å) | Intensité relative |
|---|---|---|---|
| 1 | ∼9,43 | ∼9,37 | vs |
| 2 | ∼15,92 | ∼5,56 | m |
| 3 | ∼16,88 | ∼5,25 | s |
| 4 | ∼20,46 | ∼4,34 | w |
| 5 | ∼21,24 | ∼4,18 | w |

14. Tamis moléculaires selon la revendication 1, dans lesquels le silicoaluminophosphate contenant du zirconium (ZrAPSO-34) a une caractéristique de diffraction de rayons X pulvérulente contenant au moins l'espacement d qui correspond aux cinq pics principaux indiqués dans le tableau XVIII
**Tableau XVIII**
| N° | 2θ | d(Å) | Intensité relative |
|---|---|---|---|
| 1 | 9,40-9,66 | 9,40-9,15 | vs |
| 2 | 15,92-16,20 | 5,56-5,46 | w-m |
| 3 | 16,86-17,04 | 5,25-5,20 | w |
| 4 | 20,46-20,75 | 4,33-4,28 | m-s |
| 5 | 21,07-21,38 | 4,21-4,15 | w |

15. Tamis moléculaires selon la revendication 1, dans lesquels l'aluminophosphate contenant du zirconium (ZrAPO-34) a une caractéristique de diffraction de rayons X pulvérulente contenant au moins l'espacement d qui correspond aux cinq pics principaux indiqués dans le tableau XIX
**Tableau XIX**
| N° | 2θ | d(Å) | Intensité relative |
|---|---|---|---|
| 1 | ∼9,61 | ∼9,19 | vs |
| 2 | ∼16,91 | ∼5,24 | w-m |
| 3 | ∼17,84 | ∼4,97 | w |
| 4 | ∼20,18 | ∼4,40 | w |
| 5 | ∼21,10 | ∼4,21 | w |

16. Tamis moléculaires selon la revendication 1, dans lesquels le silicoaluminophosphate contenant du vanadium (VAPSO-34) a une caractéristique de diffraction de rayons X pulvérulente contenant au moins l'espacement d qui correspond aux cinq pics principaux indiqués dans le tableau XX
**Tableau XX**
| N° | 2θ | d(Å) | Intensité relative |
|---|---|---|---|
| 1 | ∼9,45 | ∼9,35 | v |
| 2 | ∼15,96 | ∼5,55 | w |
| 3 | ∼16,83 | ∼5,26 | vw |
| 4 | ∼20,51 | ∼4,33 | m |
| 5 | ∼21,47 | ∼4,13 | vs |

17. Tamis moléculaires selon la revendication 1, dans lesquels le silicoaluminophosphate contenant du cuivre (CuAPSO-34) a une caractéristique de diffraction de rayons X pulvérulente contenant au moins l'espacement d qui correspond aux cinq pics principaux indiqués dans le tableau XXI
**Tableau XXI**
| N° | 2θ | d(Å) | Intensité relative |
|---|---|---|---|
| 1 | ∼9,45 | ∼9,35 | vs |
| 2 | ∼15,97 | ∼5,54 | w |
| 3 | ∼17,90 | ∼4,95 | vw |
| 4 | ∼20,52 | ∼4,32 | m-s |
| 5 | ∼21,14 | ∼4,20 | vw |

18. Tamis moléculaires selon la revendication 1, dans lesquels le silicoaluminophosphate contenant du lanthane (LaAPSO-34) a une caractéristique de diffraction de rayons X pulvérulente contenant au moins l'espacement d qui correspond aux cinq pics principaux indiqués dans le tableau XXII
**Tableau XXII**
| N° | 2θ | d(Å) | Intensité relative |
|---|---|---|---|
| 1 | ~9,42 | ∼9,38 | vs |
| 2 | ~15,93 | ~5,56 | w |
| 3 | ∼16,94 | ∼5,23 | vw |
| 4 | ∼20,48 | ∼4,33 | m-s |
| 5 | ∼21,27 | ∼4,17 | vw |

19. Tamis moléculaires selon la revendication 1, dans lesquels le silicoaluminophosphate contenant du molybdène (MoAPSO-34) a une caractéristique de diffraction de rayons X pulvérulente contenant au moins l'espacement d qui correspond aux cinq pics principaux indiqués dans le tableau XXIII
**Tableau XXIII**
| N° | 2θ | d(Å) | Intensité relative |
|---|---|---|---|
| 1 | ∼9,41 | ∼9,39 | vs |
| 2 | ∼15,92 | ∼5,56 | m |
| 3 | ∼16,89 | ∼5,24 | vw |
| 4 | ∼20,48 | ∼4,33 | m-s |
| 5 | ∼21,25 | ∼4,18 | vw |

20. Tamis moléculaires selon la revendication 1, dans lesquels le silicoaluminophosphate contenant du zirconium (ZrAPSO-35) a une caractéristique de diffraction de rayons X pulvérulente contenant au moins l'espacement d qui correspond aux cinq pics principaux indiqués dans le tableau XXIV
**Tableau XXIV**
| N° | 2θ | d(Å) | Intensité relative |
|---|---|---|---|
| 1 | ∼8,59 | ∼10,28 | w |
| 2 | ∼10,93 | ∼8,09 | m |
| 3 | ∼13,30 | ∼6,65 | m |
| 4 | ∼17,27 | ∼5,13 | s |
| 5 | ∼21,88 | ∼4,06 | vs |

21. Tamis moléculaires selon la revendication 1, dans lesquels le silicoaluminophosphate contenant du zirconium (ZrAPSO-44) a une caractéristique de diffraction de rayons X pulvérulente contenant au moins l'espacement d qui correspond aux cinq pics principaux indiqués dans le tableau XXVI
**Tableau XXVI**
| N° | 2θ | d(Å) | Intensité relative |
|---|---|---|---|
| 1 | ∼9,40 | ∼9,40 | s-vs |
| 2 | ∼16,06 | ∼5,51 | m |
| 3 | ∼20,71 | ∼4,29 | s-vs |
| 4 | ∼24,32 | ∼3,66 | vs |
| 5 | ∼30,85 | ∼2,90 | m |

22. Tamis moléculaires selon la revendication 1, dans lesquels le silicoaluminophosphate contenant du cuivre (CuAPSO-44) a une caractéristique de diffraction de rayons X pulvérulente contenant au moins l'espacement d qui correspond aux cinq pics principaux indiqués dans le tableau XXVIII
**Tableau XXVIII**
| N° | 2θ | d(Å) | Intensité relative |
|---|---|---|---|
| 1 | ∼9,42 | ∼9,38 | s-vs |
| 2 | ∼16,08 | ∼5,51 | m-s |
| 3 | ∼20,74 | ∼4,28 | s-vs |
| 4 | ∼24,34 | ∼3,65 | vs |
| 5 | ∼30,87 | ∼2,89 | m |

23. Tamis moléculaires selon la revendication 1, dans lesquels le silicoaluminophosphate contenant du vanadium (VAPSO-44) a une caractéristique de diffraction de rayons X pulvérulente contenant au moins l'espacement d qui correspond aux cinq pics principaux indiqués dans le tableau XXIX
**Tableau XXIX**
| N° | 2θ | d(Å) | Intensité relative |
|---|---|---|---|
| 1 | ∼9,42 | ∼9,38 | s |
| 2 | ∼16,08 | ∼5,51 | m |
| 3 | ∼20,74 | ∼4,28 | vs |
| 4 | ∼24,35 | ∼3,65 | m-s |
| 5 | ∼30,86 | ∼2,89 | m |

24. Tamis moléculaires selon la revendication 1, dans lesquels le silicoaluminophosphate contenant du fer (FAPSO-44) a une caractéristique de diffraction de rayons X pulvérulente contenant au moins l'espacement d qui correspond aux cinq pics principaux indiqués dans le tableau XXXI
**Tableau XXXI**
| N° | 2θ | d(Å) | Intensité relative |
|---|---|---|---|
| 1 | ∼9,35 | ∼9,45 | s |
| 2 | ∼16,00 | ∼5,53 | m |
| 3 | ∼20,67 | ∼4,29 | s-vs |
| 4 | ∼24,26 | ∼3,66 | vs |
| 5 | ∼30,81 | ∼2,90 | m |

25. Tamis moléculaires selon la revendication 1, dans lesquels le silicoaluminophosphate contenant du lanthane (LaAPSO-44) a une caractéristique de diffraction de rayons X pulvérulente contenant au moins l'espacement d qui correspond aux cinq pics principaux indiqués dans le tableau XXXII
**Tableau XXXII**
| N° | 2θ | d(Å) | Intensité relative |
|---|---|---|---|
| 1 | ∼9,40 | ∼9,40 | s |
| 2 | ∼16,07 | ∼5,51 | m |
| 3 | ∼20,73 | ∼4,28 | vs |
| 4 | ∼24,33 | ∼3,65 | s |
| 5 | ∼30,88 | ∼2,89 | m |

26. Tamis moléculaires selon la revendication 1, dans lesquels Le silicoaluminophosphate contenant du zirconium (ZrAPSO-56) a une caractéristique de diffraction de rayons X pulvérulente contenant au moins l'espacement d qui correspond aux cinq pics principaux indiqués dans le tableau XXXIII
**Tableau XXXIII**
| N° | 2θ | d(Å) | Intensité relative |
|---|---|---|---|
| 1 | ∼7,36 | ∼11,98 | w |
| 2 | ∼11,51 | ∼7,69 | m-s |
| 3 | ∼20,18 | ∼4,40 | s |
| 4 | ∼21,61 | ∼4,11 | vs |
| 5 | ∼27,75 | ∼3,21 | s |

27. Tamis moléculaires selon la revendication 1, dans lesquels le silicoaluminophosphate contenant du fer (FAPSO-56) a une caractéristique de diffraction de rayons X pulvérulente contenant au moins l'espacement d qui correspond aux cinq pics principaux indiqués dans le tableau XXXV
**Tableau XXXV**
| N° | 2θ | d(Å) | Intensité relative |
|---|---|---|---|
| 1 | ∼7,36 | ∼12,00 | vw |
| 2 | ∼11,48 | ∼7,70 | m-s |
| 3 | ∼17,70 | ∼5,00 | vs |
| 4 | ∼21,58 | ∼4,11 | s |
| 5 | ∼27,77 | ∼3,21 | vs |

28. Tamis moléculaires de silicoaluminophosphate métallique cristallins préparés en calcinant la poudre primaire, selon l'une quelconque des revendications 1-27, à une température suffisamment élevée pour éliminer au moins une partie de l'agent structurant présent dans le système de pore intracristallin.

29. Tamis moléculaires de silicoaluminophosphate métallique cristallins ayant une structure de cadre microporeux en trois dimensions d'unités tétraédriques de SiO₂, AlO₂⁻, PO₂⁺ et MeO₂ et dont la base de la formule chimique empirique est la suivante : mR.(M_{q}SiₓAl_{y}P_{z})O₂ où « m » a une valeur de zéro.

30. Tamis moléculaires de silicoaluminophosphate métallique cristallins selon la revendication 28 ou la revendication 29, ayant une caractéristique de diffraction de rayons X pulvérulente contenant au moins l'espacement d indiqué dans l'un quelconque des tableaux I à XXXV dans les revendications 2 à 27.

31. Procédé de préparation d'un gel de mélange primaire de silicoaluminophosphate contenant un métal cristallin selon la revendication 1, comprenant une étape consistant à mélanger proportionnellement une source de silicium, une source d'aluminium, une source de phosphore, un composé métallique, un agent structurant et de l'eau sous agitation.

32. Procédé selon la revendication 31, dans lequel la source de silicium est constituée d'un ou plusieurs éléments parmi la sol de silice, la sol de silicate de sodium, la silice activée et l'ester d'orthosilicate.

33. Procédé selon la revendication 31, dans lequel la source d'aluminium est constituée d'un ou plusieurs éléments choisis parmi le sel d'aluminium, l'aluminate, l'alumine activée, l'alcoxy d'aluminium, le diaspore et la pseudo-boehmite.

34. Procédé selon la revendication 31, dans lequel la source de phosphore est constituée d'un ou plusieurs éléments parmi l'acide orthophosphorique, le phosphate, le phosphure organique et l'oxyde phosphorique.

35. Procédé selon la revendication 31, dans lequel le composé métallique est constitué d'un ou plusieurs éléments parmi l'oxyde métallique, l'oxychlorure métallique, les sels métalliques d'acide inorganique et organique de Zr, V, Fe, Cu, Zn, Mo, Ca, Sr, Ba et La.

36. Procédé selon la revendication 31, dans lequel l'agent structurant est un ou plusieurs types de cyclohexylamine, triéthylamine, diéthylamine, n-propylamine, isopropylamine, n-dipropylamine, diisopropylamine, tripropylamine, n-butylamine, isobutylamine, hexaméthylènaminelidyne, hexanediamine, N,N-diisopropyl éthylamine, N,N-diisopropyl propylamine, N',N',N,N-tétraméthyl-(1,6)-hexanediamine, éthanolamine, diéthanolamine, triéthanolamine, hydroxyde de tétraméthylammonium, hydroxyde de tétraéthylammonium, hydroxyde de tétrapropylammonium, hydroxyde de tétrabutylammonium, ou l'alcool correspondant.

37. Procédé selon la revendication 31, dans lequel le rapport des ingrédients de la formule du gel de mélange dans la synthèse du silicoaluminophosphate de gel microporeux est parmi les suivants (le rapport moléculaire d'oxydes) :
MeOn/Al₂O₃ = 0,01 ~1,0 ;
SiO₂/Al₂O₃ = 0∼10
P₂O₅/Al₂O₃ = 0,01∼15
H₂O/Al₂O₃ = 10∼100
R/Al₂O₃ = 0,1 ∼10 ("*R*" est un des agents structurants ou un mélange de ceux-ci).

38. Procédé selon l'une quelconque des revendications 31 à 37, comprenant le vieillissement sous rayonnement de micro-ondes pendant 0,1 à 30 minutes.

39. Procédé selon l'une quelconque des revendications 31 à 37, comprenant le vieillissement sous une température suffisamment élevée pendant 1 à 24 heures.

40. Procédé selon l'une quelconque des revendications 31 à 39 dans lequel la pression de cristallisation est à une pression autogène ou 0,1-0,5 MPa de N₂, d'air ou de gaz inerte.

41. Procédé selon l'une quelconque des revendications 31 à 39, dans lequel la température de cristallisation est programmée à 50-250°C.

42. Procédé selon l'une quelconque des revendications 31 à 39, dans lequel le temps de cristallisation est de 1-24 heures.

43. Tamis moléculaires de silicoaluminophosphate métallique (MeAPSOs) selon la revendication 30, à utiliser dans des échangeurs d'ions, des adsorbants et catalyseurs.

44. Tamis moléculaires de silicoaluminophosphate métallique (MeAPSOs) selon la revendication 30 à utiliser comme catalyseur de méthanol aux oléfines en C₂-C₄.

45. Tamis moléculaires de silicoaluminophosphate métallique (MeAPSOs) selon la revendication 30 à utiliser comme catalyseur de diméthyléther ou comme mélange de n'importe quel rapport de méthanol et de diméthyl-ester aux oléfines en C₂-C₄.
